(19) Europäisches Patentamt
European Patent Office
Office européen des brevets

(11) Numéro de publication : **0 292 381 B1**

(12) # FASCICULE DE BREVET EUROPEEN

(45) Date de publication du fascicule du brevet : **09.11.94 Bulletin 94/45**

(51) Int. Cl.$^5$ : **G06F 15/74,** G09B 23/00

(21) Numéro de dépôt : **88401200.6**

(22) Date de dépôt : **18.05.88**

(54) **Procédé d'élaboration d'un modèle statistique pour déterminer la charge de travail d'un pilote d'aéronef, modèle en résultant, dispositif pour la mise en oeuvre de ce procédé et applications du modèle.**

(30) Priorité : **20.05.87 FR 8707048**

(43) Date de publication de la demande : **23.11.88 Bulletin 88/47**

(45) Mention de la délivrance du brevet : **09.11.94 Bulletin 94/45**

(84) Etats contractants désignés : **AT BE CH DE ES GB GR IT LI LU NL SE**

(56) Documents cités : **PROCEEDINGS, IEEE/AIAA, 7th Digital Avionics Systems Conference, 13-16 octobre 1986, Fort Worth, Texas, US, pages 315-323; L.A. HAWORTH et al.: "Advanced cockpit and control configurations for single pilot helicopter-nap-of-the-earth flight"**

(73) Titulaire : **AIRBUS INDUSTRIE
1 Rond-Point Maurice Bellonte
F-31707 Blagnac (FR)**

(72) Inventeur : **Blomberg, Richard D.
27 Fawn Drive
Stamford Connecticut 06905 (US)**
Inventeur : **Fouillot, Jean-Pierre
8 rue Allard
F-94160 St-Mandé (FR)**
Inventeur : **Speyer, Jean-Jacques 11 rue Ste Odile
Parc de Gounon
Résidence Les Buis
F-31300 Toulouse (FR)**

(74) Mandataire : **Derambure, Christian et al
Cabinet Bouju Derambure (Bugnion) S.A.,
52, rue de Monceau
F-75008 Paris (FR)**

EP 0 292 381 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé d'élaboration d'un modèle statistique pour prédéterminer la charge de travail d'un pilote d'aéronef, notamment d'un avion de type commercial, au moyen des paramètres objectifs de vol.

L'invention vise aussi, à titre de produit industriel, le modèle statistique élaboré par le procédé considéré.

L'invention vise également diverses applications de ce modèle, notamment à la certification de la composition de l'équipage d'aéronefs, au développement de nouveaux aéronefs et à la formation, au perfectionnement, au contrôle des performances et au suivi du degré d'adaptation à un nouvel aéronef de pilotes d'aéronefs. L'invention concerne encore un dispositif pour la mise en oeuvre du procédé susvisé.

La charge de travail imposée aux pilotes des avions commerciaux est une source de préoccupation majeure pour les constructeurs d'avions et les compagnies aériennes pour au moins deux raisons : il est généralement reconnu que des niveaux élevés de charge de travail entraînent une augmentation de la probabilité d'erreur du pilote et une diminution de sa capacité à faire face aux situations d'urgence. D'autre part, la possibilité de démontrer que les charges de travail d'un équipage ne dépassent pas un niveau acceptable est une partie essentielle du processus pour obtenir une certification de type par les autorités compétentes.

L'accord n'est pas unanime en ce qui concerne la définition du terme "charge de travail". Même si la plupart des chercheurs font une différence entre la charge de travail "subjective" et la charge de travail "effective", les écrits traitant de ce sujet contiennent encore de nombreuses références vagues à la "charge de travail" pour lesquelles il n'est pas parfaitement clair de déterminer s'il s'agit de la charge mentale subjective ou de la charge de travail effectif.

De multiples recherches sur la charge de travail se sont concentrées sur les pilotes et l'environnement relativement complexe qui existe dans un poste de pilotage et au cours de vois dans des zones de trafic aérien de densité variable élevée à faible. Cependant, on a fourni peu de données sur des pilotes commerciaux en vol réel. L'étude approfondie de l'Armée de l'Air américaine dans l'Air Force Aerospace Medical Research Laboratory (AFAMRL) s'est limitée aux avions et systèmes militaires (Shingledecker 1983). Lorsque des pilotes civils ont été utilisés, les expériences ont eu lieu sur simulateurs ou installations de laboratoire analogues.

La recherche sur la charge de travail s'est intéressée particulièrement à deux principaux domaines. Le premier implique l'élaboration d'une théorie de charge de travail ou d'un modèle qui caractériserait avec précision le fonctionnement du système humain de traitement de l'information et décrirait la nature des capacités de ce système qui limite les performances (Shingledecker, 1983). Aucun modèle réalisé n'a encore fait l'unanimité. Certains chercheurs mettent l'accent sur l'environnement extérieur comme source essentielle de charge de travail. D'autres donnent comme cause déterminante majeure de la charge de travail l'aptitude du pilote et tentent de fixer la réserve de capacité comme une mesure de charge de travail. D'autres encore se fondent sur la nature subjective de la charge de travail, suivant la théorie selon laquelle les pilotes doivent "se sentir" stressés pour l'être. Enfin, un groupe de chercheurs a envisagé le concept de charge de travail comme une construction de l'esprit déterminée par des facteurs multiples et n'ayant aucune existence propre. Dans cette optique, les impératifs de tâche, les opérations mentales et les impressions subjectives se combinent toutes avec une multitude de variables d'état comme la formation, le niveau de fatigue, la motivation et la condition physique pour produire dans l'individu une capacité réelle à réaliser des performances (O'Donnel and Enggemeier, 1983).

Le second domaine majeur dans lequelle s'est effectuée la recherche concerne la mesure de la charge de travail, de quelque manière qu'elle soit définie, et la mise au point de techniques de mesures de comportement physiologiques et subjectives. Un grand nombre d'études a été consacré à la mise au point de trois types de mesures de charge de travail. Cependant aucune proposition significative n'a été faite en ce qui concerne une mesure de la charge de travail des pilotes de transport aérien commercial au cours de vols "typiques".

Les techniques connues d'étude du comportement pour mesurer la charge de travail consistent le plus souvent à donner au pilote une tâche secondaire à exécuter et à mesurer le niveau de rendement pour cette tâche si le scénario de vol se modifie. On suppose que le niveau de rendement en ce qui concerne la tâche secondaire se détériorera en fonction de la charge de travail impliquée par la tâche principale de vol. Baser les estimations de charge de travail sur le comportement même des pilotes présente plusieurs avantages théoriques. D'abord ces mesures sont parfaitement objectives et il est donc très peu probable qu'elles soient influencées par des facteurs extérieurs comme la motivation ou la fausse interprétation du pilote. Ensuite, il serait rationnel de les utiliser puisqu'elles sont issues de performances humaines.

En dépit de leurs possibilités, il a été constaté, dans le cadre de la présente invention, que les techniques d'étude du comportement entraînent plusieurs problèmes majeurs, en particulier si l'on envisage de les utiliser dans des conditions réelles de vol. D'abord, l'introduction d'une tâche secondaire nécessite souvent une instrumentation supplémentaire. Ensuite, elle peut gêner l'exécution de la tâche principale du pilote et diminuer ainsi la sécurité. En fait, une mesure valable de la charge de travail par l'étude du comportement doit empiéter sur la tâche principale. Enfin, un certain degré d'entraînement à la tâche d'étude du comportement doit exister pour que cette étude soit utilisée d'une manière faible. A cause de ces restrictions, la recherche sur des mesures de charge de travail par l'étude du comportement a été limitée essentiellement au laboratoire ou aux simulateurs.

Différentes mesures physiologiques ont été également proposées et essayées comme mesures de charge de travail. Elles vont de la mesure de la variabilité du rythme cardiaque (arythmie) jusqu'à des essais neurophysiologiques extrêmement complexes comme ceux étudiés par l'AFAMRL (O'Donnell, 1983). Ces mesures physiologiques requièrent toutes des équipements spéciaux qui ne pourraient pas, d'une façon pratique, être montés dans un poste de pilotage et utilisés pendant un vol réel. On a également examiné le rapport entre le rythme cardiaque et la charge de travail, et des mesures de variabilité de rythme cardiaque ont fait l'objet d'un travail considérable (Mulder and Mulder-Hajonides Van Der Meulen, 1973). On s'accorde généralement à reconnaître que la variabilité du rythme cardiaque, correctement mesurée, a de grandes possibilités, en tant qu'indice d'une certaine composante de la charge de travail d'un pilote. La présente invention a précisément mis à profit le fait que le rythme cardiaque pouvait se mesurer en vol avec facilité et discrétion à l'aide d'un matériel portatif relativement bon marché.

On a également étudié l'application des mesures subjectives de charge de travail des pilotes dans le cadre à la fois de la recherche et de la certification. Cooper et Harper (1969), à titre d'exemple, ont ainsi mis au point une échelle utilisable pour évaluer les qualités de vol d'un avion. Il est relativement facile d'appliquer des mesures subjectives sans pratiquement aucune incidence sur les opérations de vol. Ces mesures ont donc été utilisées en particulier au cours de processus de certification d'avions pour démontrer que la cotation des pilotes sur la charge de travail imposée par un nouvel avion reste dans des limites acceptables. Cependant même si les mesures subjectives sont faciles à appliquer, à enregistrer et à analyser, elles représentent encore une charge supplémentaire dans le processus de certification et sont sujettes à des déformations possibles. Si les valeurs subjectives données par les pilotes au cours des essais de certification pouvaient être prévues d'une façon précise en utilisant un modèle approprié, le besoin de recueil de cotation serait supprimé.

L'une des idées à la base de la présente invention est la suivante : comme les mesures subjectives réelles intègrent la plupart des facteurs déterminants d'environnement, psychologiques et physiologiques de la charge de travail, tout modèle d'évaluation subjective de charge de travail devrait bénéficier de l'introduction des paramètres physiologiques, de comportement et d'environnement.

Un but de la présente invention est de proposer un procédé d'élaboration d'un modèle que l'on puisse mettre en oeuvre pratiquement tant en vol réel que simulé pour déterminer de manière aussi précise que possible la charge de travail subjective des pilotes d'aéronef, à partir d'un nombre réduit de données représentatives d'un ou plusieurs vols réels d'aéronefs (notamment de l'avion AIRBUS A 310) et mesurables pendant ces vols sans incidence néfaste sur la charge de travail du pilote et sur les conditions de sécurité de vol.

L'invention vise également à fournir un dispositif permettant une saisie fiable et commode des diverses données servant à l'élaboration et à l'utilisation du modèle en question.

La présente invention comme exposée dans les revendications 1 et 12 vise ainsi un procédé et un dispositif pour élaborer un modèle statistique pour prédéterminer la charge de travail d'un pilote d'aéronef, notamment d'un avion de type commercial, en fonction de paramètres objectifs de vol, dans lequel au cours d'au moins un vol, réel ou simulé, de l'aéronef, on demande au pilote de l'aéronef, dans des phases et conditions du vol et dans des conditions de pilotage déterminées constituant les paramètres de vol, de donner une cotation de sa charge de travail au moyen d'une échelle préétablie, on consigne cette cotation en même temps que les paramètres de vol correspondants et on mesure simultanément la valeur de données significatives desdits paramètres de vol, puis on établit finalement une corrélation statistique entre les valeurs cotées de la charge de travail d'une part et les données précitées et les paramètres de vol d'autre part.

En établissant une corrélation statistique entre les valeurs cotées de charge de travail et des données indicatives de la phase de vol et des conditions de vol et de pilotage, la présente invention permet d'élaborer un modèle capable de fournir une estimation objective de la charge de travail d'un pilote d'aéronef à partir de données objectives de vols dont la mesure en vol n'influe pas sur les conditions de pilotage et sur la sécurité du vol. Un modèle pouvant être mis en oeuvre tant au cours de vols réguliers qu'au cours de vols simulés, sans exigences déraisonnables d'instrumentation et sans gêner le pilotage de l'aéronef et recouvrant une large gamme de scénarios de vols normaux ou de pannes, peut en particulier aider à simplifier le long et coûteux processus de vols d'essais spéciaux visant à démontrer qu'un nouvel aéronef peut être piloté avec un niveau de charge de travail acceptablement bas. De même, un modèle répondant aux exigences scientifiques de validité et de fiabilité et pratique à utiliser présentera un intérêt considérable s'il est appliqué au processus de développement d'un nouvel aéronef car il permettra de déterminer artificiellement les conséquences des choix conceptuels sur la charge de travail des pilotes.

Le procédé précité peut être caractérisé en ce qu'on relie la charge de travail prédéterminée aux paramètres de vol par une relation du type :

$$Yi = A1\,Xi1 + A2\,Xi2 + ... + Aj\,Xij + ... + An\,Xin + B1 + B2 + ... + Bk + ... + Bm + C$$

dans laquelle

- Yi est une variable représentative de la charge de travail prédéterminée;
- les Xij sont des variables représentatives de données significatives d'un premier ensemble de paramètres de vol,
- les constantes Aj, Bk et C sont des coefficients multiplicatifs ou additifs caractéristiques du modèle précité, la valeur des coefficients Bk étant indicative d'un second ensemble de paramètres de vol, et en ce qu'on calcule les coefficients Aj, Bk et C en appliquant sur la base de la relation précitée, les méthodes statistiques dites de régression linéaire multiple et d'analyse de la variance à partir de valeurs cotées par le pilote de sa charge de travail et des données précitées et des paramètres de vol mesurés ou relevés au cours des vols d'essai.

La validité de la relation statistique précitée entre les cotations de charge de travail faites par le pilote et les paramètres de vol objectifs a été vérifiée par la demanderesse. Celle-ci a comparé les valeurs prédéterminées de charge de travail calculées à partir de la formule précitée en utilisant des données recueillies lors de l'ensemble des vols d'essai réels regroupant des conditions de vol et de pilotage variées. Les valeurs calculées de charge de travail ont été comparées aux valeurs cotées par le pilote lors des vols précités et une excellente correspondance a pu être établie entre les valeurs cotées et les valeurs calculées.

Egalement, le modèle obtenu selon le procédé précité peut être caractérisé par la relation suivante :

$$Yi = A1\,Xi1 + A2\,Xi2 + ... + Aj\,Xij + ... + An\,Xin + B1 + B2 + ... + Bk + ...Bm + C$$

dans laquelle :

- Yi est une variable représentative de la charge de travail prédéterminée,
- les Xij sont des variables représentatives de données significatives d'un premier ensemble de paramètres de vol,
- les constantes Aj, Bk et C sont des coefficients multiplicatifs ou additifs caractéristiques du modèle, la valeur des coefficients Bk étant indicative d'un deuxième ensemble de paramètres de vol.

De préférence, la charge de travail prédéterminée PRi s'exprime suivant une échelle de cotation comportant six indices de 2 à 7, en fonction de la variable Yi par la relation :

$$PRi = 3 \times 10^{Yi} + 1,$$

les variables Xij sont indicatives de données de vol relatives à l'aéronef et au rythme et à la variabilité cardiaques des pilotes tandis que les paramètres dont dépend la valeur des coefficients Bk sont les conditions de vol et de pilotage de l'aéronef ainsi que la phase de vol à l'instant correspondant à la relevée des données précitées.

En élaborant un modèle mettant en oeuvre des données et/ou paramètres de vol aisément accessibles ou mesurables pendant des opérations de vol normales ou anormales, on obtient un outil de travail pratique à utiliser. Au moyen d'un équipement de calcul approprié, le modèle suivant l'invention pourra ainsi être utilisé pour fournir des cotations objectives de charge de travail instantanées en vol ou sur simulateur.

Suivant l'invention également, le dispositif pour la mise en oeuvre du procédé précité est caractérisé en ce qu'il comprend des moyens pour consigner les estimations de charge de travail des membres d'équipage, des moyens pour interroger sélectivement les membres d'équipage quant à leur charge de travail et consigner simultanément la phase de vol et la condition de vol correspondantes, l'ensemble des moyens précités étant relié à des moyens de traitement et d'enregistrement des données fournies par ledit ensemble de moyens en synchronisme avec une base de temps de référence et des moyens de consignation et/ou d'enregistrement des paramètres de vol en synchronisme avec ladite base de temps de référence.

De préférence, le dispositif précité comprend en outre des moyens de mesure et d'enregistrement de l'électrocardiogramme des membres d'équipage en synchronisme avec la base de temps précitée.

Un tel dispositif est ainsi particulièrement bien adapté à la mise en oeuvre du procédé précité.

Une application du modèle précité consiste dans le développement d'un nouvel aéronef dans laquelle on utilise la courbe Yi = f(Xij) pour simuler l'influence d'une nouvelle caractéristique de l'aéronef sur la charge de travail de ses pilotes, une application de ce modèle à la formation, au perfectionnement, au contrôle des performances et au suivi du degré d'adaptation à un nouvel aéronef d'un pilote d'aéronef, dans laquelle on évalue les performances dudit pilote en calculant sa charge de travail prédéterminée dans une situation de vol déterminée, et son application à la certification de la composition de l'équipage d'un nouvel aéronef, caractérisée en ce qu'au cours d'au moins un vol d'essai du nouvel aéronef, on mesure dans différentes conditions et phases de vol représentatives des règles de certification, les paramètres de vol dont sont indicatives les variables Xij, on calcule les valeurs correspondantes de la variable Yi à partir desquelles on déduit les valeurs correspondantes de charge de travail relativement à une échelle déterminée, ces valeurs de charge de travail étant ensuite comparées à celles d'un aéronef de référence précédemment certifié.

D'autres caractéristiques et avantages de l'invention ressortiront encore de la description qui va suivre.

Aux dessins annexés donnés à titre d'exemples non limitatifs :

- la figure 1 est un organigramme illustrant schématiquement le procédé conforme à l'invention,
- la figure 2 est un schéma synoptique du dispositif pour la mise en oeuvre du procédé selon l'invention,
- les figures 3A et 3B sont des vues de la face avant du boîtier "observateur" utilisé pour la cotation de la charge de travail,
- la figure 4 est une vue de la face avant du boîtier "membre d'équipage" utilisé pour la cotation de la charge de travail,
- la figure 5 est une vue schématique partielle de la cabine de pilotage montrant l'implantation du boîtier de la figure 5,
- la figure 6 est une courbe illustrant l'enregistrement de l'électrocardiogramme des membres d'équipage,
- la figure 6A est une courbe illustrant un exemple de régression sur 64 battements,
- les figures 7 et 8 sont des histogrammes illustrant la variation de la fréquence cardiaque des membres d'équipage selon les phases de vol,
- la figure 9 est un organigramme illustrant de manière plus détaillée le procédé selon l'invention,
- la figure 10 est un organigramme illustrant la validation du modèle suivant l'invention selon le concept des "moitiés partagées", et
- les figures 11 à 15 sont des courbes comparatives illustrant la correspondance entre les valeurs de charge de travail cotées subjectivement et celles calculées au moyen du modèle selon l'invention.

Les tableaux I à VI insérés dans le mémoire descriptif doivent être considérés comme faisant partie intégrante de cette description ainsi que les légendes apparaissant sur les organigrammes des figures 1, 9 et 10.

Dans la présente description, donnée à titre non limitatif, on va décrire plus particulièrement un procédé d'élaboration d'un modèle pour prédéterminer la charge de travail d'un pilote d'avion de transport commercial tel que l'AIRBUS A 310. Dans l'exposé détaillé de l'invention qui va être maintenant présenté en référence aux dessins et aux tableaux, on décrira d'abord la nature et le mode de saisie des données utilisées pour l'élaboration du modèle puis les mesures on variables dérivées de ces données. On procédera ainsi pour chaque ensemble de données concerné.

La procédure d'obtention d'une certification de type pour un avion du genre précité implique l'exécution d'un grand nombre de vols d'essai destinés en particulier à déterminer si la charge de travail mentale subjective imposée à ses pilotes (pilote et copilote) par le pilotage de ce nouvel avion est acceptable. Durant ces vols, on demande à l'équipage de coter sa charge de travail à des instants prédéterminés, au moyen d'une échelle préétablie.

Ces vols d'essai étant longs et coûteux, la demanderesse a décidé de développer un modèle mathématique capable de prédéterminer la cotation des pilotes de manière fiable et objective.

L'étape préliminaire du procédé d'élaboration d'un modèle du type précité consiste à déterminer s'il existe une corrélation statistique entre les cotations faites par les pilotes durant le vol et des performances de l'avion qui soient directement mesurables. Au cours d'une étude préliminaire réalisée par la demanderesse, l'existence d'une telle corrélation a été établie.

L'étape suivante consiste à collecter suffisamment de données et à calculer le modèle en appliquant des techniques statistiques appropriées.

Dans l'exemple, cette seconde étape a été mise en oeuvre en utilisant les données collectées lors de la campagne de certification de l'avion AIRBUS A 310-200. Ces données constituent en effet une excellente base pour l'élaboration du modèle. Ainsi, les 60 vols de la campagne de certification A 310 procurent une abondance de données parmi lesquelles des cotations subjectives de charge de travail, des mesures de performances de l'avion (ci-après dénommées données avion) et les enregistrements de la fréquence cardiaque (électrocardiogramme) des 14 pilotes ayant participé à cette campagne. Ainsi, comme on le décrira plus loin, des variables indicatives de données avion et physiologiques et pouvant être reliées à la charge de travail, pourront être calculées. En outre, les scénarios de vol utilisés pendant la campagne de l'A 310 couvrent une gamme de conditions de vol normales, anormales et d'urgence relativement large qui peut être considérée comme une gamme représentative des situations qu'un modèle utile doit être capable de prédéterminer. Pour la collecte des données, on procède comme indiqué à la figure 1. Plus explicitement, pour chaque vol de certification considéré, on demande à chaque pilote de l'avion, dans des phases et conditions du vol et dans des conditions de pilotage déterminées, constituant les paramètres de vol, de donner une cotation de sa charge de travail au moyen d'une échelle préétablie qui sera décrite plus loin, on consigne cette cotation en même temps que les paramètres de vol correspondants et on mesure simultanément la valeur de données significatives desdits paramètres de vol, puis on établit finalement une corrélation statistique entre les valeurs cotées de la charge de travail d'une part et les données précitées et les paramètres de vol d'autre part.

Le modèle préférentiel de la présente invention, sélectionné en fonction de sa puissance statistique et de considérations pratiques, utilise les données avion et les informations de rythme cardiaque des deux membres d'équipage (pilote et copilote). Un modèle n'utilisant que les données avion a également été élaboré car la mesure du rythme cardiaque en vol peut être considérée, à tort ou à raison, comme une charge supplémentaire en vol. Ce modèle simplifié, que l'on décrira plus loin, constitue une alternative raisonnable dans des situations qui font obstacle à l'enregistrement ou à l'utilisation des données de rythme cardiaque. Toutefois, ses capacités de prédiction sont bien inférieures à celles d'un modèle utilisant des données avion et de rythme cardiaque.

Dans le procédé illustré par les figures 1 et 9, on synchronise et fusionne quatre ensembles distincts de données pour créer les mesures finales avec lesquelles le modèle est construit. Trois de ces ensembles sont fournis sur bande magnétique. Ce sont les cotations des pilotes et les notations d'un observateur embarqué sur les phases de vol et les conditions de vol, les données de vol de l'avion et les données cardiaques des pilotes. Le quatrième ensemble de données comprend des notes de bord imprimées lors des différents vols et indiquant les phases de vol (montée, croisière, descente etc.) et les conditions de vol (normale, urgence etc.). On va maintenant décrire en détail chaque ensemble de données en se référant à chaque fois, en ce qui concerne les moyens de saisie de données, à la figure 2.

NATURE ET SAISIE DES DONNES DE COTATION DE CHARGE DE TRAVAIL

Pour évaluer leur charge de travail, les pilotes utilisent l'échelle suivante :

2 Charge de travail légère ; capacité de réserve ample ; très acceptable,

3 Charge de travail modérée ; capacité de réserve plus que suffisante (adéquate) ; tout à fait acceptable,

4 Charge de travail normale ; capacité de réserve suffisante ; acceptable,

5 Charge de travail importante ; capacité de réserve diminuée/réduite ; élevée mais acceptable,

6 Charge de travail lourde ; capacité de réserve faible ; juste acceptable,

7 Charge de travail extrême ; capacité de réserve à peu près nulle ; non acceptable de façon continue.

L'échelle précitée peut être précisée de la façon suivante :

2 : toutes les tâches du pilote sont accomplies sans délai,

3 : certaines tâches peuvent être interrompues,

4 : interruptions de tâches régulières auxquelles le pilote peut faire face sans effort déraisonnable,

5 : allègement des tâches souhaitables ; interruptions de tâches répétées et/ou niveau d'effort mental ou de stress prononcé,

6 : charge de travail supérieure à ce que le pilote peut accepter continuellement dans des conditions normales ; interruptions de tâches fréquentes et/ou niveau d'effort mental ou de stress accentué ;

7 : tâches continuellement interrompues et/ou niveau d'effort mental ou de stress très accentué ; risque élevé d'erreur ou d'omission.

Pour coter, en vol, sa charge de travail au moyen de l'échelle précitée, chaque pilote dispose d'un boîtier 1 (voir figures 2, 4 et 5) placé en face de lui et à portée de main sur le tableau de bord 9 de la cabine de pilotage. Chaque boîtier pilote 1 présente en face avant six boutons poussoirs à impulsion la numérotés de 2 à 7 pour la cotation et un voyant lumineux 1b qui s'allume lorsqu'une cotation est demandée au pilote. Chaque boîtier 1 est électriquement relié (voir figure 2) à un boîtier de notation observateur 2 dont la face avant est représentée à la figure 3A. Ce boîtier observateur 2 est par exemple installé dans la cabine de pilotage à portée de main de l'observateur embarqué. Ce boîtier 2 présente en face avant un bouton inverseur marche/arrêt 3, un afficheur numérique à deux digits 4 et seize boutons poussoirs 5 répérés respectivement E (effacement), CM1 (membre d'équipage 1 occupant la place de gauche), CM2 (membre d'équipage 2 occupant la place de droite), CS, DR, R, DEC, M, C, DES, AP, AT, N, NC, PU, CU. Le bouton poussoir E est un bouton lumineux à voyant incorporé.

L'inverseur 3 est utilisé pour la mise sous tension des boîtiers 1 et 2, la remise à zéro de l'afficheur 4 et la remise à zéro générale. Le bouton poussoir repéré E (effacement) s'allume lorsqu'on appuie sur les boutons CM1 ou CM2 ce qui signifie qu'une cotation a été demandée à l'un des deux pilotes. Dans ce cas, le voyant 1b du boîtier pilote 1 correspondant s'allume puis s'éteint une fois que le pilote a appuyé sur l'un des boutons de cotation 1a. Le bouton E du boîtier 2 s'allume également lorsqu'on appuie sur le bouton CS (condition de vol seulement).

Il s'éteint :

- 5 secondes après extinction du voyant pilote 1b si on demande une cotation (ou 5 secondes après la dernière commande de l'observateur si elle est postérieure);
- 5 secondes après la dernière commande de l'observateur lorsque l'on ne demande pas de cotation ;
- Dès qu'il est enfoncé.

Les 5 secondes de temporisation peuvent être ajustées (de 2s/minimum à 10s/maximum).

L'afficheur numérique 4 est incrémenté lorsqu'on appuie sur les boutons CM1, CM2, ou CS et est remis à zéro par l'inverseur 3. Le bouton poussoir à impulsion CS, lorsqu'il est enfoncé, génère une information "pilote non testé" sans allumer les voyants 1b des boîtiers 1 PILOTE ou COPILOTE et indique le changement de phase de vol et de condition de vol sans cotation du pilote ou copilote. La séquence se poursuit par la commande des boutons poussoirs phase de vol et condition de vol (voir figure 3).

Les boutons poussoirs "phase de vol" commandent par tout moyen approprié connu en lui-même le génération d'un code, par exemple binaire, de valeur 0 à 7 suivant la correspondance suivante :

- 0 pour le bouton DR (remise des gaz ou descente rapide),
- 1 pour le bouton R (roulage avant décollage),
- 2 pour le bouton DEC (décollage),
- 3 pour le bouton M (montée),
- 4 pour le bouton C (croisière),
- 5 pour le bouton DES (descente),
- 6 pour le bouton AP (approche),
- 7 pour le bouton AT (atterrissage).

Les boutons poussoirs "condition de vol" commandent la génération d'un code de valeur 0 à 3 suivant la correspondance suivante :

0 : normal (bouton N)
1 : liste de vérification normale (bouton NC)
2 : panne - urgence (bouton PU)
3 : liste de vérification d'urgence (bouton CU)

Le bouton N n'est pas connecté. Il est toutefois présent pour que l'observateur appuie, à chaque observation, sur un bouton poussoir 5 des trois catégories précitées.

Comme on le voit à la figure 2, les boîtiers pilote 1 et observateur 2 sont électriquement reliés à un boîtier de traitement logique 6 qui, en liaison avec un enregistreur 7 et une horloge 8 définissant une base de temps commune aux différents moyens de mesure de l'avion (heure GMT), permet la centralisation et l'enregistrement des cotations des pilotes et des notations de l'observateur. Le boîtier 6 reçoit l'alimentation 28V continu du réseau avion et assure l'alimentation des boîtiers 1 et 2. Il génère par ailleurs des signaux logiques représentatifs des cotations et notations précitées qui sont appliquées au boîtier d'acquisition de signaux 7a de l'enregistreur 7. Le boîtier 6 délivre ses signaux sous forme parallèle sur 23 sorties "tout ou rien" 6a. Comme on le décrira plus loin, le boîtier 6 est également relié à un système de télévision embarqué utilisé pour la consignation des paramètres de vol.

Alternativement, l'observateur peut disposer d'un boîtier 2 dont la face avant est représentée à la figure 3B. Ce boîtier est plus particulièrement adapté à vérifier l'adéquation des cotations faites par les pilotes. Comme le boîtier de la figure 3A, il comprend un inverseur 3, trois boutons poussoirs 5 repérés respectivement E, CM1 et CM2 et un afficheur 4 qui ont des fonctions identiques aux éléments décrits plus haut. Le boîtier 2 de la figure 3B comprend également six boutons poussoirs 5 repérés de 2 à 7, trois boutons poussoirs 5b repérés M, I et S et un voyant lumineux 2a.

Tout au long du vol, l'observateur enregistre au moyen du boîtier 2 précité son appréciation propre des charges de travail respectives des deux membres d'équipage en utilisant les boutons poussoirs 5 repérés 2 à 7. L'observateur procède ainsi à la fin de chaque phase ou sous-phase de vol ou chaque fois qu'il détecte un changement de la charge de travail de l'un ou l'autre des pilotes. Il réalisera également une cotation en réponse à une illumination du voyant 2a qui indique que l'un des deux membres d'équipage vient lui-même de réaliser une cotation. L'observateur peut également consigner les erreurs de pilotage en utilisant les boutons M, I et S pour :

M : erreur mineure

I : erreur importante telle que anomalie corrigée ou non corrigée ou erreur non relative à la sécurité du vol non corrigée

S : erreur relative à la sécurité, corrigée ou non.

Afin de remplir ses fonctions de manière aussi efficace que possible, l'observateur doit être lui-même un pilote parfaitement familiarisé avec l'échelle de cotation utilisée et les différences entre les tâches opérationnelles, de surveillance et de planification.

VARIABLE DERIVEE DES DONNES DE COTATION

Une étude des cotations faites par les pilotes a mis en évidence des inégalités importantes dans la répartition de ces cotations en fonction du pilote considéré. L'importance des différences de pilote à pilote dans l'utilisation de l'échelle de cotation conduit à la nécessité d'interpréter ces cotations d'une manière qui annule les variations extérieures dues à la façon dont les pilotes interprètent l'échelle de cotation. Les travaux de GOPHER et BRAUNE (1984) sur la psychophysique des charges de travail ont permis de retenir la relation de transformation suivante :

$$T = Log_{10} (\frac{P - Pmin - 1}{Pmax - Pmin})$$

dans laquelle

T est la cotation transformée,

P est la cotation brute,

Pmin est la cotation minimale donnée par un pilote au cours de tous les vols d'essai,

Pmax est la cotation maximale donnée par ce pilote au cours des mêmes vols.

La transformation des cotations brutes selon GOPHER et BRAUNE présente au moins deux avantages. D'une part l'adéquation du modèle développé aux données disponibles est améliorée. D'autre part les variations "parasites" dues aux différences de cotation de pilote à pilote sont éliminées. Par ailleurs, compte tenu de l'ensemble des cotations relevées pour tous les pilotes, la valeur de Pmin peut être fixée égale à 2. Un troisième avantage de la cotation transformée est qu'elle peut être considérée comme un nouvel indice de performance du système pilote-avion, d'application plus large que l'échelle utilisée pour la cotation. Toutefois, l'effet de "lissage" de la transformée précitée conduit à une certaine ambiguité si on désire exprimer la charge de travail prédéterminée suivant l'échelle de 2 à 7. On s'est donc orienté vers la relation suivante :

$$PRi = (10^{Yi}) \times R + 1$$

dans laquelle :

PRi est la cotation prédéterminée sur l'échelle de 2 à 7,

Yi est la cotation prédéterminée transformée, c'est-à-dire la cotation calculée,

R est la plage de cotation du pilote considéré.

Afin de disposer d'une relation applicable pour tous les pilotes, on retient pour R une valeur égale à 3, ce qui conduit à la relation :

$$PRi = 3x10^{Yi} + 1$$

TRAITEMENT INFORMATIQUE DES DONNES DE COTATION

Les cotations des pilotes et les notations de l'observateur, classées par fichier (un fichier par vol), sont enregistrées sur bande magnétique sous forme binaire sur l'enregistreur 7, à raison de 25 données par seconde. Ces données sont préalablement traitées par ordinateur (non représenté), selon l'organigramme ci-après, pour déterminer l'instant auquel une cotation a été demandée, l'instant à laquelle cette cotation a été donnée, la valeur de la cotation, le pilote donnant la cotation (CM1 ou CM2) et la condition de vol et la phase de vol correspondantes. On obtient ainsi un fichier "cotation" par vol.

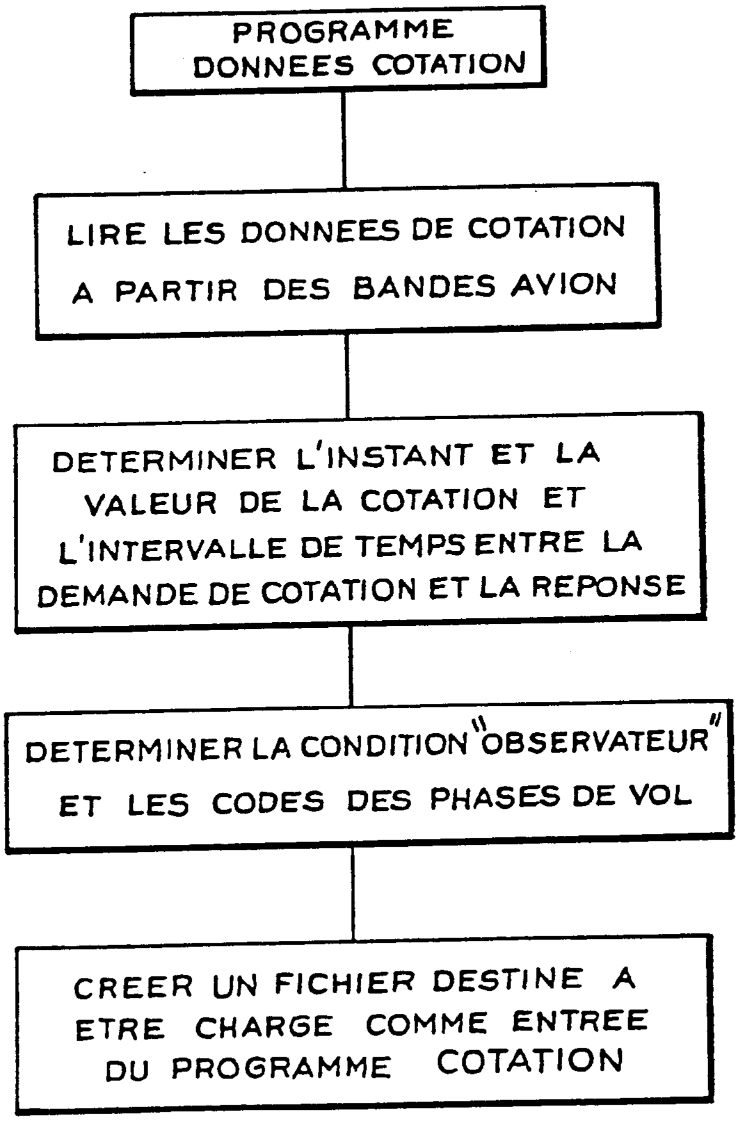


Chaque fichier précité est déchargé de l'unité centrale de l'ordinateur utilisé pour le prétraitement précité vers un microcalculateur (non représenté) pour un nouveau traitement selon l'organigramme ci-après.

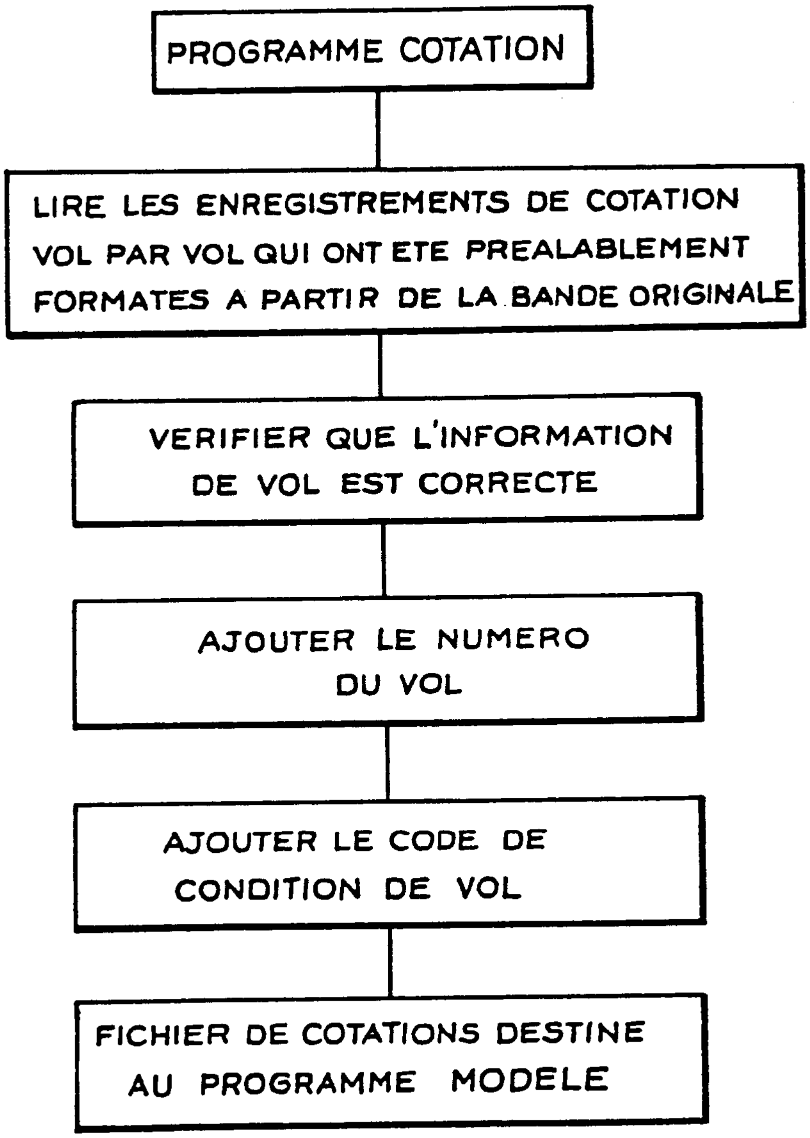


Le microcalculateur précité est programmé pour introduire les particularités du vol, c'est-à-dire dans l'exemple ici décrit :

- la condition de vol : panne/urgence, liste de vérification de panne, liste de vérification normale, vol normal,
- la phase de vol : remise des gaz ou descente d'urgence, préroulage, roulage avant décollage, décollage, montée, croisière, descente, approche, atterrissage, roulage après atterrissage,
- le rôle du pilote : pilote CM1 (c'est-à-dire occupant le siège de gauche dans la cabine de pilotage) aux commandes de l'avion, pilote CM1 non aux commandes, pilote CM2 (c'est-à-dire occupant le siège de droite dans la cabine de pilotage) aux commandes de l'avion, pilote CM2 non aux commandes ;
- le nombre de systèmes ECAM en fonctionnement, c'est-à-dire le nombre de systèmes électroniques de gestion centralisée de l'avion (ECAM) fonctionnant au moment de la cotation,
- le nombre de systèmes FMS en fonctionnement, c'est-à-dire le nombre de systèmes de gestion de vol (FMS) en fonctionnement au moment de la cotation,
- l'état de l'automanette (enclenchée ou non), c'est-à-dire de la manette permettant la régulation automatique de la puissance moteur.

Ces paramètres sont fournis en partie par les notations de l'observateur en cabine de pilotage et en partie par des notations consignées par un ou plusieurs observateurs installés en cabine lors des vols d'essai.

Le microcalculateur précité est également programmé pour afficher chaque cotation individuelle, l'instant où elle a été donnée, et l'identité du pilote qui l'a donnée. L'instant de cotation est ensuite comparé aux notations des observateurs en cabine dites données d'observations. Ces données d'observations sont de préférence codées en utilisant un code à quatre chiffres. Ce code est donné par le tableau I ci-après.

**TABLEAU I**

Code à quatre chiffres

Le premier chiffre sert à identifier quatre situations :

- 0 : panne
- 1 : liste de vérification relative à une panne
- 2 : liste de vérification de routine
- 4 : vol normal

Lorsque le premier chiffre est égal à 2, la séquence observée est une liste de vérification de routine. Les deux chiffres suivants permettent d'identifier le type de liste de vérification, ou une autre tâche du pilote :

- 01 : préparation du poste de pilotage
- 02 : briefing
- 03 : avant démarrage
- 04 : après démarrage
- 05 : roulage
- 06 : avant décollage
- 07 : après décollage
- 08 : descente
- 09 : approche
- 10 : final
- 11 : après atterrissage
- 20 : navigation
- 30 : communication radio

Lorsque le premier chiffre est égal à 0, la séquence observée correspond à un incident de vol ou à une panne ; s'il est égal à 1, la séquence observée correspond à la liste de vérification, ou à la procédure relative à la panne ou à l'incident. Dans ces deux cas, les deux chiffres suivants permettent d'identifier le type et le sous-type d'incident ou de panne :

TABLEAU I (suite)

- 1 : Centrale électrique (APU)
  - 1 : feu moteur ou dommage sévère
  - 2 : APU en feu
  - 3 : deux moteurs en feu
  - 4 : panne d'automanette
  - 5 : pression huile moteur basse
  - 6 : précaution moteur ou coupure obligatoire
  - 7 : feu sur un moteur
  - 8 : moteur en panne

- 2 : Carburant
  - 1 : alimentation carburant sans pompe
  - 2 : pompes internes ou externes en panne
  - 3 : panne simple de la pompe centrale
  - 4 : panne double de la pompe centrale
  - 5 : panne de transfert automatique entre pompes

- 3 : Electricité
  - 1 : fumée sur pupitre de vol
  - 2 : fumée sur tableau d'équipements principal (phase 1)
  - 3 : fumée batteries
  - 4 : fumée sur équipement de cabine
  - 5 : panne de générateur simple
  - 6 : panne de générateur double
  - 9 : fumée sur tableau principal (phase 2)

- 4 : Hydraulique
  - 2 : perte de fluide hydraulique
  - 3 : autre panne
- 5 : Commandes de vol
  - 1 : détection de volets coincés ou assymétriques

TABLEAU I (suite)

- 6 : Train d'atterrissage
    - 1 : train d'atterrissage normal
    - 2 : autre panne

- 7 : Pneumatique
    - 1 : pannes diverses sur moteur ou APU
    - 2 : autre panne

- 8 : Air conditionné et pressurisation
    - 1 : panne compartiment cargo
    - 2 : autre panne

- 9 : Divers
    - 1 : problème de structure
    - 2 : panne de pilote automatique
    - 3 : autre panne

Le quatrième chiffre sert à identifier la phase de vol ou de préparation de l'avion.

- 0 : préparation
- 1 : préroulage
- 2 : roulage avant décollage
- 3 : décollage
- 4 : montée
- 5 : croisière
- 6 : descente
- 7 : approche
- 8 : atterrissage
- 9 : roulage après atterrissage

## TABLEAU I (suite)

Un certain nombre de codes identifie des séquences de vol ou événements très spécifiques, par exemple :

- 4030 : atterrissage forcé
- 4040 : vol difficile
- 4050 : descente d'urgence
- 4060 : atterrissage en surcharge
- 4070 : remise des gaz
- 4081 : incapacité CM1
- 4082 : incapacité CM2

Les données d'observation, enregistrées périodiquement pendant les vols, comprennent des informations relatives à la phase de vol, à la condition de vol et au lieu et à la nature de toute panne ou situation d'urgence. Les instants de cotation et les données d'observation précitées sont alors synchronisés manuellement et le code approprié est entré pour chaque cotation. Les fichiers de cotation sont alors rechargés dans l'unité centrale de l'ordinateur pour être utilisées dans le programme de traitement principal qu'on décrira plus loin.

SAISIE DES PARAMETRES DE VOL

Pour l'enregistrement des données d'observation, les observateurs installés en cabine disposent d'un circuit de télévision embarqué qui est représenté schématiquement à la figure 2. Ce circuit comprend essentiellement un écran télévision couleur 10 relié d'une part à une première caméra 11 par l'intermédiaire d'un dispositif mélangeur vidéo 12 et d'une unité de contrôle de caméra 11a et d'autre part à un dispositif incrustateur vidéo 13 lui-même relié au boîtier de traitement logique 6 précédemment décrit. La caméra 11 est une caméra grand angle filmant les postes de pilotage des pilotes tandis que le dispositif incrustateur 13 permet de visualiser sur l'écran 10, en surimposition par rapport à l'image de la caméra 11, les cotations de charge de travail et/ou les données d'observation émanant respectivement des boîtiers pilote 1 et observateur 2 par l'intermédiaire du boîtier 6.

Les observateurs installés en cabine peuvent ainsi relever les cotations des pilotes à titre de vérification ultérieure ainsi que les paramètres de vol fournis par l'observateur tout en les comparant aux informations fournies par la caméra 11 sur l'écran 10.

Le mélangeur vidéo 12 est également relié à un magnétoscope vidéo 14 lui-même relié à une seconde caméra 15 par l'intermédiaire d'un second dispositif incrustateur vidéo 16 et d'une unité de contrôle de caméra 15a. La caméra 15 prend par exemple des vues du panneau supérieur et de la console centrale de pilotage qui peuvent être enregistrées par le magnétoscope 14 et/ou visualisées sur l'écran 10 en même temps que celles du poste de pilotage grâce au mélangeur 12. En outre, l'incrustateur 16 qui est relié également à la base de temps de référence 8 de l'avion permet l'enregistrement et/ou la visualisation en surimpression de l'heure GMT. L'ensemble du circuit de télévision embarqué est piloté à partir d'un poste de commande 17 installé en cabine et comprenant une unité de commande de magnétoscope 17a reliée au magnétoscope 14 et une unité de commande de sélection de caméra 17b reliée au mélangeur vidéo 12.

NATURE ET SAISIE DES DONNES AVION-MESURES EN RESULTANT

Les données avion enregistrées au cours des vols d'essais précités, par exemple sur bande magnétique, au moyen d'un enregistreur 18 en synchronisme avec la base de temps de référence 8, comprennent 22 données de vol et 22 données de commandes de vol automatiques. Pour ces dernières données, l'information utile est l'information "commande enclenchée" ou non au moment de la mesure des données de vol. Les données précitées sont répertoriées dans le tableau II ci-après.

TABLEAU II

| N° DE DONNEE | DONNEE AERONEF | UNITE | PLAGE UTILE |
|---|---|---|---|
| 1 | Commande de Directeur de Vol : Profondeur | Degrés | +/- 180 |
| 2 | Commande de Directeur de Vol : Roulis | Degrés | +/- 180 |
| 3 | Débattement de Gouverne de Profondeur Gauche | Degrés | +/- 180 |
| 4 | Débattement de Gouverne de Direction | Degrés | +/- 180 |
| 5 | Position des Volets | Degrés | 0 à 41 |
| 6 | Débattement d'Aileron Gauche | Degrés | +/- 180 |
| 7 | Débattement d'Aileron Droit | Degrés | +/- 180 |
| 8 | Angle de Profondeur | Degrés | +/- 180 |
| 9 | Angle de Roulis | Degrés | +/- 180 |
| 10 | Vitesse de Profondeur (Corps) | Degrés/Sec | +/- 128 |
| 11 | Vitesse de Roulis (Corps) | Degrés/Sec | +/- 128 |
| 12 | Vitesse verticale (Barométrique) | Pieds/Min | +/- 15000 |
| 13 | Vitesse Aérodynamique | Noeuds | 15 à 450 |
| 14 | Débattement du Plan Fixe Horizontal | Degrés | +/- 180 |
| 15 | Angle d'incidence | Degrés | +/- 60 |
| 16 | Accélération Longitudinale (Terre) | g | +/- 0,5 |
| 17 | Accélération Verticale (Terre) | g | -0,5 à 2,5 |
| 18 | Altitude Barométrique (Std) | Pieds | -1000 à +50000 |
| 19 | Vitesse N1 du moteur 1 | t/m | 0 à 4400 |
| 20 | Vitesse N1 du moteur 2 | t/m | 0 à 4400 |
| 21 | Angle de Manette des Gaz (Moteur 1) | Degrés | 15 à 87,5 |
| 22 | Angle de Manette des Gaz (Moteur 2) | Degrés | 15 à 87,5 |

TABLEAU II (Suite)

| N° DE DONNEE | DONNEE (COMMANDES DE VOL AUTOMATIQUES) |
|---|---|
| 23 | Altitude |
| 24 | Vitesse Verticale ($V_z$) |
| 25 | Arrondi |
| 26 | Directeur de Décollage (remise des gaz) |
| 27 | Directeur de Décollage (Décollage) |
| 28 | Changement de Niveau |
| 29 | Radioalignement de Site (Glide Slope) |
| 30 | Modes longitudinaux - Suivi |
| 31 | Modes longitudinaux - Capture |
| 32 | Navigation |
| 33 | Tenue de Cap |
| 34 | Sélection de Cap |
| 35 | Radioalignement d'Azimuth (Localizer) |
| 36 | Roulage |
| 37 | Décollage (Lacet) |
| 38 | Roulage (Remise des Gaz) |
| 39 | Modes latéraux - Capture |
| 40 | VOR |
| 41 | Modes latéraux - Suivi |
| 42 | Alignement |
| 43 | Conditionnement Moteur Pilotage Transparent |
| 44 | Commande Conditionnement Moteur |

Pour les données de vol, les unités et les plages utiles ont également été indiquées au tableau II. Pour l'élaboration du modèle conforme à l'invention, les données de vol suivantes ont finalement été retenues : l'angle de roulis, la vitesse aérodynamique, l'angle d'incidence, la vitesse N1 du moteur 1, le débattement de la gouverne de direction et la vitesse de roulis.

Les données brutes ne sont cependant pas utilisées dans l'élaboration du modèle pour au moins deux raisons. D'une part, la valeur brute ou instantanée de la plupart des données au moment de la cotation d'un pilote risque de ne pas donner une image exacte de la donnée à prendre en compte et d'autre part l'expérience a montré que les pilotes avaient tendance à baser leur cotation instantanée sur un ensemble d'impressions intégrées sur une certaine période de temps.

Ces observations ont ainsi conduit à décider d'un "lissage" des données et la technique de lissage retenue est la moyenne exponentielle.

Dans la moyenne exponentielle, on accorde progressivement moins de poids aux valeurs des données à mesure qu'elles vieillissent. La pondération des valeurs antérieures est exponentielle, ce qui signifie que l'importance de chaque valeur antérieure successive diminue du même rapport. La formule générale pour une moyenne exponentielle avec une constante de temps T (seconde) est :

$$Ao = A1 + \frac{DT}{T}(So - A1)$$

ou :

A0 est la valeur de la moyenne exponentielle calculée,

A1 est la valeur précédente de la moyenne exponentielle,

DT est l'intervalle de solution, c'est-à-dire la période entre les points de données successifs (qui est une seconde pour les données avion et l'intervalle RR réel pour les données de rythme cardiaque ainsi qu'on le décrira plus loin),

T est la constante de temps ou le facteur de lissage de la moyenne en seconde,

S0 est la valeur de la donnée au temps 0, c'est-à-dire la valeur correspondant à la cotation,

La moyenne exponentielle en donnant plus de poids aux valeurs des données les plus récentes fournit une mesure qui est plus sensible aux événements récents tout en subissant encore les effets d'informations beaucoup plus anciennes. Ces moyennes sont faciles à calculer parce que chaque nouvelle valeur ne dépend que de la valeur présente de la mesure et de la valeur précédente de la moyenne. Elles se dont révélées comme d'excellents moyens de prédiction des cotations de charge de travail des pilotes dans l'étude préliminaire faite par la demanderesse.

Selon les cas, les valeurs de T retenues sont 8, 32, 64 et 128 secondes.

Par ailleurs, pour le calcul des moyennes exponentielles, la valeur absolue de certaines données est préférée. Par exemple, pour le débattement de la gouverne de direction qui peut prendre des valeurs positives et négatives, il est préférable de relier à la charge de travail l'amplitude absolue de l'écart de valeur par rapport à la valeur nominale.

On applique également le lissage par moyenne exponentielle à des variables telles que le taux de passage par zéro, le taux d'inversions ou le logarithme décimal de certaines données.

Ainsi, pour des données pouvant prendre à la fois des valeurs positives et négatives et pour lesquelles zéro constitue la valeur nominale (par exemple l'angle ou la vitesse de roulis), ce taux est calculé en comparant le signe de la valeur instantanée avec celui de la valeur qui la précède immédiatement. Si ces deux signes sont identiques, une valeur de zéro est introduite dans la moyenne exponentielle correspondante et s'ils sont différents une valeur de 60 est introduite dans ladite moyenne exponentielle pour indiquer une valeur de 60 transitions par minute.

Le taux d'inversions est le nombre d'inversions par minute introduit dans une moyenne exponentielle. Une inversion est définie comme un changement dans l'orientation d'une valeur de donnée comparée aux deux valeurs précédentes de cette donnée.

Par exemple les suites de valeurs 1-2-3 ou 7-4-1 ne présentent pas d'inversion tandis que la suite 20-10-11 en présente une.

On a également introduit dans l'élaboration du modèle le logarithme décimal du nombre de commandes de vol automatiques enclenchées au moment de la cotation (voir tableau II). L'hypothèse adoptée est que la charge de travail d'un pilote est inversement proportionnelle à l'aide apportée à ce pilote par le système de commandes de vol automatiques et que ce degré d'assistance peut être évalué par le nombre de commandes enclenchées.

NATURE ET SAISIE DES DONNES PHYSIOLOGIQUES

Suivant une forme d'exécution préférée ou perfectionnée de l'invention, on prend en compte, pour l'élaboration du modèle, des données physiologiques relatives aux deux pilotes de l'avion testé.

Les données physiologiques ou cardiaques sont enregistrées sur bande magnétique sous la forme de battements ou périodes cardiaques séquentiels (intervalles RR) enregistrés en synchronisme avec une horloge 480 Hz. On utilise à cet effet un enregistreur magnétique à pile et cassette 19 (voir figure 2) dont un canal sert à enregistrer l'électrocardiogramme (ECG) du pilote 20, c'est-à-dire la tension entre deux électrodes 19a et 19b fixées sur la peau de ce pilote selon une dérivation dite CM5 (dérivation orientée approximativement suivant le grand axe du coeur). Une électrode 19a est placée au niveau du manubrium central 21 (partie supérieure du sternum) du pilote 20 et l'autre électrode 19b est placée en regard du bord gauche de la cage thoracique, au niveau de la sixième côte.

Simultanément, on enregistre sur une autre voie un signal de fréquence 480 Hz produit par une horloge à quartz. Sur ce même canal est enregistré un repère temporel, introduit par un observateur à l'aide d'un bouton approprié, du début de l'enregistrement de l'ECG. L'observateur aidé d'un chronométreur tient à jour un fichier d'événements qui constitue un découpage de l'activité du pilote en une suite de segments temporels ou séquences dont chacune constitue une étape ou un évènement déterminé de son activité, désignée par le code préétabli décrit plus haut.

L'électrocardiogramme se compose d'une suite de courbes correspondant chacune à un cycle cardiaque, et formée de segments successifs désignés conventionnellement par les lettres PQRST (voir figure 6). En particulier, le complexe QRS correspond à la contraction (systole) ventriculaire et comporte une pointe R facile à détecter. Un traitement informatique préliminaire des données enregistrées doit reconnaître les pointes des ondes R successives et mesure les intervalles de temps qui les séparent conformément à l'organigramme ci-après.

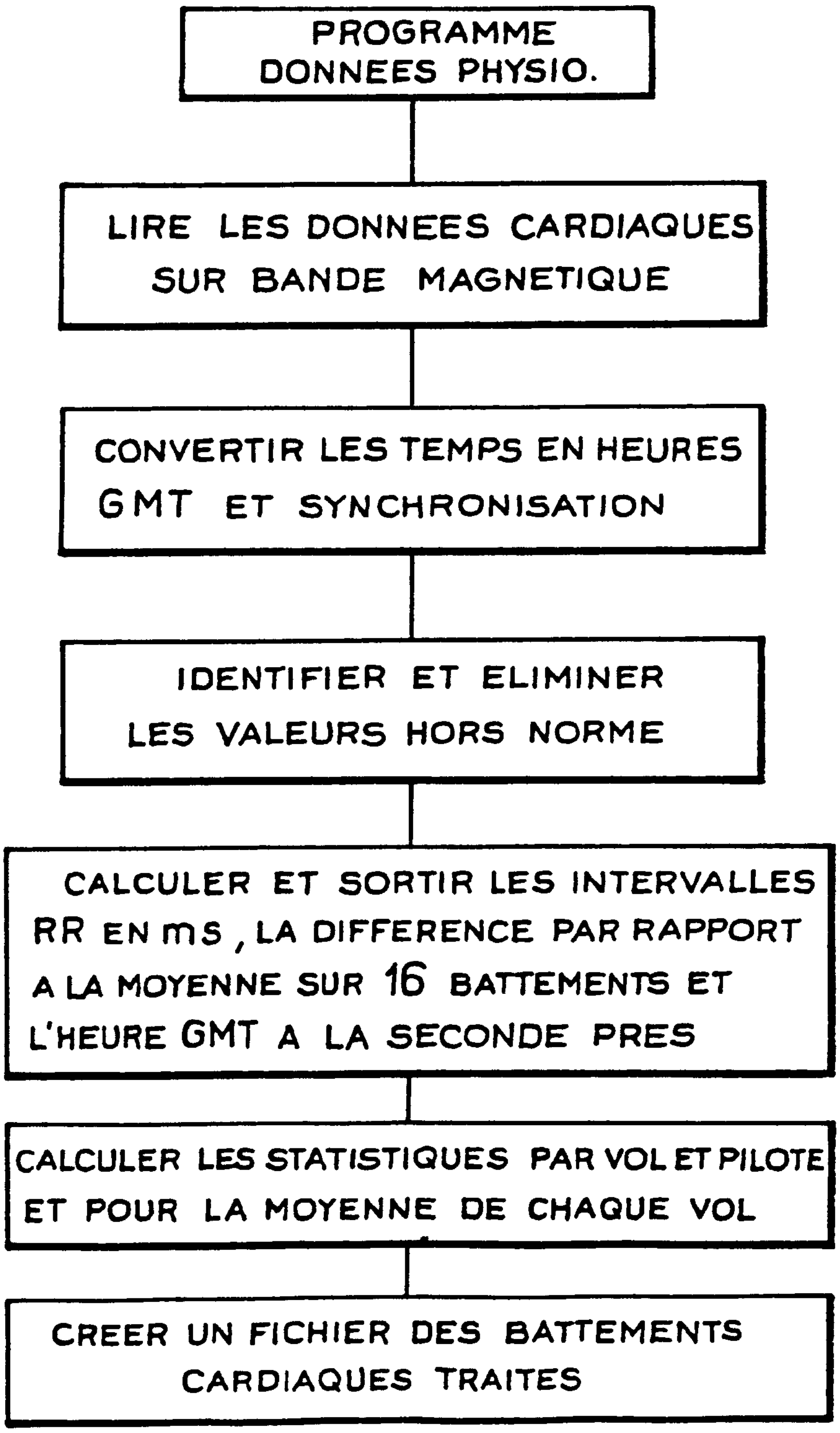

Les données lues sont donc découpées selon les séquences successives spécifiées dans le fichier événement. Et pour chaque séquence on a les informations suivantes :

- Identification de la séquence par son code avec heure réelle du début de la séquence, heure relative au début de l'ensemble de l'observation, et durée de la séquence ;
- Courbe de la FC (fréquence cardiaque) calculée de 5 en 5 secondes (comme l'inverse de la durée moyenne des intervalles RR entrant dans cette période de 5 secondes) ;
- Histogramme des intervalles RR : plus précisément cet histogramme est présenté suivant 24 classes de FC (de 10 à 240 battements/minute) et donne, dans chaque classe, le nombre des complexes QRS détectés, soit une estimation du temps pendant lequel le pilote s'y est tenu.

Les figures 7 et 8 représentent deux exemples d'histogramme pour une population donnée de pilotes testés (pilotes aux commandes de l'avion) et permettent d'apprécier l'évolution du rythme cardiaque de ces pilotes en fonction des phases de vol et par là même l'intérêt de l'introduction de ce facteur dans l'élaboration du modèle conforme à l'invention.

Aux figures 7 et 8, les parties hachurées correspondent à un nombre de battements cardiaques par minute supérieur ou égal à 110 qui est une valeur typique en ce domaine. Sur les courbes considérées, on a porté en ordonnée le pourcentage de pilotes ayant les valeurs de battements/minute indiquées en abscisse.

MESURES OU VARIABLES RESULTANT DES DONNEES PHYSIOLOGIQUES

Pour l'élaboration du modèle, les variables suivantes dérivées de la mesure précitée de l'électrocardiogramme sont utilisées :

- L'intervalle RR brut lissé par moyenne exponentielle comme décrit plus haut.
- Valeur de différence : deux valeurs de différence calculées à partir de l'écart de l'intervalle RR par rapport à la moyenne linéaire rectiligne des 16 ou 32 intervalles RR précédents. Ceci fournit un type de mesures de mouvements sur 16 et 32 battements. Les moyennes exponentielles lissent ensuite ces mouvements pour en quelque sorte annuler tout artifice. Grâce à ce lissage, l'impact d'un seul cycle cardiaque anormalement haut ou bas, qui se dégagerait des premiers filtrages, sera quelque peu diminué en fonction de la constante de temps particulière utilisée dans la moyenne.
- Valeur moyenne : en plus d'être utilisées pour créer des valeurs de différence, les moyennes des 16 ou 32 battements présentent déjà de l'intérêt sans être introduites dans les moyennes exponentielles. Le fait d'effectuer la moyenne des 16 ou 32 derniers battements précédant une période de cotation déterminée est estimé comme un lissage suffisant. De plus, ces mesures en tant que moyennes linéaires pures sont considérées comme une mesure raisonnable de l'amplitude à court terme du rythme cardiaque précédant juste la période de cotation.
- Différence par rapport à la moyenne de référence: un écart type standard et moyen pour les conditions de base de chaque vol (2 minutes après le décollage) est calculé pendant le traitement préliminaire conformément à la procédure de traitement de données schématisées par l'organigramme précité du programme "données physio". Cette mesure représente un ensemble de moyennes exponentielles basées sur la soustraction de l'intervalle RR de la moyenne de l'accélération du rythme cardiaque de chaque pilote lors d'événements survenus lors d'une période de vol relativement calme. Les intervalles RR individuels sont soustraits de la moyenne de référence de façon à ce que les valeurs positives de la mesure puissent indiquer des rythmes cardiaques plus rapides que les rythmes de base (intervalles RR plus courts).
- Poids de la référence : la différence par rapport à la moyenne de référence tient pas compte de l'importance de l'écart type standard par rapport à la moyenne de référence. Si l'écart type standard par rapport à la moyenne de référence est important, des écarts relativement importants par rapport à celle-ci peuvent ne pas se révéler significatifs. Par contre, si l'écart type standard par rapport à la moyenne de référence est faible, il faut accorder plus d' importance aux différences entre les intervalles RR et la moyenne de référence. Pour expliquer l'écart type standard par rapport à la base (SD) et la moyenne (M), les variables suivantes sont calculées de la façon suivante avant d'être utilisées dans les moyennes exponentielles.

$$B1 = \frac{M - SD \times DBL}{M + SD} \text{ poids de référence sigma 1}$$

$$B2 = \frac{M - 2\,SD \times DBL}{M + 2\,SD} \text{ poids de référence sigma 2}$$

où :

Bi est la valeur de la mesure

DBL est la différence par rapport à la moyenne de référence M

SD est l'écart type standard par rapport à la moyenne de référence et 2 SD est 2 fois l'écart type standard par rapport à cette moyenne de référence.

- Résidus de regression : une ligne de régression linéaire présente les meilleurs moindres carrés adaptés à un ensemble de données. Les résidus d'une ligne de régression représentent les écarts au carré des points réels issus de la ligne tracée. En tant que tels, leur somme est une mesure pure de la variabilité à court terme qui n'est influencée par aucun mouvement linéaire à court ou à long terme. Ces résidus doivent simplement mesurer l'étendue de la variabilité cardiaque à court terme précédant le temps d'une cotation. Les résidus issus de la ligne de régression des 64 battements qui précèdent immédiatement un instant de cotation déterminé et les 32 premiers battements des 64

## TABLEAU IIIa

| Variable $X_{ij}$ |
|---|
| Logarithme décimal de l'angle de roulis (128)** |
| Taux d'inversions de la vitesse aérodynamique (64) |
| Taux d'inversions de l'angle d'incidence (64) |
| Taux d'inversions de la vitesse N1 du moteur 1(128) |
| Vitesse N1 du moteur N1 (128) |
| Logarithme décimal du débattement de la gouverne de direction (32) |
| Taux de passage par zéro de l'angle de roulis élevé au carré (128) *** |
| Logarithme décimal du nombre de commandes de vol automatiques enclenchées (I) |
| Taux de passage par zéro de la vitesse de roulis (128) |
| Taux de passage par zéro de la vitesse de roulis élevé au carré (128) *** |
| Pilote testé - Différence RR par rapport à la moyenne de référence (128) |
| Pilote testé - Poids de référence Sigma RR2 (64) |
| Pilote testé - Valeur RR brute (8) |
| Pilote testé - Résidus de régression RR sur 32 battements (I) |
| Pilote non-testé - Valeur RR brute (8) |
| Pilote non-testé - Différence RR par rapport à la moyenne sur 16 battements (128) |
| Pilote non-testé - Différence RR par rapport à la moyenne de référence (64) |
| Pilote non testé - Poids de référence Sigma $RR_1$ (64) |
| Pilote non-testé - Poids de référence Sigma $RR_2$ (64) |
| Pilote non-testé - Différence par rapport à la moyenne sur 32 battements (128) |
| Pilote non testé - Résidus de régression RR sur 32 battements (I) |

** La valeur entre parenthèses est la constante de temps en secondes pour la moyenne mobile exponentielle. "I" indique plutôt une valeur instantanée qu'une moyenne mobile.

*** Ces mesures sont utilisées en multipliant la mesure par elle-même avant la multiplication par le coefficient.

battements qui précèdent cet instant, sont utilisés comme variables. La figure 6A représente un ensemble de 64 intervalles RR et une ligne de régression tracée. La mesure résiduelle des 64 battements telle qu'elle est utilisée dans la construction du modèle est la somme des distances au carré des points réels de données sur les intervalles RR par rapport à la ligne de régression tracée.

Dans la figure 6A, la ligne de régression L tracée montre un mouvement descendant, c'est-à-dire un mouvement vers un rythme cardiaque accéléré (intervalle RR plus court). L'importance de ce mouvement est mesurée par le coefficient de l'équation de régression. Ce coefficient est défini par la pente de la ligne de régression L. Puisque le mouvement au cours des 32 et 64 battements utilisés pour les calculs ou les résidus présente aussi de l'intérêt, les coefficients de régression sont également utilisés comme mesures. Il est important de remarquer que l'amplitude des résidus de régression n'est absolument pas liée au mouvement ou pente de la ligne de régression. Le tracé graphique représenté à la figure 6A peut être soumis à une rotation de 360°, entraînant ainsi un changement continuel de la pente de la ligne (coefficient de régression) sans aucune influence sur la somme des distances au carré des points individuels P par rapport à la ligne de régression.

Les variables dérivées de données avion et de la mesure de l'électrocartiogramme des pilotes et utilisées pour l'élaboration du modèle sont énumérées dans le tableau IIIa ci-après. Dans ce tableau, pilote testé signifie que la mesure a été relevée sur le pilote donnant une cotation et pilote non testé signifie que la mesure a été relevée sur le pilote ne donnant pas de cotation.

## TRAITEMENT PRINCIPAL DES DONNEES

Comme on vient de le décrire, l'étape de traitement principal du procédé visé par l'invention consiste essentiellement à combiner les données avion, de cotation de charge de travail et cardiaques et à calculer un jeu de mesures à partir de ces données préalablement synchronisées par rapport à une base de temps de référence. Cette étape de traitement principal est illustrée par les organigrammes simplifiés ci-après.

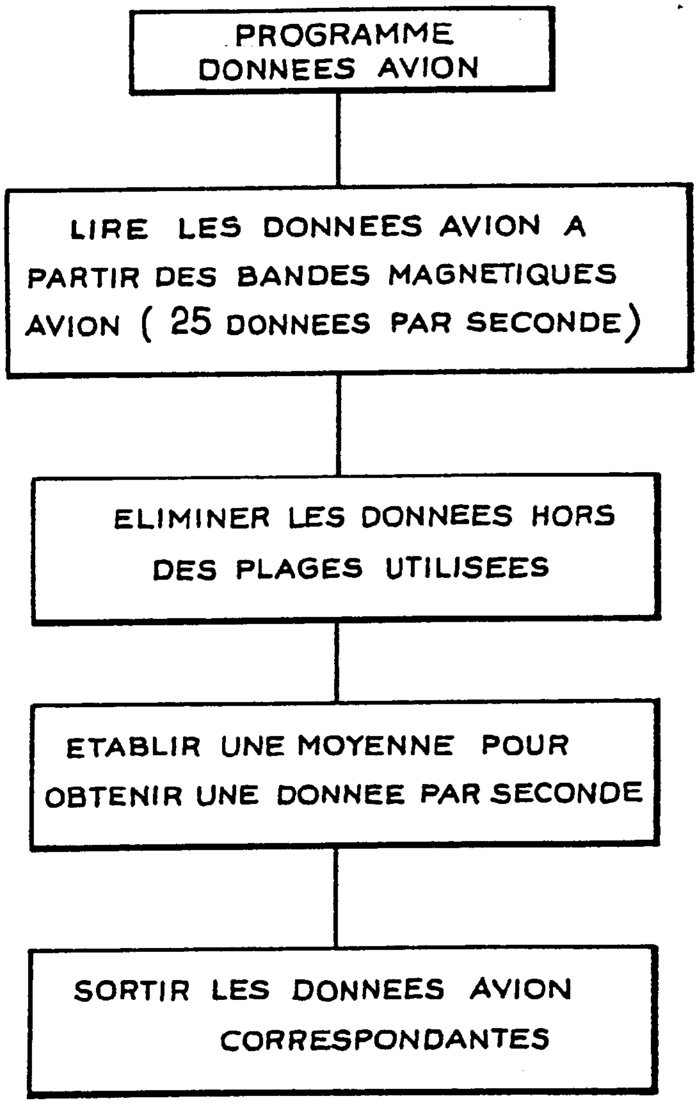
PROGRAMME DONNEES AVION
LIRE LES DONNEES AVION A PARTIR DES BANDES MAGNETIQUES AVION ( 25 DONNEES PAR SECONDE)
ELIMINER LES DONNEES HORS DES PLAGES UTILISEES
ETABLIR UNE MOYENNE POUR OBTENIR UNE DONNEE PAR SECONDE
SORTIR LES DONNEES AVION CORRESPONDANTES

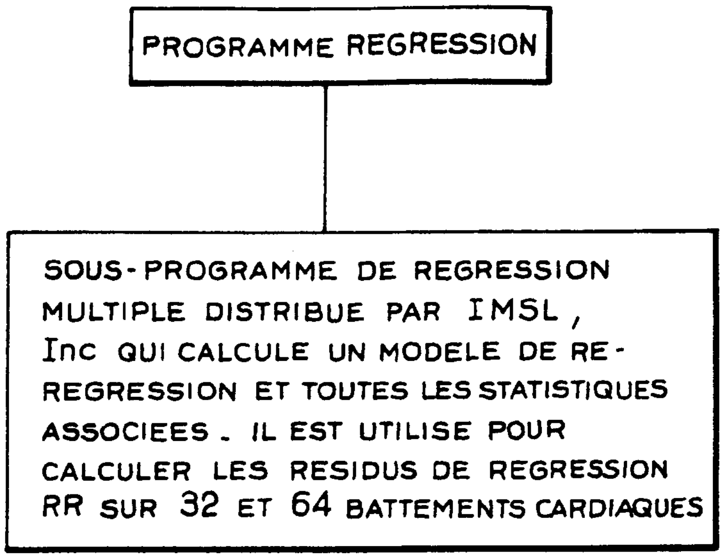
PROGRAMME REGRESSION
SOUS-PROGRAMME DE REGRESSION MULTIPLE DISTRIBUE PAR IMSL, Inc QUI CALCULE UN MODELE DE RE-REGRESSION ET TOUTES LES STATISTIQUES ASSOCIEES. IL EST UTILISE POUR CALCULER LES RESIDUS DE REGRESSION RR SUR 32 ET 64 BATTEMENTS CARDIAQUES

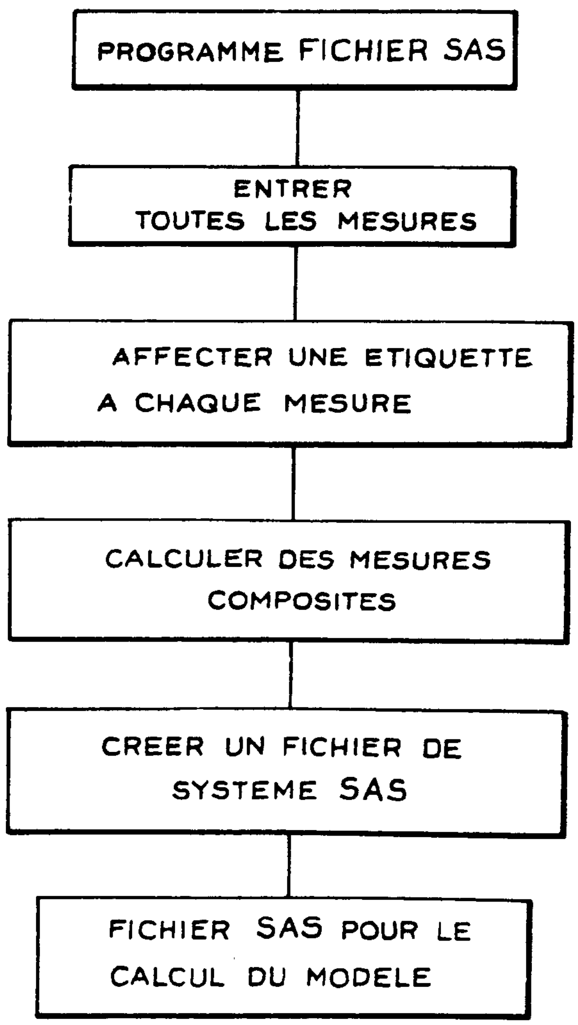
PROGRAMME FICHIER SAS
ENTRER TOUTES LES MESURES
AFFECTER UNE ETIQUETTE A CHAQUE MESURE
CALCULER DES MESURES COMPOSITES
CREER UN FICHIER DE SYSTEME SAS
FICHIER SAS POUR LE CALCUL DU MODELE

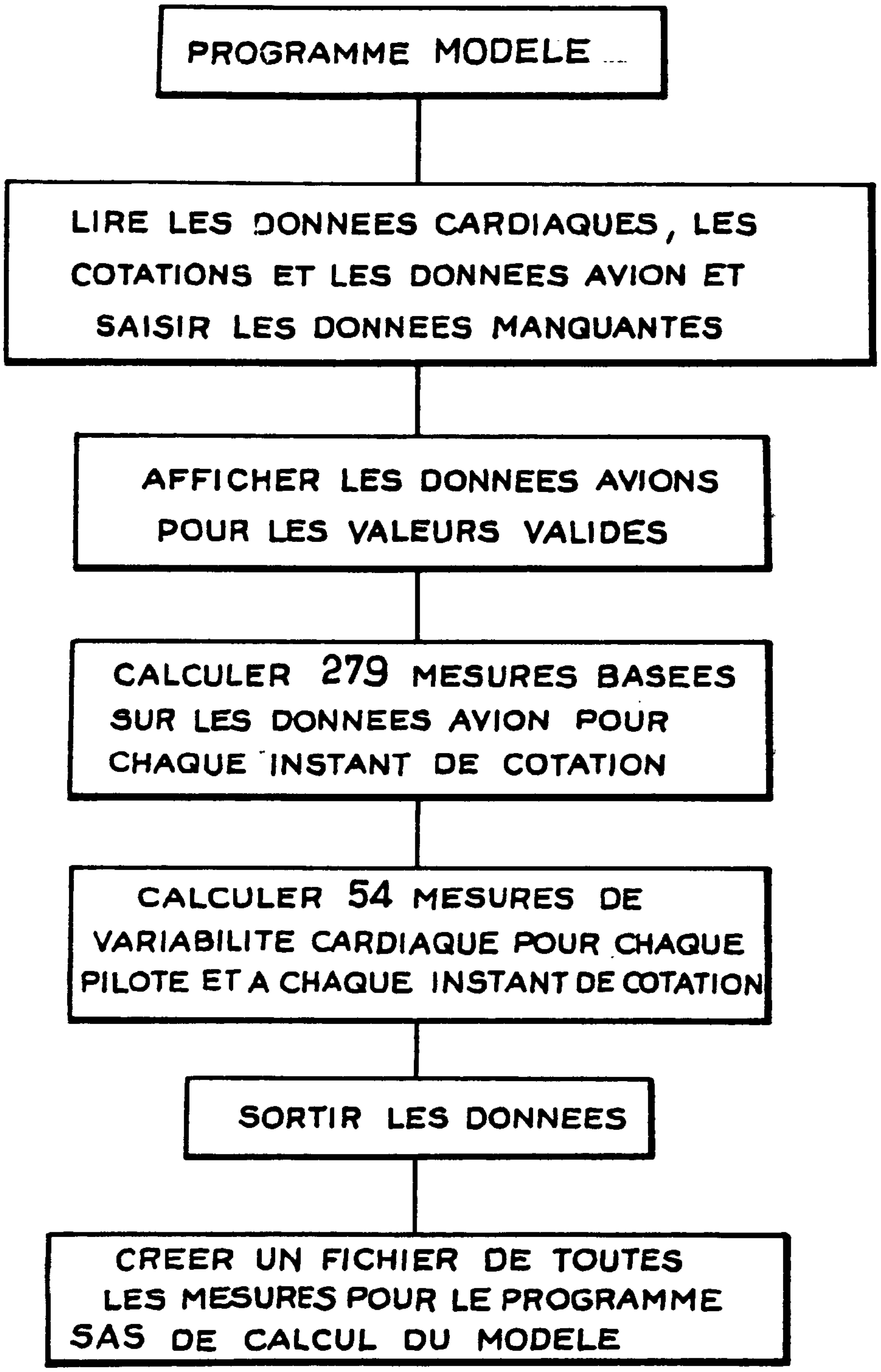
PROGRAMME MODELE ...
LIRE LES DONNEES CARDIAQUES, LES COTATIONS ET LES DONNEES AVION ET SAISIR LES DONNEES MANQUANTES
AFFICHER LES DONNEES AVIONS POUR LES VALEURS VALIDES
CALCULER 279 MESURES BASEES SUR LES DONNEES AVION POUR CHAQUE INSTANT DE COTATION
CALCULER 54 MESURES DE VARIABILITE CARDIAQUE POUR CHAQUE PILOTE ET A CHAQUE INSTANT DE COTATION
SORTIR LES DONNEES
CREER UN FICHIER DE TOUTES LES MESURES POUR LE PROGRAMME SAS DE CALCUL DU MODELE

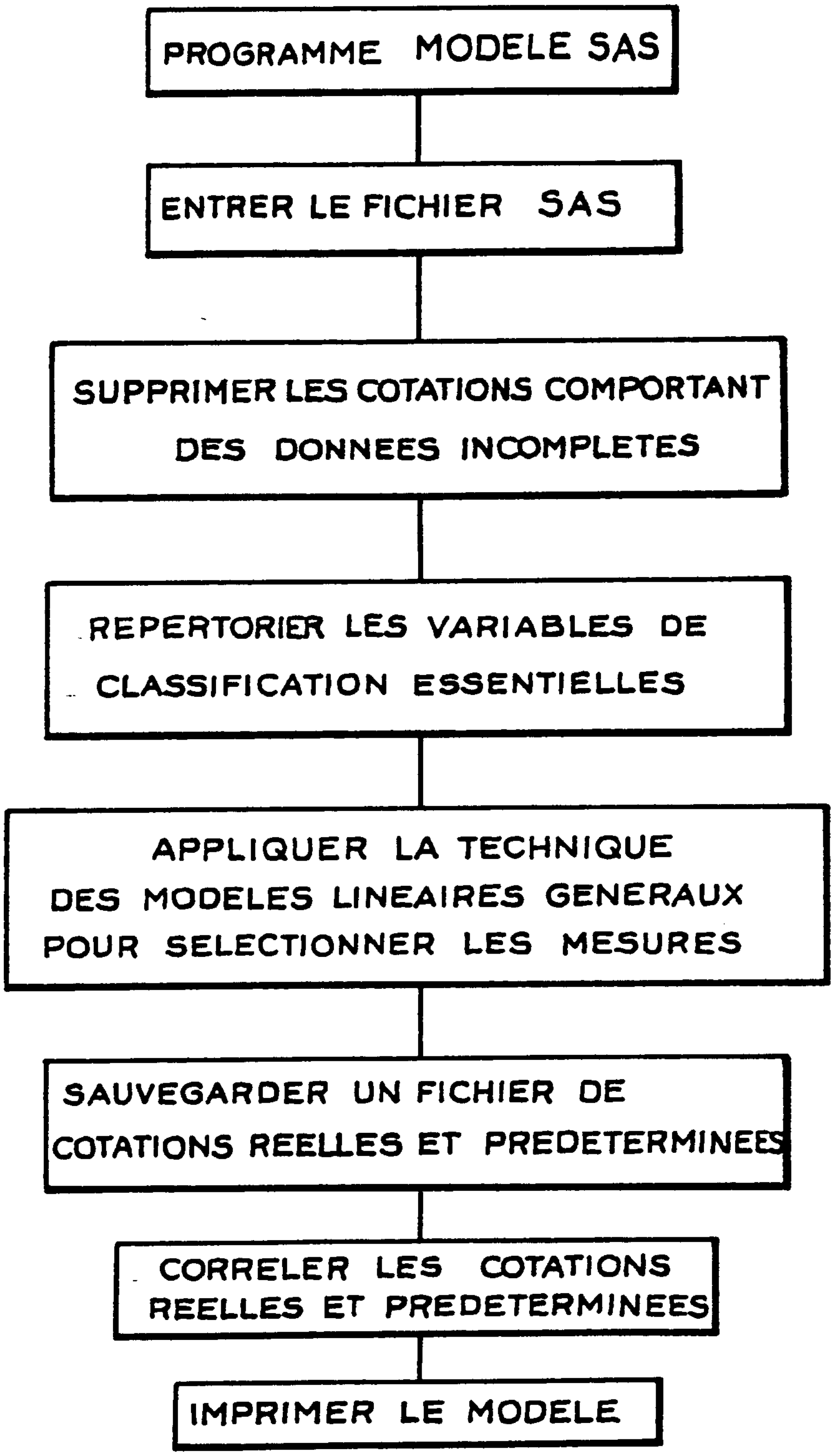


Le traitement commence par la lecture d'un fichier de cotation déterminé. L'enregistrement comprend à la fois l'instant auquel l'observateur a demandé la cotation et l'intervalle de temps entre la demande et la réponse. Seul l'instant auquel l'observateur a demandé la cotation est pris en compte. Une seconde lui est ajoutée pour prendre en compte le temps nécessaire au pilote interrogé pour appuyer sur un bouton la de son boîtier 1. On obtient ainsi un temps cible.

Une fois le temps cible établi, les données avion sont lues et les mesures correspondantes totalisées jusqu'à ce temps cible. Une fois que le temps cible a été atteint sur la bande avion, les données cardiaques sont entrées pour chaque pilote et les mesures correspondantes calculées. Au total, et dans le cadre d'un exemple de réalisation préférée, 279 mesures sont obtenues à partir des données avion et 54 mesures sont dérivées des données cardiaques de chaque pilote et pour chaque cotation.

Afin de supprimer l'éventualité d'avoir trop de variables indépendantes, chaque mesure est soumise à un pré-filtrage à l'aide de techniques statistiques dites de régression multiple et par paliers. Un tiers des variables à la fois est introduit dans une régression par paliers contre une mesure appropriée de la cotation du pilote. La technique de régression procure les meilleurs moindres carrés linéaires pour toutes les mesures qui correspondent à ou dépassent un niveau de tolérance pré-défini.

Chacune des opérations par paliers rapporte de 15 à 20 mesures qui offrent la meilleure prévision de la cotation. Celles-ci sont ensuite introduites dans une régression finale par paliers pour produire le jeu de mesures utilisé finalement dans l'élaboration du modèle qui en résulte.

ELABORATION DU MODELE

L'élaboration du modèle proprement dit utilise en particulier la procédure des Modèles Généraux Linéaires (GLM) telle qu'elle est mise en oeuvre dans l'ensemble des statistiques SAS (Institut SAS, CARY, CAROLINE DU NORD, USA, 1982). Cettre technique permet la combinaison des mesures numériques continues issues de l'avion (données avion) et des données cardiaques avec des données discrètes, c'est-à-dire les paramètres de vol mentionnés plus haut.

En utilisant la procédure précitée, on relie conformément à l'invention, la charge de travail prédéterminée $PR_i$ aux paramètres de vol par une relation du type :

$$Yi = A1\,X1i + A2\,X2i + \ldots + Aj\,Xji + \ldots + An\,Xni + B1 + B2 + \ldots + Bk + \ldots + Bm + C \quad (M)$$

dans laquelle

- Yi est une variable représentative de la charge de travail prédéterminée PRi et liée à celle-ci par la formule citée plus haut,
- les Xij sont des variables représentatives des données avion et cardiaques précitées,
- les constantes Aj, Bk et C sont des coefficients multiplicatifs ou additifs caractéristiques du modèle, la valeur des coefficients Bk étant indicative des paramètres de vol précités. On calcule les coefficients Aj, Bk et C en appliquant, sur la base de la relation précitée, les méthodes statistiques dites de régression linéaire multiple et d'analyse de la variance à partir des valeurs cotées par le pilote de sa charge de travail et des données précitées et des paramètres de vol mesurés ou relevés au cours des vols d'essai.

La procédure "GLM" met en oeuvre une analyse du modèle de variation (ANOVA) lorsque des variables discrètes sont utilisées. La mathématique de l'analyse de l'approche de variation devient plus complexe que dans la condition du modèle de régression, et plus d'une solution devient possible (il n'y a probablement pas de groupe unique de coefficients). Ceci n'est pas considéré comme un désavantage dans le cadre de l'invention. La caractéristique la plus importante du modèle qui ressort de cette approche est qu'il est simple à calculer. Au lieu de ne trouver qu'un simple groupe de constantes multiplicatives comme dans le modèle de régression, l'analyse du modèle de variation conduit également à des coefficients additifs. Ils ne sont ajoutés à l'estimation du modèle que si la situation correspond à une catégorie particulière de variables discrètes (paramètres de vol).

Un exemple peut aider à clarifier la structure d'une analyse de modèle linéaire général de variation tel qu'il est fourni par l'invention. Supposons que le modèle (M) comprenne une variable continue, la position des volets (F), et une variable discrète, par exemple que le pilote soit le CM1 ou le CM2 (appelée désignation du pilote ou D). Le modèle résultant pour l'évaluation des charges de travail comprend alors les termes suivants :

- un coefficient qui devra être multiplié par la position des volets et ajouté soit à :
- un premier coefficient additif si le pilote aux commandes était le CM1 au moment de la mesure de F ou à
- un second coefficient additif différent si F a été mesurée quand le pilote CM2 était aux commandes et à
- une constante d'interception qui est ajoutée aux deux autres termes pour déterminer la prédiction définitive.

L'équation du modèle s'écrit alors sous la forme :

$$P = mF + (a1 \text{ si } D = CM1 \text{ ou } a2 \text{ si } D = CM2) + i$$

où P est la charge de travail prédéterminée, m est le coefficient multiplicateur pour la position des volets, les a sont les coefficients additifs pour le CM1 et le CM2 respectivement (les valeurs de D) et i est la constante d'interception.

En plus de l'utilisation des variables discrètes uniques dans les modèles de ce type, il est également possible d'utiliser des interactions entre des variables de classification. Par exemple, la contribution d'une interaction de condition de vol et de phase de vol peut être introduite comme une variable intéressante pour les prédictions. Cette interaction peut apporter des coefficients additifs pour des associations de phase et de condition, par exemple une urgence ou une panne au décollage, liste de vérification pendant la descente. Comme cela sera montré dans la discussion qui va suivre, les variables de classification et leurs coefficients d'interaction ont joué un rôle important dans le modèle élaboré prouvant encore davantage la valeur de l'approche du modèle linéaire général.

## CONTROLE STATISTIQUE DE LA VALIDITE DU MODELE

Plusieurs moyens d'analyse statistique décrivent la bonne adaptation du modèle linéaire aux données globales. La valeur la plus intéressante est la valeur "Multiple R". Cette statistique est le coefficient de corrélation entre les valeurs prédites de la variable dépendante calculée par le modèle, c'est-à-dire la charge de travail, et les valeurs réelles. Dans l'exemple, le Multiple R représente la corrélation entre les cotations des charges de travail réelles données par les pilotes et transformées en utilisant la formule décrite plus haut et les valeurs prédites de la cotation transformée. La valeur au carré du Multiple R peut être aussi directement interprétée comme la proportion de variation dans la variable dépendante (valeurs transformées) expliquée par le modèle.

L'importance statistique du modèle tout entier peut être testée en utilisant une valeur F calculée. La valeur F représente le rapport de variation expliqué par le modèle, ses degrés de liberté par rapport à l'erreur ou au reste qu'il n'explique pas, et ses degrés de liberté. Lorsque l'importance d'une valeur F est testée, des niveaux de probabilité de 0,05 (5% de chances pour qu'une adaptation aussi bonne que celle du modèle ait pu se produire) sont souvent acceptés comme significatifs au point de vue statistique. Des valeurs de probabilité de 0,01 au moins laissent peu de doute quant à l'importance statistique du modèle qui n'était sans doute pas dû au hasard.

Un modèle doit être significatif au point de vue statistique avant de pourvoir être jugé comme valable. Toutefois, une valeur F significative au point de vue statistique n'est pas une garantie de validité. Elle signifie simplement que le modèle élaboré a su prédire mieux que le hasard les données dont il a été issu. Une validation sur un échantillon indépendant, c'est-à-dire un échantillon de mesures non utilisées dans le calcul du modèle, est nécessaire pour prouver la validité. La méthode des "moitiés partagées" dont les étapes sont schématisées sur la figure 10 est utilisable pour démontrer la validité du modèle. Selon cette méthode, la moitié des données recueillies pendant les vols d'essai est utilisée pour l'élaboration du modèle tandis que l'autre moitié est utilisée pour sa validation c'est-à-dire que pour cette seconde moitié, on calcule les valeurs prédéterminées de charge de travail au moyen de la relation précitée et on les compare aux valeurs réelles des cotations. On peut, en variante, réaliser des vols spéciaux pendant lesquels on relève des données utilisables pour valider le modèle.

Le modèle préféré de l'invention est détaillé dans les tableaux IIIb et IV ci-après.

TABLEAU IIIb

| Variable $X_{ij}$ | COEFFICIENT MULTIPLICATIF $A_j$ |
|---|---|
| Logarithme décimal de l'angle de roulis (128)** | 0,05771089 |
| Taux d'inversions de la vitesse aérodynamique (64) | 0,00114733 |
| Taux d'inversions de l'angle d'incidence (64) | -0,00403249 |
| Taux d'inversions de la vitesse N1 du moteur 1(128) | -0,00327516 |
| Vitesse N1 du moteur N1 (128) | -0,00107951 |
| Logarithme décimal du débattement de la gouverne de direction (32) | 0,00967576 |
| Taux de passage par zéro de l'angle de roulis élevé au carré (128) *** | 0,00029009 |
| Logarithme décimal du nombre de commandes de vol automatiques enclenchées (I) | -0,13144402 |
| Taux de passage par zéro de la vitesse de roulis (128) | 0,00888219 |
| Taux de passage par zéro de la vitesse de roulis élevé au carré (128) *** | -0,00026902 |
| Pilote testé - Différence RR par rapport à la moyenne de référence (128) | -0,00202818 |
| Pilote testé - Poids de référence Sigma RR2 (64) | 0,00365653 |
| Pilote testé - Valeur RR brute (8) | 0,00031228 |
| Pilote testé - Résidus de régression RR sur 32 battements (I) | 5,3414072E-06 |
| Pilote non-testé - Valeur RR brute (8) | -0,00037668 |
| Pilote non-testé - Différence RR par rapport à la moyenne sur 16 battements (128) | 0,01038512 |
| Pilote non-testé - Différence RR par rapport à la moyenne de référence (64) | 0,11703052 |
| Pilote non testé - Poids de référence Sigma $RR_1$ (64) | -0,26649027 |
| Pilote non-testé - Poids de référence Sigma $RR_2$ (64) | 0,15181157 |
| Pilote non-testé - Différence par rapport à la moyenne sur 32 battements (128) | -0,01318688 |
| Pilote non testé - Résidus de régression RR sur 32 battements (I) | -0,00326222 |

** La valeur entre parenthèses est la constante de temps en secondes pour la moyenne mobile exponentielle. "I" indique une valeur instantanée.

*** Ces mesures sont utilisées en multipliant la mesure par elle-même avant la multiplication par le coefficient.

## TABLEAU IV

| PARAMETRES DE VOL | COEFFICIENT ADDITIF Bk |
|---|---|
| Estimation par le pilote CM1 aux commandes | -0,01128010 |
| Estimation par le pilote CM1 non aux commandes | -0,03695012 |
| Estimation par le pilote CM2 aux commandes | -0,02018463 |
| Estimation par le pilote CM2 non aux commandes | 0,00000000 |
| Deux systèmes ECAM en panne (aucun système ECAM en fonctionnement ) | 0,03846630 |
| Un système ECAM en panne (un système ECAM en fonctionnement) | -0,00036457 |
| Deux systèmes ECAM en fonctionnement, | 0,00000000 |
| Remise des gaz ou descente rapide avec les deux FMS (système de gestion de vol) en fonctionnement | 0,00000000 |
| Préroulage avec les deux FMS en panne | -0,01271110 |
| Préroulage avec un FMS et un FMS en fonctionnement | -0,22427695 |
| Préroulage avec les deux FMS en fonctionnement | 0,00000000 |
| Roulage avant décollage avec les deux FMS en panne | 0,01688276 |
| Roulage avant décollage avec un FMS en panne et un FMS en fonctionnement | 0,07965894 |
| Roulage avant décollage avec les deux FMS en fonctionnement | 0,00000000 |
| Décollage avec les deux FMS en panne | -0,01649307 |
| Décollage avec un FMS en panne et un FMS en fonctionnement | -0,02033955 |
| Décollage avec les deux FMS en fonctionnement | 0,00000000 |
| Montée avec les deux FMS en panne | -0,03001335 |
| Montée avec un FMS en panne et un FMS en fonctionnement | 0,01695141 |
| Montée avec les deux FMS en fonctionnement | 0,00000000 |
| Croisière avec les deux FMS en panne | 0,05614202 |
| Croisière avec un FMS en panne et un FMS en fonctionnement | -0,10278220 |
| Croisière avec les deux FMS en fonctionnement | 0,00000000 |
| Descente avec les deux FMS en panne | 0,03471076 |
| Descente avec un FMS en panne et un FMS en fonctionnement | 0,01862299 |
| Descente avec les deux FMS en fonctionnement | 0,00000000 |

TABLEAU IV (suite)

| PARAMETRE DE VOL | COEFFICIENT ADDITIF Bk |
|---|---|
| Panne ou Urgence y compris Incapacité du pilote CM1 | 0,04277797 |
| Liste de vérification pour Panne ou Urgence | 0,06829986 |
| Liste de vérification pendant un vol normal | 0,03892804 |
| Vol normal sans liste de vérification | 0,00000000 |
| Remise des Gaz ou Descente d'Urgence | 0,05458590 |
| Pré-roulage | - 0,09502411 |
| Roulage avant décollage | - 0,07419961 |
| Décollage | 0,02750070 |
| Montée | 0,02952791 |
| Croisière | 0,01699097 |
| Descente | 0,00673707 |
| Approche | 0,03832675 |
| Atterrissage | 0,03482687 |
| Roulage après atterrissage | 0,00000000 |
| Approche avec les deux FMS en panne | -0,1405300 |
| Approche avec un FMS en panne et un FMS en fonctionnement | -0,04206698 |
| Approche avec les deux FMS en fonctionnement | 0,00000000 |
| Atterrissage avec les deux FMS en panne | -0,07434618 |
| Atterrissage avec les deux FMS en fonctionnement | 0,00000000 |
| Roulage après atterrissage avec les deux FMS en panne | -0,11597344 |
| Roulage après atterrissage avec un FMS en panne et un FMS en fonctionnement | -0,07514224 |
| Roulage après atterrissage avec les deux FMS en fonctionnement | 0,00000000 |
| Remise des gaz ou descente d'urgence avec automanette enclenchée | 0,00000000 |
| Préroulage avec automanette non enclenchée | 0,18152502 |
| Préroulage avec automanette enclenchée | 0,00000000 |
| Roulage avec automanette non enclenchée | -0,10494458 |
| Roulage avec automanette enclenchée | 0,00000000 |
| Décollage avec automanette non enclenchée | -0,3796761 |
| Décollage avec automanette enclenchée | 0,00000000 |

TABLEAU IV (suite)

| | |
|---|---|
| Montée avec automanette non enclenchée | -0,02778540 |
| Montée avec automanette enclenchée | 0,00000000 |
| Croisière avec automanette non enclenchée | 0,13777431 |
| Croisière avec automanette enclenchée | 0,00000000 |
| Descente avec automanette non enclenchée | 0,07989134 |
| Descente avec automanette enclenchée | 0,00000000 |
| Approche avec automanette non enclenchée | 0,04462338 |
| Approche avec automanette enclenchée | 0,00000000 |
| Atterrissage avec automanette non enclenchée | -0,01322323 |
| Atterrissage avec automanette enclenchée | 0,00000000 |

Le tableau IIIb montre les coefficients multiplicatifs Aj et leurs variables ou mesures avion et cardiaques correspondantes.

Ces coefficients sont utilisés en multipliant leur valeur par la valeur de la mesure correspondante et en sommant les résultats pour les 21 mesures considérées (10 relatives à l'avion et 11 de nature cardiaque). Par exemple, le logarithme décimal de la moyenne exponentielle à 128 secondes de l'angle de roulis est multiplié par 0,05771089 et le résultat ajouté au produit de la moyenne exponentielle à 64 secondes du taux d'inversion de la vitesse aérodynamique par 0,00114733 etc jusqu'à ce que les 21 mesures multipliées par leur coefficient respectif aient été sommées.

On notera que deux mesures (la moyenne exponentielle à 128 secondes du taux de passage par zéro de l'angle de roulis et la moyenne exponentielle à 128 secondes du taux de passage par zéro de la vitesse de roulis) interviennent au carré.

Le tableau IV fournit le détail des coefficients additifs du modèle. Ces coefficients sont associés à des variables d'état de vol et à leurs interactions. Ces variables sont :

- la condition de vol,
- la phase de vol,
- le rôle du pilote,
- le nombre de systèmes ECAM en fonctionnement, c'est-à-dire le nombre de systèmes de gestion électronique centralisée d'avion en fonctionnement au moment de la cotation,
- le nombre de systèmes FMS en fonctionnement, c'est-à-dire le nombre de systèmes de gestion de vol en fonctionnement au moment de la cotation.

La condition de vol, la phase de vol, le rôle du pilote et le nombre de systèmes ECAM en fonctionnement présentent un impact prépondérant dans le modèle. En effet, il y a un coefficient additif pour chaque niveau de ces variables d'état. Par exemple, il y a des coefficients additifs distincts pour la montée (une condition de vol), le pilote CM1 non aux commandes de l'avion (un niveau de rôle de pilote) et le cas de vol avec un système ECAM en panne. Le nombre de systèmes FMS fonctionnant et l'état de l'automanette interviennent en interagissant avec la phase de vol. Ainsi, un coefficient additif est calculé pour chaque combinaison de phase de vol et du nombre de systèmes FMS ou de l'état de l'automanette qui sont présents dans les données.

Les coefficients additifs sont utilisés en les ajoutant à la somme des produits des coefficients multiplicatifs par les mesures de vol associées si et seulement si la cotation des charges de travail correspond à la condition d'état de vol considérée. Par exemple, si la cotation correspond au pilote CM1 aux commandes de l'appareil pendant une liste de vérification de routine durant la descente avec l'automanette non enclenchée et tous les systèmes FMS et ECAM en fonctionnement, les coefficients suivants devront être ajoutés :

- CM1 pilote aux commandes de l'avion : -0,01128010,
  - liste de vérification durant un vol normal : -0,03892804
  - descente : 0,00673707

- les deux systèmes ECAM en fonctionnement : 0,00000000
- descente avec les deux systèmes FMS en fonctionnement : 0,00000000
- descente avec l'automanette non enclenchée : 0,07989134.

Il existe également une constante dite d'interception ayant une valeur de 0,18425416 qui est ajoutée pour chaque cotation.

Le multiple R du modèle en question est égal à 0,664 ce qui, compte tenu du nombre de variables dépendantes Xji utilisé relativement réduit, indique une trés bonne corrélation entre la valeur de charge de travail prédéterminée et la valeur cotée. La valeur F pour ce modèle vaut 15,21 avec 63 degrés de liberté, ce qui est significatif avec une probabilité inférieure à 0,0001. C'est-à-dire qu'il y a moins d'une chance sur 10000 pour qu'un modèle aussi bien adapté aux données relevées puisse être dû au hasard.

VALIDATION CONCRETE DU MODELE

La validation du modèle précitée sur le base de la méthode des moitiés partagées a également conduit à démontrer la fiabilité du modèle élaboré.

Sur la base des propriétés statistiques précitées du modèle, il est possible de conclure en toute confiance qu'un modèle valable a été élaboré. Ce modèle présente également un caractère pratique dans la mesure où les données utilisées pour son élaboration peuvent être aisément relevées en vol avec une instrumentation réduite. Dans ces conditions, on imagine que le modèle pourra être utilisé pour produire des cotations de charges de travail instantanées en vol ou sur simulateur à l'aide des calculateurs embarqués existants ou d'un microcalculateur programmé à cet effet.

Une autre façon d'évaluer le caractère pratique du modèle est d'examiner si les relations qu'il suggère sont conformes à ce qui est réellement vécu pendant les vols. On examine ainsi les coefficients pour voir si les relations suggérées sont raisonnables. Par exemple, le fait que le logarithme du nombre de commandes de vols automatiques enclenchées soit introduit dans le modèle, fournit un coefficient multiplicatif négatif. Ceci indique que la charge de travail est inversement liée au nombre de commandes de vols automatiques enclenchées ou à l'importance de l'aide reçue par les pilotes grâce aux commandes de vol automatiques, ce qui est conforme à la réalité.

On a également vérifié la validité du modèle en calculant une charge de travail prédéterminée pour chacune des cotations utilisées pour construire le modèle. Les figures 11 à 15 donnent des courbes comparatives de la charge de travail prédéterminée et de la charge de travail réelle ou subjective en fonction de différents paramètres de vol tels que la phase de vol, le rôle du pilote ou les scénarios de vol.

Les scénarios de vol en question sont ceux énumérés dans le tableau V ci-après. Ces courbes permettent d'apprécier la précision du modèle élaboré.

TABLEAU V
DESCRIPTION DES SCENARIOS DE VOL

| N° DE SCENARIO | EQUIPEMENT DE LA MEL (1) | PANNE | CONSEQUENCES |
|---|---|---|---|
| 1A | - générateur moteur gauche<br>- commande de temps automatique poste | Aucune | - commande manuelle de température poste |
| 1B | - CRT (2) gauche affichage navigation<br>- commande auto temp. groupe 1 | Aucune | - commande manuelle temp. sortie groupe |
| 1C | - CRT ECAM gauche<br>- les deux FMS | Aucune | - navigation traditionnelle |
| 1D | - TCC (3)<br>- FMS gauche<br>- Radio altimètre 1 | - en croisière-panne radio altimètre 2 | - activation manuelle manette des gaz |
| 2 | - TRP (4) | - début de descente : incapacité du pilote (à la discrétion de l'estimateur) | - commande manuelle manette des gaz<br>- conduite par un seul pilote |
| 3A | - FAC 1 (5)<br>- FAC 1 | - début de la descente: panne moteur gauche<br>- à 2000 pieds remise des gaz à l'arrivée | - vol manuel<br>- un moteur hors service |
| 3B | - FAC 2<br>- FCC 2 (6)<br>- FMS gauche | - pendant la croisière: panne FMS droit<br>- début de descente : panne moteur gauche | - vol manuel<br>- un moteur hors service<br>- navigation traditionnelle |
| 4 | Aucun | - 5mn avant la descente : fumée électronique (soute électronique) | - vol avec informations réduites<br>- application procédure fumée électronique |
| 5A | - les 2 CRT ECAM | - pendant la croisière<br>.Panne pompe carburant<br>.Panne réchauffage pitot co-pilote<br>.Panne réchauffage glaces<br>.Panne système press<br>.Restitution des systèmes après identification pannes et application C/L | - démonstration de lecture et surveillance des systèmes avec perturbations de la gestion de vol normale |

TABLEAU V (suite)

| | | | |
|---|---|---|---|
| 5B | - SDAC (7) | - en croisière : panne FWC1<br>- début de descente : panne de pressurization | - démonstration de lecture et surveillance des systèmes avec perturbation de la gestion de vol normale |
| 5C | - FWC1 (8) | - pendant la croisière :<br>.panne pompe carburant<br>.panne réchauffage pitot co-pilote<br>.panne réchauffage glaces<br>.panne système de pressurisation<br>.restitution des systèmes après identification pannes et application C/L | - démonstration de lecture et surveillance des systèmes avec perturbation de la gestion de vol normale |
| 6 | - PMC (9)<br>- Système pressurisation 1 | - juste avantTOD (10) panne du système pressurisation 2 | - descente rapide suivie d'un atterrissage en diversion/dégagement |

(1) Liste d'équipement minimale (Minimum equipment list)

(2) Tube cathodique (Cathodic ray tube)

(3) Calculateur de commande de poussée (Trust control computer)

(4) Afficheur de poussée (Trust rating panel)

(5) Calculateur de protection du domaine de vol (Flight augmentation computer)

(6) Calculateur de commande de vol (Flight control computer)

(7) Concentrateur-convertisseur digital analogique

(8) Calculateur d'alarme de vol (Flight warning computer)

(9) Calculateur de gestion des performances (Performance management computer)

(10) Point de descente (Top of descent)

Afin de fournir une estimation de l'importance des capacités de prévision qui pourraient être perdues si les mesures de rythme cardiaque n'étaient pas introduites dans l'élaboration du modèle, un deuxième modèle n'utilisant que les données avion et des paramètres d'état a été élaboré. Les variables utilisées pour ce modèle et les coefficients correspondants sont énumérés dans le tableau VI ci-après. Bien que ce modèle simplifié se soit révélé significatif au plan statistique, ses capacités de prédiction sont inférieures à celles du modèle préféré de l'invention. Le multiple R dudit modèle n'est que de 0,52794 et cette valeur de R doit être jugée trop faible pour pouvoir considérer que le modèle simplifié en question présente une fiabilité suffisante.

## Tableau VI

COEFFICIENTS DU MODELE N'UTILISANT QUE LES DONNEES AVION
COEFFICIENTS MULTIPLICATIFS*

| MESURE | COEFFICIENT MULTIPLICATIF |
|---|---|
| Logarithme Décimal de l'Angle de Roulis (128)** | 0.05834188 |
| Taux d'Inversions de Valeurs anémométriques (64) | 0.00093520 |
| Logarithme Décimal d'Angle d'Incidence (16) | 0.01313701 |
| Taux d'Inversions d'Angle d'Incidence (8) | 0.00072914 |
| Taux d'Inversions d'Angle d'Incidence (64) | -0.00516258 |
| N1 Moteur ≠ 1 Taux d'Inversions (128) | -0.00033918 |
| Angle de la Manette des Gaz ≠ 1 Inversions (128) | 0.00113424 |
| Différence Absolue entre Inversions d'Angles de Manette Poussée (64) | -0.00089320 |
| Logarithme Décimal du Nombre de Modes AFC (CADV) engagés (I) | -0.04726963 |
| Logarithme Décimal du Débattement de l'Empennage Horizontal (32) | -0.03979384 |
| Logarithme Décimal de l'Ordre de Tangage du Directeur de Vol (8) | -0.01314656 |
| Logarithme Décimal du Débattement de la Gouverne de Direction(32) | 0.01824641 |
| Taux d'Inversions de Débattement de la Gouverne de Direction (32) | 0.00070730 |
| Taux d'Inversions d'Angle de Tangage (8) | -0.00030736 |
| Logarithme Décimal d'Accélération Longitudinale (32) | 0.04581542 |
| Valeur jusqu'à zéro inclus de l'Accélération Longitudinale (16) | 0.00238442 |
| Taux d'Inversions d'Accélération Longitudinale (16) | -0.00060730 |
| Logarithme Décimal de la Position des Volets (I) | 0.00325275 |
| Logarithme Décimal de la Vitesse de Tangage (128) | 0.00425131 |
| Valeur jusqu'à zéro inclus de la Vitesse de Tangage (64) | -8.9090386E-05 |
| Valeur jusqu'à zéro inclus de la Vitesse de Roulis (128) | -0.00207023 |
| Taux d'Inversions d'Accélération Verticale (16) | 0.00028602 |

* Ces coefficients sont utilisés en multipliant la valeur absolue de la mesure par le coefficient puis en totalisant toutes les résultantes. Les coefficients annotés de "E" sont lus comme la valeur précédant "E" multipliée par 10 à la puissance suivant "E".

** La valeur entre parenthèses est la constante de temps en secondes pour la moyenne mobile exponentielle. "(I)" indique une valeur instantanée plutôt qu'une moyenne mobile.

## Tableau VI (suite)

COEFFICIENTS DU MODELE N'UTILISANT QUE
LES DONNES AVION
COEFFICIENTS ADDITIFS ***

| CONDITION D'ESTIMATION DE CHARGE DE TRAVAIL*** | COEFFICIENT ADDITIF |
|---|---|
| Panne ou Urgence y compris Incapacité du CM1 | 0.08752674 |
| Checklist pour Panne ou Urgence | 0.03175946 |
| Checklist en Vol Normal | -0.03447097 |
| Vol Normal sans Checklist | 0.00000000 |
| Remise des Gaz ou Descente en Urgence | 0.08589053 |
| Pré-roulage | -0.33573995 |
| Roulage avant Décollage | -0.04527509 |
| Décollage | 0.00167179 |
| Montée | -0.04318535 |
| Croisière | -0.00204135 |
| Descente | 0.05925916 |
| Approche | 0.04052923 |
| Atterrissage | 0.07862515 |
| Roulage après Atterrissage | 0.00000000 |
| Panne/Urgence en Pré-Roulage | 0.20938602 |
| Panne/Urgence en Roulage avant Décollage | 0.30883981 |
| Panne/Urgence en Montée | -0.10548680 |
| Panne/Urgence en Croisière | 0.02265858 |
| Panne/Urgence en Descente | -0.05014735 |
| Panne/Urgence pendant l'Atterrissage | 0.02748625 |
| Panne/Urgence en Roulage après Atterrissage | 0.00000000 |
| Checklist d'Urgence en Croisière | 0.18715066 |
| Checklist d'Urgence en Descente | 0.03320660 |
| Checklist d'Urgence en Approche | 0.01275090 |
| Checklist d'Urgence pendant l'Atterrissage | 0.00000000 |
| Checklist normale en Pré-Roulage | 0.09255541 |
| Checklist normale en Roulage avant Décollage | 0.06003368 |
| Checklist normale en Montée | 0.07289595 |
| Checklist normale en Croisière | 0.12555574 |
| Checklist normale en Descente | 0.05839350 |
| Checklist normale en Approche | 0.03380438 |
| Checklist normale pendant l'Atterrissage | -0.02361849 |
| Checklist normale en Roulage après Atterrissage | 0.00000000 |
| Remise des Gaz ou Descente d'Urgence pendant les Scénarios 3A ou 3B | -0.06047917 |
| Remise des Gaz ou Descente d'Urgence pendant les Scénarios 5A, 5B ou 5C | 0.00547621 |
| Remise des Gaz ou Descente d'Urgence pendant le Scénario 6 | 0.00000000 |
| Pré-Roulage pendant les Scénarios 1A, 1B, 1C ou 1D | 0.28182377 |
| Pré-Roulage pendant le Scénario 2 | 0.22478104 |
| Pré-Roulage pendant les Scénarios 3A ou 3B | 0.24351973 |
| Pré-Roulage pendant les Scénarios 5A, 5B ou 5C | 0.32000730 |

*** Les coefficients additifs sont totalisés avec la somme globale des produits des coefficients multiplicatifs et leurs mesures si l'estimation des charges de travail se fait dans les circonstances décrites dans la première colonne.

## Tableau VI (suite)

COEFFICIENTS DU MODELE N'UTILISANT QUE LES DONNES AVION
COEFFICIENTS ADDITIFS ***

| CONDITION DE L'ESTIMATION DE LA CHARGE DE TRAVAIL*** | COEFFICIENT ADDITIF |
|---|---|
| Roulage avant Décollage pendant les Scénarios 1A, 1B, 1C ou 1D | 0.01120371 |
| Roulage avant Décollage pendant le Scénario 2 | -0.09609632 |
| Roulage avant Décollage pendant les Scénarios 3A ou 3B | -0.01332814 |
| Roulage avant Décollage pendant les Scénarios 5A, 5B ou 5C | 0.02574656 |
| Roulage avant Décollage pendant le Scénario 6 | 0.00000000 |
| Décollage pendant les Scénarios 1A, 1B, 1C ou 1D | -0.03798744 |
| Décollage pendant le Scénario 2 | 0.05228940 |
| Décollage pendant les Scénarios 3A ou 3B | -0.02070000 |
| Décollage pendant les Scénarios 5A, 5B ou 5C | -0.01730159 |
| Décollage pendant le Scénario 6 | 0.00000000 |
| Montée pendant les Scénarios 1A, 1B, 1C ou 1D | 0.00563219 |
| Montée pendant le Scénario 2 | -0.03161124 |
| Montée pendant les Scénarios 3A ou 3B | 0.01951183 |
| Montée pendant les Scénarios 5A, 5B ou 5C | 0.07368082 |
| Montée pendant le Scénario 6 | 0.00000000 |
| Croisière pendant les Scénarios 1A, 1B, 1C ou 1D | 0.01689474 |
| Croisière pendant le Scénario 2 | 0.05292911 |
| Croisière pendant les Scénarios 3A ou 3B | 0.02314432 |
| Croisière pendant les Scénarios 5A, 5B ou 5C | 0.00938397 |
| Croisière pendant le Scénario 6 | 0.00000000 |
| Descente pendant les Scénarios 1A, 1B, 1C ou 1D | -0.03121730 |
| Descente pendant le Scénario 2 | 0.08713032 |
| Descente pendant les Scénarios 3A ou 3B | -0.02917356 |
| Descente pendant les Scénarios 5A, 5B ou 5C | -0.06624218 |
| Descente pendant le Scénario 6 | 0.00000000 |
| Approche pendant les Scénarios 1A, 1B, 1C ou 1D | 0.00523105 |
| Approche pendant le Scénario 2 | 0.07847470 |
| Approche pendant les Scénarios 3A ou 3B | -0.02288651 |
| Approche pendant les Scénarios 5A, 5B ou 5C | -0.00445375 |
| Approche pendant le Scénario 6 | 0.00000000 |
| Atterrissage pendant les Scénarios 1A, 1B, 1C ou 1D | -0.01729109 |
| Atterrissage pendant le Scénario 2 | -0.02280544 |
| Atterrissage pendant les Scénarios 3A ou 3B | -0.06915574 |
| Atterrissage pendant les Scénarios 5A, 5B ou 5C | 0.02389426 |
| Atterrissage pendant le Scénario 6 | 0.00000000 |
| Roulage après Atterrissage pendant les Scénarios 1A, 1B, 1C ou 1D | 0.03157858 |
| Roulage après Atterrissage pendant les Scénarios 3A ou 3B | 0.08575654 |
| Roulage après Atterrissage pendant les Scénarios 5A, 5B ou 5C | 0.06807901 |
| Roulage après Atterrissage pendant le Scénario 6 | 0.00000000 |
| Remise des Gaz ou Descente d'Urgence et Quotation du PF | -0.03006523 |
| Remise des Gaz ou Descente d'Urgence et Quotation du PNF | 0.00000000 |
| Pré-Roulage et Quotation du PF | 0.02320635 |
| Pré-Roulage et Quotation du PNF | 0.00000000 |
| Roulage avant Décollage et Quotation du PF | -0.03853689 |
| Roulage avant Décollage et Quotation du PNF | 0.00000000 |

Tableau VI (suite)

COEFFICIENTS DU MODELE N'UTILISANT QUE LES DONNEES AVION
COEFFICIENTS ADDITIFS***

| CONDITION DE L'ESTIMATION DE LA CHARGE DE TRAVAIL*** | COEFFICIENT ADDITIF |
|---|---|
| Décollage et Quotation du PF | 0.03387488 |
| Décollage et Quotation du PNF | 0.00000000 |
| Montée et Quotation du PF | -0.01280829 |
| Montée et Quotation du PNF | 0.00000000 |
| Croisière et Quotation du PF | -0.03603436 |
| Croisière et Quotation du PNF | 0.00000000 |
| Descente et Quotation du PF | 0.00672002 |
| Descente et Quotation du PNF | 0.00000000 |
| Approche et Quotation du PF | 0.00495925 |
| Approche et Quotation du PNF | 0.00000000 |
| Atterrissage et Quotation du PF | 0.04742134 |
| Atterrissage et Quotation du PNF | 0.00000000 |
| Roulage après Atterrissage et Quotation du PF | -0.04454874 |
| Roulage après Atterrissage et Quotation du PNF | 0.00000000 |
| INTERCEPTION (constante ajoutée dans toutes les estimations) | 0.11550363 |

PF Pilote aux commandes
PNF Pilote non aux commandes

La validité, la fiabilité et le réalisme du modèle préféré élaboré ne lui garantissent pas nécessairement un caractère d'universalité. Toutefois, aucune des variables utilisées pour l'élaboration du modèle ne présente un caractère susceptible d'empêcher ce modèle de s'appliquer à tout avion de ligne ayant des caractéristiques et des performances voisines de celle de l'AIRBUS A 310 utilisé pour l'élaboration du modèle préféré de la présente invention. En outre, la technique des modèles linéaires généraux utilisée peut permettre si nécessaire d'introduire le type d'avion comme variable dépendante.

APPLICATIONS DU MODELE

La fiabilité prévisionnelle du modèle et sa capacité à suivre les cotations des pilotes dans la gamme complète des conditions de vol normales et de secours et des phases de vol disponibles dans les données, fournissent trois catégories principales d'application.

Le modèle peut être utilisé comme aide à la mise au point d'un nouvel avion. Un des avantages essentiels de tout modèle mathématique est sa capacité à faciliter les prises de décision. Cependant, il est important de se rendre compte que les modèles ne font qu'aider cette prise de décision et sont sujets à erreur. Ils manipulent parfaitement les interactions entre des variables relativement nombreuses à condition que les relations entre ces variables soient bien comprises. Aucun effort de mise au point unique du système complexe "machine-humain" représenté par un avion de transport moderne ne pourrait espérer identifier et quantifier toutes ces relations. Les statistiques relatives au modèle indiquent qu'il prévoit nettement mieux que le hasard. Des personnes possédant une connaissance approfondie des systèmes avion devraient donc pouvoir utiliser le modèle pour améliorer le rendement des procédures d'utilisation.

La disponibilité d'un ou plusieurs modèles qui récapitulent les interactions complexes entre l'avion, les pilotes et le système de contrôle aérien et leur influence sur le jugement des pilotes quant à leur charge de travail peut permettre d'intervenir favorablement dans le processus de mise au point d'un nouvel avion. En fait plusieurs utilisations différentes sont prévues.

D'abord un modèle peut prendre part à n'importe quelle simulation d'avion nouveau ou modifié. Ceci permet aux concepteurs de prendre leurs décisions d'étude de système en fonction de leur influence probable sur la perception que les pilotes ont de leur charge de travail. A cet effet, il est plus facile d'utiliser un modèle qui ne comprend pas de données de rythme cardiaque comme celui décrit dans le tableau VI annexé, puisqu'en principe on ne recueille pas de données de rythme et variabilité cardiaques en condition de vol réel.

D'une façon similaire, ces modèles sont utilisables en tant que système d'investigation pour fournir des informations sur l'impact possible de la variation d'un ou plusieurs paramètres du modèle sur les charges de travail. Tous les paramètres de la base de données utilisée dans ce but sont alors maintenus aux valeurs servant à construire le modèle sauf quelques uns que l'on fait systématiquement varier pour déterminer leur effet sur la charge de travail prévue. Par exemple, les mesures liées à la commande moteur comme les inversions de l'angle de la manette des gaz et les inversions de la vitesse N1 pourraient varier pour déterminer la réduction de charge de travail possible si un calculateur de commande de poussée (TCC) supplémentaire était inclus pour continuer à assister les pilotes après une panne du TCC. L'examen rapide d'un vaste éventail de possibilités est une faculté particulière des modèles mathématiques. Dans ce cas, il est même facilité car le calcul du modèle et le stockage de toutes les données correspondantes peuvent s'effectuer sur un micro-calculateur de taille modeste.

Le modèle peut également être utilisé d'une façon inverse pour assister la définition d'objectifs d'étude. Cette troisième approche est similaire à la seconde décrite ci-dessus sauf que la valeur ou l'éventail des charges de travail représente une cible et qu'on fait varier un ou plusieurs paramètres jusqu'à ce que la cible soit atteinte dans les conditions de vol souhaitées. Par exemple, on peut se poser la question suivante :

"Quelle est l'importance de la réduction des inversions d'angle de la manette des gaz nécessaire pour maintenir la valeur de la charge de travail prévue à 5 ou moins même après des pannes de moteur ou de TCC?".

Une estimation correcte de la réduction nécessaire pourrait être obtenue en faisant dérouler des valeurs d'inversion d'angle de la manette des gaz tout en maintenant fixes les autres mesures aux valeurs des scénarios comportant des pannes de moteur et de TCC.

En ce qui concerne la formation et/ou le perfectionnement des pilotes, les considérations de charge de travail peuvent présenter au moins trois intérêts. D'abord lorsque les programmes de formation sont conçus et les protocoles pour les vols mis au point, un éventail de situations de charge de travail est souvent souhaité. Ceci permet d'assurer que les performances des pilotes en formation peuvent être observées dans diverses conditions. La disponibilité du modèle et de l'information qu'il contient lui permettent de concevoir des scénarios de formation qui atteignent le niveau souhaité de charge de travail subjective sans avoir besoin de faire faire des vols aux pilotes expérimentés et d'évaluer les scénarios proposés.

En second lieu le modèle dans le cadre de la formation peut servir à mesurer le moment où le palier de performance est atteint. On peut supposer que des pilotes inexpérimentés ont des rythmes cardiaques différents de ceux des pilotes expérimentés dont les données sont utilisées pour construire le modèle. En répétant le même scénario de vol au cours des diverses étapes de la formation et en comparant les résultats avec la prédiction du modèle, il peut être possible de déterminer le moment où un pilote est arrivé à la compétence suffisante pour donner des charges de travail subjectives équivalentes à celles des pilotes expérimentés. Evidemment, une base de données normative du résultat du modèle en fonction du pilote devrait être établie avant que cette utilisation dans le cadre de la formation puisse devenir totalement opérationnelle.

Enfin dans le même contexte, le modèle peut servir d'instrument de sélection. Les pilotes peuvent avoir tendance au cours d'entraînement à sous-estimer l'importance de la charge de travail qu'ils sont en train de subir pour tenter d'impressionner leurs instructeurs. Le modèle par contre n'est pas affecté par cette déformation puisqu'il est basé sur des variables que le pilote ne peut pas contôler consciemment, en particulier le rythme cardiaque. Le modèle peut donc être capable d'identifier les pilotes qui ressentent un niveau de charge de travail inacceptable même s'ils ne l'admettent pas. Cependant il est nécessaire d'accumuler une expérience opérationnelle considérable et une base de données signifcative pour la mise en pratique d'une telle utilisation.

Ainsi le modèle selon l'invention peut être utilisé pour contrôler les performances et le degré d'adaptation à un nouvel avion des pilotes.

L'application la plus directe du modèle est celle qui remplace le long et coûteux processus qui permet d'obtenir les cotations de charges de travail subjectives au cours de la certification de la composition de l'équipage de nouveaux avions. Le modèle ayant été élaboré dans des conditions de vol de certification présente une validité indiscutable dans ce contexte.

Si le modèle est utilisé à la place des vols de certification , les données peuvent être acquises pendant que l'avion effectue des essais en vol, par exemple pendant d'autres parties de la campagne de certification et la présentation aux compagnies et aux services officiels. A partir de ces données, un profil des cotations de charges de travail prédites peut être obtenu. Ce profil peut être comparé aux cotations réelles ou prédites des avions précédemment certifiés. Il serait nécessaire d'effectuer des vols supplémentaires spécifiques pour mesurer la charge de travail uniquement afin d'obtenir des prédictions sur les situations, c'est-à-dire les urgences qui ne sont pas démontrées par les vols précités.

Le modèle utilisé pendant les vols de certification peut aussi être utilisé de manière très profitable pour remplacer les cotations subjectives. Il est démontré que les cotations subjectives sont soumises à des différences individuelles appréciables entre les pilotes y compris à des réactions différentes face à des situations de vol différentes. Actuellement, il n'existe pas d'autre moyen d'expliquer ou de contrôler ces différences que de faire exécuter la même manoeuvre par plusieurs pilotes et de faire la moyenne de leurs cotations respectives. Si on considère, par exemple, ce qui se passerait si un pilote sur un vol donné lors d'une manoeuvre donnait une cotation de charge de travail subjective de 7, les conséquences d'une erreur de cotation pourraient être très sérieuses. Il serait nécessaire de savoir immédiatement si cette cotation était réelle, c'est-à-dire si c'était une cotation à laquelle on pouvait s'attendre de la part d'autres pilotes mis dans les mêmes conditions. Le modèle indiquerait que cette cotation était erronée, ou bien il pourrait mettre en évidence la source de la charge de travail excessive.

Le modèle selon l'invention peut encore être mis en oeuvre pour déterminer objectivement le nombre et la composition du personnel navigant technique nécessaire sur un appareil déterminé.

La présente invention démontre par conséquent qu'un modèle pouvant prédéterminer la charge de travail d'un pilote d'avion peut être élaboré à partir de paramètres objectifs de vol et présenter les capacités de prédétermination suffisantes pour être d'une utilisation pratique. Le modèle obtenu est un moyen de prédétermination valable et fiable des cotations subjectives faites par les pilotes.

Bien entendu, un tel modèle pourrait être également utilisé pour prédéterminer la charge de travail d'un pilote d'un autre type d'aéronef tel qu'un hélicoptère ou même encore d'un pilote automobile, de navette spatiale, de fusée ou de navire.

## Revendications

**1.** Procédé d'élaboration d'un modèle statistique pour déterminer la charge de travail d'un pilote d'aéronef, notamment d'un avion de type commercial, en fonction de paramètres objectifs de vol, le procédé comprenant les étapes suivantes :

a) on définit un ensemble de paramètres objectifs de vol prédéterminés correspondant à différentes données de vol présélectionnées de l'aéronef, les conditions de vol de l'aéronef et les phases de vol ;

b) on génère un signal pour demander au pilote durant un vol réel ou simulé de l'aéronef d'établir une cotation de sa charge de travail au moyen d'une échelle préétablie,

c) on enregistre dans une mémoire la cotation de la charge de travail établie par le pilote, en réponse au signal,

d) on mesure la valeur de données significatives desdits paramètres de vol lorsque le signal ci-dessus est généré,

e) on enregistre dans une mémoire les valeurs mesurées ci-dessus en même temps que l'étape (c),

f) on répète les étapes (b) à (e) au moins une fois à chaque phase de vol prédéterminée,

g) on établit finalement une corrélation automatique entre la cotation consignée de la charge de travail, les valeurs consignées ci-dessus, et les paramètres de vol pour élaborer un modèle statistique de la charge de travail du pilote, en fonction des paramètres de vol.

**2.** Procédé conforme à la revendication 1, caractérisé en ce qu'on relie la charge de travail prédéterminée aux paramètres de vol par une relation du type:

$$Yi = A1\,Xi1 + A2\,Xi2 + \ldots + Aj\,Xij + \ldots + An\,Xin + B1 + B2 + \ldots + Bk + \ldots + Bm + C \quad (M)$$

dans laquelle :

. Yi est une variable représentative de la charge de travail prédéterminée,

. les Xij sont des variables représentatives des données significatives d'un premier ensemble de paramètres de vol,

. les constantes Aj, Bk et C sont des coefficients multiplicatifs ou additifs caractéristiques du modèle précité, la valeur des coefficients Bk étant indicative d'un second ensemble de paramètres de vol, et en ce qu'on calcule les coefficients Aj, Bk et C en appliquant, sur la base de la relation précitée, les méthodes statistiques dites de régression linéaire multiple et d'analyse de la variance à partir de valeurs cotées par le pilote de sa charge de travail et des données précitées et des paramètres de vol mesurés ou relevés au cours du vol précité.

**3.** Procédé conforme à la revendication 2, caractérisé en ce que les variables Xij sont indicatives de données de vol relatives à l'aéronef proprement dit et en ce que les paramétres de vol dont dépend la valeur des coefficients additifs $B_k$ sont les conditions de vol et de pilotage de l'aéronef et la phase de vol à l'instant correspondant à la mesure des données précitées.

**4.** Procédé conforme à la revendication 3, caractérisé en ce que les données de vol relatives à l'aéronef et les paramètres de vol déterminant les coefficients Bk utilisés pour l'élaboration du modèle précité sont successivement énumérés aux tableaux ci-après:

| DONNEE AERONEF | UNITE | PLAGE UTILE |
|---|---|---|
| Débattement de la gouverne de direction | Degrés | +/- 180 |
| Angle de roulis | Degrés | +/- 180 |
| Vitesse de roulis (corps) | Degrés/Sec | +/- 128 |
| Vitesse aérodynamique | Noeuds | 15 à 450 |
| Angle d'incidence | Degrés | +/- 60 |
| Vitesse N1 du moteur 1 | t/m | 0 à 4400 |

| N° DE DONNEE | DONNEE (COMMANDES DE VOL AUTOMATIQUES) |
|---|---|
| 23 | Altitude |
| 24 | Vitesse Verticale ($V_z$) |
| 25 | Arrondi |
| 26 | Directeur de Décollage (remise des gaz) |
| 27 | Directeur de Décollage (Décollage) |
| 28 | Changement de Niveau |
| 29 | Radioalignement de Site (Glide Slope) |
| 30 | Modes longitudinaux - Suivi |
| 31 | Modes longitudinaux - Capture |
| 32 | Navigation |
| 33 | Tenue de Cap |
| 34 | Sélection de Cap |
| 35 | Radioalignement d'Azimuth (Localizer) |
| 36 | Roulage |
| 37 | Décollage (Lacet) |
| 38 | Roulage (Remise des Gaz) |
| 39 | Modes latéraux - Capture |
| 40 | VOR |
| 41 | Modes latéraux - Suivi |
| 42 | Alignement |
| 43 | Conditionnement Moteur Pilotage Transparent |
| 44 | Commande Conditionnement Moteur |

PARAMETRES DE VOL

Panne ou Urgence y compris Incapacité du pilote CM1
Liste de vérification pour Panne ou Urgence
Liste de vérification pendant un vol normal
Vol normal sans Liste de vérificatton
Remise des gaz ou Descente d'Urgence
Pré-roulage
Roulage avant Décollage
Décollage
Montée
Croisière
Descente
Approche
Atterrissage
Roulage après Atterrissage
Estimation par le pilote CM1 aux commandes

Estimation par le pilote CM1 non aux commandes
Estimation par le pilote CM2 aux commandes
Estimation par le pilote CM2 non aux commandes
Deux systèmes ECAM (système électronique de gestion centralisée d'avion) en panne (aucun système ECAM en fonctionnement)
Un système ECAM en panne (un système ECAM en fonctionnement)
Deux systèmes ECAM en fonctionnement
Remise des gaz ou descente rapide avec les deux FMS (système de gestion de vol) en fonctionnement
Préroulage avec les deux FMS en panne
Préroulage avec un FMS en panne et un FMS en fonctionnement
Préroulage avec les deux FMS en fonctionnement
Roulage avant décollage avec les deux FMS en panne
Roulage avant décollage avec un FMS en panne et un FMS en fonctionnement
Roulage avant décollage avec les deux FMS en fonctionnement
Décollage avec les deux FMS en panne
Décollage avec un FMS en panne et un FMS en fonctionnement
Décollage avec les deux FMS en fonctionnement
Montée avec les deux FMS en panne
Montée avec un FMS en panne et un FMS en fonctionnement
Montée avec les deux FMS en fonctionnement
Croisière avec les deux FMS en panne
Croisière avec un FMS en panne et un FMS en fonctionnement
Croisière avec les deux FMS en fonctionnement
Descente avec les deux FMS en panne
Descente avec un FMS en panne et un FMS en fonctionnement
Descente avec les deux FMS en fonctionnement
Approche avec les deux FMS en panne
Approche avec un FMS en panne et un FMS en fonctionnement
Approche avec les deux FMS en fonctionnement
Atterrissage avec les deux FMS en panne
Atterrissage avec les deux FMS en fonctionnement
Roulage après atterrissage avec les deux FMS en panne
Roulage après atterrissage avec un FMS en panne et un FMS en fonctionnement
Roulage après atterrissage avec les deux FMS en fonctionnement
Remise des gaz ou descente d'urgence avec automanette enclenchée
Préroulage avec automanette non enclenchée
Préroulage avec automanette enclenchée
Roulage avec automanette non enclenchée
Roulage avec automanette enclenchée
Décollage avec automanette non enclenchée
Décollage avec automanette enclenchée
Montée avec automanette non enclenchée
Montée avec automanette enclenchée
Croisière avec automanette non enclenchée
Croisière avec automanette enclenchée
Descente avec automanette non enclenchée
Descente avec automanette enclenchée
Approche avec automanette non enclenchée
Approche avec automanette enclenchée
Atterrissage avec automanette non enclenchée
Atterrissage avec automanette enclenchée

**5.** Procédé conforme à l'une des revendications 3 ou 4, caractérisé en ce que les variables Xij sont également indicatives du rythme et de la variabilité cardiaques du pilote de l'aéronef que l'on mesure pendant ledit vol d'essai lors de la cotation faite par celui-ci.

**6.** Procédé conforme à l'une des revendications précédentes, caractérisé en ce que pour l'élaboration du modèle, on prend en compte la cotation de charge de travail faite par le pilote qui est aux commandes de l'aéronef et de son co-pilote ainsi que la position du pilote aux commandes de l'aéronef dans le poste de pilotage.

7. Procédé conforme à l'une des revendications précédentes, caractérisé en ce que l'échelle de cotation de charge de travail comprend six indices de cotation s'étendant de 2 à 7 et exprimant une charge de travail croissante.

8. Procédé conforme à la revendication 7, caractérisé en ce que la charge de travail prédéterminée s'exprime suivant l'échelle precitée en fonction de la variable Yi par la relation :

$$PRi = 3 \times 10^{Yi} + 1$$

9. Procédé conforme à l'une des revendications 3 à 8, caractérisé en ce que les variables Xij comprennent les variables énumérées dans le tableau ci-après :

| Variable $X_{ij}$ |
|---|
| Logarithme décimal de l'angle de roulis (128) |
| Taux d'inversions de la vitesse aérodynamique (64) |
| Taux d'inversions de l'angle d'incidence (64) |
| Taux d'inversion de la vitesse N1 du moteur 1 |
| Vitesse N1 du moteur 1 (128) |
| Logarithme décimal du débattement de la gouverne de direction (32) |
| Taux de passage par zéro de l'angle de roulis <u>élevé au carré</u> (128) |
| Logarithme décimal du nombre de commandes de vol automatiques enclenchées |
| Taux de passage par zéro de la vitesse de roulis (128) |
| Taux de passage par zéro de la vitesse de roulis élevé au carré (128) |

10. Procédé conforme à l'une des revendications 5 à 9, caractérisé en ce que les variables Xij comprennent les variables énumérées dans le tableau ci-aprés :

| Variable $X_{ij}$ |
|---|
| Logarithme décimal de l'angle de roulis (128) |
| Taux d'inversions de la vitesse aérodynamique (64) |
| Taux d'inversions de l'angle d'incidence (64) |
| Taux d'inversion de la vitesse N1 du moteur 1 |
| Vitesse N1 du moteur 1 (128) |
| Logarithme décimal du débattement de la gouverne de direction (32) |
| Taux de passage par zéro de l'angle de roulis élevé au carré (128) |
| Logarithme décimal du nombre de commandes de vol automatiques enclenchées |
| Taux de passage par zéro de la vitesse de roulis (128) |
| Taux de passage par zéro de la vitesse de roulis élevé au carré (128) |
| Pilote testé - Différence RR par rapport à la moyenne de référence (128) |
| Pilote testé - Poids de référence Sigma RRR (64) |
| Pilote testé - Valeur RR Brute (8) |
| Pilote testé - Résidus de régression RR sur 32 Battements |
| Pilote non testé - valeur RR brute (8) |
| Pilote non-testé - Différence par rapport à la moyenne sur 16 battements (128) |
| Différence par rapport à la moyenne de référence (64) |
| Pilote non testé - Poids de référence Sigma $RR_1$ (64) |
| Pilote non-testé - Poids de référence Sigma $RR_2$ (64) |
| Pilote non-testé - Différence par rapport à la moyenne sur 32 battements (128) |
| Pilote non-testé - Résidus de régression RR sur 32 battements |

| $X_{ij}$ | COEFFICIENT MULTIPLICATIF $A_j$ |
|---|---|
| Logarithme décimal de l'angle de roulis (128) | 0,05771089 |
| Taux d'inversions de la vitesse aérodynamique (64) | 0,00114733 |
| Taux d'inversions de l'angle d'incidence (64) | -0,00403249 |
| Taux d'inversions de la vitesse N1 du moteur 1 | -0,00327516 |
| Vitesse N1 du moteur N1 (128) | -0,00107951 |
| Logarithme décimal du débattement de la gouverne de direction (32) | 0,00967576 |
| Taux de passage par zéro de l'angle de roulis élevé au carré (128) | 0,00029009 |
| Logarithme décimal du nombre de commandes de vol automatiques enclenchées | -0,13144402 |
| Taux de passage par zéro de la vitesse de roulis (128) | 0,00888219 |
| Taux de passage par zéro de la vitesse de roulis élevé au carré (128) | -0,00026902 |
| Pilote testé - Différence RR par rapport à la moyenne de référence (128) | -0,00202818 |
| Pilote testé - Poids de référence Sigma RRL2 (64) | 0,00365653 |
| Pilote testé - Valeur RR brute (8) | 0,00031228 |
| Pilote testé - Résidus de régression RR sur 32 battements | 5,3414072E-06 |
| Pilote non-testé - Valeur RR brute (8) | -0,00037668 |
| Pilote non-testé - Différence RR par rapport à la moyenne sur 16 battements (128) | 0,01038512 |
| Pilote non-testé - Différence RR par rapport à la moyenne de référence (64) | 0,11703052 |
| Pilote non testé - Poids de référence Sigma $RR_1$ (64) | -0,26649027 |
| Pilote non-testé - Poids de référence Sigma $RR_2$ (64) | 0,15181157 |
| Pilote non-testé - Différence par rapport à la moyenne sur 32 battements (128) | -0,01318688 |
| Pilote non testé - Résidus de régression RR sur 32 battements | -0,00326222 |

**11.** Procédé conforme à l'une des revendications 1 à 3, caractérisé en ce que les coefficients Aj et Bk sont respectivement énumérés selon les variables Xij et les paramètres de vol dans les tableaux ci-après et en ce que le coefficient C vaut 0,18425416.

| PARAMETRES DE VOL | COEFFICIENT ADDITIF Bk |
|---|---|
| Estimation par le pilote CM1 aux commandes | -0,01128010 |
| Estimation par le pilote CM1 non aux commandes | -0,03695012 |
| Estimation par le pilote CM2 aux commandes | -0,02018463 |
| Estimation par le pilote CM2 non aux commandes | 0,00000000 |
| Deux systèmes ECAM en panne (aucun système ECAM en fonctionnement) | 0,03846630 |
| Un système ECAM en panne (un système ECAM en fonctionnement) | -0,00036457 |
| Deux systèmes ECAM en fonctionnement, | 0,00000000 |
| Remise des gaz ou descente rapide avec les deux FMS (système de gestion de vol) en fonctionnement | 0,00000000 |
| Préroulage avec les deux FMS en panne | -0,01271110 |
| Préroulage avec un FMS et un FMS en fonctionnement | -0,22427695 |
| Préroulage avec les deux FMS en fonctionnement | 0,00000000 |
| Roulage avant décollage avec les deux FMS en panne | 0,01688276 |
| Roulage avant décollage avec un FMS en panne et un FMS en fonctionnement | 0,07965894 |
| Roulage avant décollage avec les deux FMS en fonctionnement | 0,00000000 |
| Décollage avec les deux FMS en panne | -0,01649307 |
| Décollage avec un FMS en panne et un FMS en fonctionnement | -0,02033955 |
| Décollage avec les deux FMS en fonctionnement | 0,00000000 |
| Montée avec les deux FMS en panne | -0,03001335 |
| Montée avec un FMS en panne et un FMS en fonctionnement | 0,01695141 |
| Montée avec les deux FMS en fonctionnement | 0,00000000 |
| Croisière avec les deux FMS en panne | 0,05614202 |
| Croisière avec un FMS en panne et un FMS en fonctionnement | -0,10278220 |
| Croisière avec les deux FMS en fonctionnement | 0,00000000 |
| Descente avec les deux FMS en panne | 0,03471076 |
| Descente avec un FMS en panne et un FMS en fonctionnement | 0,01862299 |
| Descente avec les deux FMS en fonctionnement | 0,00000000 |

| PARAMETRE DE VOL | COEFFICIENT ADDITIF Bk |
|---|---|
| Panne ou Urgence y compris Incapacité du pilote CM1 | 0,04277797 |
| Liste de vérification pour Panne ou Urgence | 0,06829986 |
| Liste de vérification pendant un vol normal | 0,03892804 |
| Vol normal sans liste de vérification | 0,00000000 |
| Remise des Gaz ou Descente d'Urgence | 0,05458590 |
| Pré-roulage | - 0,09502411 |
| Roulage avant décollage | - 0,07419961 |
| Décollage | 0,02750070 |
| Montée | 0,02952791 |
| Croisière | 0,01699097 |
| Descente | 0,00673707 |
| Approche | 0,03832675 |
| Atterrissage | 0,03482687 |
| Roulage après atterrissage | 0,00000000 |
| Approche avec les deux FMS en panne | -0,1405300 |
| Approche avec un FMS en panne et un FMS en fonctionnement | -0,04206698 |
| Approche avec les deux FMS en fonctionnement | 0,00000000 |
| Atterrissage avec les deux FMS en panne | -0,07434618 |
| Atterrissage avec les deux FMS en fonctionnement | 0,00000000 |
| Roulage après atterrissage avec les deux FMS en panne | -0,11597344 |
| Roulage après atterrissage avec un FMS en panne et un FMS en fonctionnement | -0,07514224 |
| Roulage après atterrissage avec les deux FMS en fonctionnement | 0,00000000 |
| Remise des gaz ou descente d'urgence avec automanette enclenchée | 0,00000000 |
| Préroulage avec automanette non enclenchée | 0,18152502 |
| Préroulage avec automanette enclenchée | 0,00000000 |
| Roulage avec automanette non enclenchée | -0,10494458 |
| Roulage avec automanette enclenchée | 0,00000000 |
| Décollage avec automanette non enclenchée | -0,3796761 |
| Décollage avec automanette enclenchée | 0,00000000 |

| PARAMETRES DE VOL | COEFFICIENT ADDITIF Bk |
|---|---|
| Montée avec automanette non enclenchée | -0,02778540 |
| Montée avec automanette enclenchée | 0,00000000 |
| Croisière avec automanette non enclenchée | 0,13777431 |
| Croisière avec automanette enclenchée | 0,00000000 |
| Descente avec automanette non enclenchée | 0,07989134 |
| Descente avec automanette enclenchée | 0,00000000 |
| Approche avec automanette non enclenchée | 0,04462338 |
| Approche avec automanette enclenchée | 0,00000000 |
| Atterrissage avec automanette non enclenchée | -0,01322323 |
| Atterrissage avec automanette enclenchée | 0,00000000 |

**12.** Dispositif pour la mise en oeuvre du procédé conforme à l'une des revendications 1 à 11, caractérisé en ce qu'il comprend :

des moyens pour générer, durant le vol, à des moments prédéterminés préalablement au vol, un signal demandant au pilote de coter sa charge de travail selon une échelle prédéterminée,

des moyens pour enregistrer dans une mémoire la cotation de charge de travail établie par le pilote,

des moyens pour mesurer des données significatives d'un ensemble prédéterminé de paramètres de vol, lors de l'émission du signal précité,

des moyens pour enregistrer dans une mémoire les données ci-dessus,

une base de temps pour synchroniser chaque cotation de charge de travail avec les données enregistrées correspondantes des paramètres de vol,

des moyens pour établir une corrélation entre la cotation de charge de travail et les données de paramètres de vol.

**13.** Dispositif conforme à la revendication 12, caractérisé en ce que les moyens pour enregistrer les cotations de charge de travail comprennent un boîtier (1) comprenant des moyens pour visualiser une demande de cotation.

**14.** Dispositif conforme à la revendication 13, caractérisé en ce qu'il comprend en outre des moyens (19, 19a, 19b) de mesure et d'enregistrement de l'électrocardiogramme des membres d'équipage (20), en synchronisme avec la base de temps de référence.

**15.** Dispositif conforme à l'une des revendications 12 à 14, caractérisé en ce qu'il comprend en outre des moyens de prise de vues (11, 15) du poste de pilotage, des moyens de visualisation (10) et d'enregistrement (14) de ces vues et des moyens d'incrustation (13) sur les moyens de visualisation (10) des données émanant des moyens (2) pour interroger sélectivement les membres d'équipage et des moyens (1) pour consigner les cotations de charge de travail de ces membres d'équipage.

**16.** Procédé conforme à l'une des revendications 1 à 11, caractérisé en ce qu'on utilise la courbe Yi = f(Xij) pour simuler l'influence d'une nouvelle caractéristique de l'aéronef sur la charge de travail de ses pilotes.

**17.** Procédé conforme à l'une des revendications 1 à 11, caractérisé en ce qu'on calcule à diverses reprises la charge de travail prédéterminée d'un pilote donné dans une situation de vol déterminée pour évaluer l'évolution dans le temps de ses performances sur un aéronef donné.

**Patentansprüche**

1. Verfahren zum Ausarbeiten eines statistischen Modells zum Bestimmen der Arbeitsbelastung eines Flugzeugpiloten, insbesondere eines Verkehrsflugzeugpiloten, als Funktion objektiver Flugparameter, wobei das Verfahren die folgenden Schritte umfaßt
   a) Definieren einer Gesamtheit vorbestimmter objektiver Flugparameter, die verschiedenen, vorab ausgewählten Flugdaten des Flugzeugs entsprechen, der Flugbedingungen des Flugzeugs und der Flugphasen;
   b) Erzeugen eines Signals, um den Pilot während eines realen oder simulierten Flugs des Flugzeugs aufzufordern, ein Maß seiner Arbeitsbelastung nach einem vorab ausgearbeiteten Maßstab anzugeben;
   c) Aufzeichnen des durch den Pilot auf das Signal hin angegebenen Maßes der Arbeitsbelastung in einem Speicher;
   d) Messen des Werts signifikanter Daten der Flugparameter während der Erzeugung des vorstehend genannten Signals;
   e) Aufzeichnen der vorstehend genannten gemessenen Werte zur selben Zeit, in der der Schritt c) ausgeführt wird in einem Speicher;
   f) zumindest einmaliges Wiederholen der Schritte b) bis e) bei jeder vorbestimmten Flugphase;
   g) endgültiges Festlegen einer automatischen Korrelation zwischen dem aufgezeichneten Maß der Arbeitsbelastung, den vorstehenden aufgezeichneten Werten und den Flugparametern zum Ausarbeiten eines statistischen Modells für die Arbeitsbelastung eines Piloten als Funktion der Flugparameter.

2. Verfahren nach Anspruch 1, dadurch gekennzeichnet, daß die vorbestimmte Arbeitsbelastung mit den Flugparametern durch folgende Beziehung verknüpft wird:
   $$Yi = A1\,Xi1 + A2\,Xi2 + \ldots + Aj\,Xij + \ldots + An\,Xin + B1 + B2 + \ldots + Bk + \ldots + Bm + C \quad (M)$$
   wobei:
   Yi eine für die vorbestimmte Arbeitsbelastung repräsentative Variable ist,
   Xij für die signifikanten Richtwerte einer ersten Gesamtheit von Flugparametern repräsentative Variable sind und
   die Konstanten Aj, Bk und C für das vorstehend genannte Modell charakteristische Multiplikations- oder Additionskoeffizienten sind, wobei die Koeffizienten Bk für eine zweite Gesamtheit von Parametern stehen, und daß die Koeffizienten Aj, Bk und C durch Anwenden mehrfacher linearer statistischer Regressionsverfahren und statistischer Varianzanalyseverfahren auf der Grundlage der vorstehend genannten Beziehung ausgehend von Werten, die durch den Pilot seiner Arbeitsbelastung zubemaßt werden und von den vorstehend genannten Richtwerten und den im Laufe des vorstehend genannten Flugs gemessenen oder festgehaltenen Flugparametern errechnet werden.

3. Verfahren nach Anspruch 2, dadurch gekennzeichnet, daß die Variablen Xij für Flugdaten in bezug auf das Flugzeug stehen, und daß die Flugparameter, von denen der Wert der additiven Koeffizienten Bk abhängt, die Flug- und Steuerbedingungen des Flugzeugs und die momentane Flugphase entsprechend der Messung der vorstehend genannten Daten sind.

4. Verfahren nach Anspruch 3, dadurch gekennzeichnet, daß die Flugdaten für das Flugzeug und die Flugparameter, welche die zur Ausarbeitung des vorstehend genannten Modells verwendeten Koeffizienten Bk bestimmen, in den folgenden Tabellen aufeinanderfolgend aufgezählt sind:

| Flugzeugdaten | Einheit | Nutzbereich |
|---|---|---|
| Steuerleitwerkverstellung | Grad | +/- 180 |
| Rollwinkel | Grad | +/- 180 |
| Rollgeschwindigkeit (Körper) | Grad/Sek. | +/- 128 |
| Aerodynamische Geschwindigkeit | Knoten | 15 - 450 |
| Neigungswinkel | Grad | +/- 60 |
| Geschwindigkeit N1 des Motors 1 | t/m | 0 - 4400 |

| Datennummer | Daten (automatische Flugbefehle) |
|---|---|
| 23 | Höhe |
| 24 | Vertikalgeschwindigkeit ($V_z$) |
| 25 | Kreisen zur Landung |
| 26 | Starteinstellung (Gasgeben) |
| 27 | Starteinstellung (Abheben) |
| 28 | Höhenänderung |
| 29 | Gleitweg (Glide-Slope) |
| 30 | Selbstgesteuerter Geradeausflug |
| 31 | Automatischer Geradeausflug |
| 32 | Navigation |
| 33 | Kurslage |
| 34 | Kurswahl |
| 35 | Funk-Azimuth-Bestimmung (Localizer) |
| 36 | Rollen |
| 37 | Start (in Schleifen) |
| 38 | Rollen (Gasgeben) |
| 39 | Geführter Seitenflug |
| 40 | VOR |
| 41 | Selbstbestimmter Seitenflug |
| 42 | Peilung |
| 43 | Motorsteuer-Regelungseinstellung |
| 44 | Motorsteuerbefehl |

FLUGPARAMETER

Defekt oder Notfall einschließlich Arbeitsunfähigkeit des Piloten CM1

Defekt- oder Notfallprüfliste

Prüfliste für den Normalflug

Normalflug ohne die Prüfliste

Gasgeben oder Notlandung

anfängliche Rollbewegung

Rollen vor dem Start
Start
Steigflug
Fliegen
Sinkflug
Anflug
Landung
Rollen nach der Landung
Bewertung durch den Piloten CM1 auf Befehle
Bewertung durch den Piloten CM1 ohne Befehle
Bewertung durch den Piloten CM2 auf Befehle
Bewertung durch den Piloten CM2 ohne Befehle
Beide ECAM-Systeme (zentrales elektronisches Flugzeugführungssystem) sind defekt (kein ECAM-System arbeitet)
Ein ECAM-System ist defekt (ein ECAM-System arbeitet)
Beide ECAM-Systeme arbeiten
Erneutes Gasgeben oder schneller Sinkflug mit zwei arbeitenden FMS (Flugführungssystem)
Anfängliches Rollen, wenn beide FMS defekt sind
Anfängliches Rollen, wenn ein FMS defekt ist und ein FMS arbeitet
Anfängliches Rollen, wenn beide FMS arbeiten
Rollen vor dem Start, wenn beide FMS defekt sind
Rollen vor dem Start, wenn ein FMS defekt ist und ein FMS arbeitet
Rollen vor dem Start, wenn beide FMS arbeiten
Starten, wenn beide FMS defekt sind
Starten, wenn ein FMS defekt ist und ein FMS arbeitet
Starten, wenn beide FMS arbeiten
Steigflug, wenn beide FMS defekt sind
Steigflug, wenn ein FMS defekt ist und ein FMS arbeitet
Steigflug, wenn beide FMS arbeiten
Fliegen, wenn beide FMS defekt sind
Fliegen, wenn ein FMS defekt ist und ein FMS arbeitet
Fliegen, wenn beide FMS arbeiten
Sinkflug, wenn beide FMS defekt sind
Sinkflug, wenn ein FMS defekt ist und ein FMS arbeitet
Sinkflug, wenn beide FMS arbeiten
Anflug, wenn beide FMS defekt sind
Anflug, wenn ein FMS defekt ist und ein FMS arbeitet
Anflug, wenn beide FMS arbeiten
Landen, wenn beide FMS defekt sind
Landen, wenn beide FMS arbeiten
Rollen nach der Landung, wenn beide FMS defekt sind
Rollen nach der Landung, wenn ein FMS defekt ist und ein FMS arbeitet
Rollen nach der Landung, wenn beide FMS arbeiten
Erneutes Gasgeben oder Notlandung bei eingeschaltetem Autopilot
Anfängliches Rollen bei nicht eingeschaltetem Autopilot
Anfängliches Rollen bei eingeschaltetem Autopilot
Rollen mit nicht eingeschaltetem Autopilot
Rollen mit eingeschaltetem Autopilot
Starten mit nicht eingeschaltetem Autopilot
Starten mit eingeschaltetem Autopilot
Steigflug mit nicht eingeschaltetem Autopilot
Steigflug mit eingeschaltetem Autopilot
Fliegen mit nicht eingeschaltetem Autopilot
Fliegen mit eingeschaltetem Autopilot
Sinkflug mit nicht eingeschaltetem Autopilot
Sinkflug mit eingeschaltetem Autopilot
Anflug mit nicht eingeschaltetem Autopilot
Anflug mit eingeschaltetem Autopilot

Landen mit nicht eingeschaltetem Autopilot
Landen mit eingeschaltetem Autopilot

5. Verfahren nach Anspruch 3 oder 4, dadurch gekennzeich net, daß die Variablen Xij außerdem für den Herzrhythmus und Herzrhythmusschwankungen des Flugzeugpiloten stehen, die während des genannten Versuchsflugs während der durch den Pilot vorgenommenen Bewertung gemessen werden.

6. Verfahren nach einem der vorangehenden Ansprüche, dadurch gekennzeichnet, daß für die Ausarbeitung des Modells die Bewertung der Arbeitsbelastung durch den das Flugzeug steuernden Pilot und seinen Copilot ebenso mit berücksichtigt wird wie die Position des das Flugzeug steuernden Piloten im Pilotensitz.

7. Verfahren nach einem der vorangehenden Ansprüche, dadurch gekennzeichnet, daß der Bewertungsgsmaßstab für die Arbeitsbelastung sechs Bewertungrichtziffern umfaßt, die von 2 bis 7 gehen und eine wachsende Arbeitsbelastung beim Flug ausdrücken.

8. Verfahren nach Anspruch 7, dadurch gekennzeichnet, daß die vorbestimmte Arbeitsbelastung sich entsprechend dem vorangehend genannten Maßstab als Funktion der Variablen Yi durch folgende Beziehung ausdrücken läßt:

$$PRI = 3 \times 10^{yi} + 1.$$

9. Verfahren nach einem der Ansprüche 3 bis 8, dadurch gekennzeichnet, daß die Variablen Xij die in der folgenden Tabelle aufgezählten Variablen umfassen:

| Variable Xij |
|---|
| Dezimaler Logarithmus des Rollwinkels (128) |
| Inversionshäufigkeit der aerodynamischen Geschwindigkeit (64) |
| Inversionshäufigkeit des Neigungswinkels (64) |
| Inversionshäufigkeit der Geschwindigkeit N1 des Motors 1 |
| Geschwindigkeit N1 des Motors 1 (128) |
| Dezimaler Logarithmus der Steuerleitwerkverstellung (32) |
| Zum Quadrat erhobene Nulldurchgangshäufigkeit des Rollwinkels (128) |
| Dezimaler Logarithmus der Flugbefehlsanzahl bei eingeschaltetem Autopilot |
| Nulldurchgangshäufigkeit der Rollgeschwindigkeit (128) |
| Zum Quadrat erhobene Nulldurchgangshäufigkeit der Rollgeschwindigkeit (128) |

10. Verfahren nach einem der Ansprüche 5 bis 9, dadurch gekennzeichnet, daß die Variablen Xij die in der folgenden Tabelle aufgezählten Variablen umfassen:

| Variable Xij |
|---|
| Dezimaler Logarithmus des Rollwinkels (128) |
| Inversionshäufigkeit der aerodynamischen Geschwindigkeit (64) |
| Inversionshäufigkeit des Neigungswinkels (64) |
| Inversionshäufigkeit der Geschwindigkeit N1 des Motors 1 |

Geschwindigkeit N1 des Motors 1 (128)

Dezimaler Logarithmus der Steuerleitwerkverstellung (32)

Zum Quadrat erhobene Nulldurchgangshäufigkeit des Rollwinkels (128)

Dezimaler Logarithmus der Flugbefehlsanzahl bei eingeschaltetem Autopilot

Nulldurchgangshäufigkeit der Rollgeschwindigkeit (128)

Zum Quadrat erhobene Nulldurchgangshäufigkeit der Rollgeschwindigkeit (128)

Untersuchter Pilot - Differenz RR zu dem Bezugsmittel (128)

Untersuchter Pilot - Referenzgewicht Sigma RRR (64)

Untersuchter Pilot - unverarbeiteter RR-Wert (8)

Untersuchter Pilot - Regressionsresiduum RR auf 32 Schläge

Nicht untersuchter Pilot - unverarbeiteter RR-Wert (8)

Nicht untersuchter Pilot - mittlere Differenz aus 16 Schlägen (128)

Nicht untersuchter Pilot - mittlere Bezugsdifferenz (64)

Nicht untersuchter Pilot - Bezugsgewicht Sigma $RR_1$ (64)

Nicht untersuchter Pilot - Bezugsgewicht Sigma $RR_2$ (64)

Nicht untersuchter Pilot - mittlere Differenz aus 32 Schlägen (128)

Nicht untersuchter Pilot - Regressionsresiduum RR auf 32 Schläge

---

| Xij | Multiplikationskoeffizient Aj |
|---|---|
| Dezimaler Logarithmus des Rollwinkels (128) | 0,05771089 |
| Inversionshäufigkeit der aerodynamischen Geschwindigkeit (64) | 0,00114733 |
| Inversionshäufigkeit des Neigungswinkels (64) | -0,00403249 |
| Inversionshäufigkeit der Geschwindigkeit N1 des Motors 1 | -0,00327516 |
| Geschwindigkeit N1 des Motors 1 (128) | -0,00107951 |
| Dezimaler Logarithmus der Steuerleitwerkverstellung (32) | 0,00967576 |
| Zum Quadrat erhobene Nulldurchgangshäufigkeit des Rollwinkels (128) | 0,00029009 |
| Dezimaler Logarithmus der Flugbefehlsanzahl bei eingeschaltetem Autopilot | -0,13144402 |
| Nulldurchgangshäufigkeit der Rollgeschwindigkeit (128) | 0,00888219 |
| Zum Quadrat erhobene Nulldurchgangshäufigkeit der Rollgeschwindigkeit (128) | -0,00026902 |
| Untersuchter Pilot - Differenz RR in bezug auf das Bezugsmittel (128) | -0,00202818 |
| Untersuchter Pilot - Referenzgewicht Sigma RRL2 (64) | 0,00365653 |
| Untersuchter Pilot - unverarbeiteter RR-Wert (8) | 0,00031228 |
| Untersuchter Pilot - Regressionsresiduum RR auf 32 Schläge | 5,3414072E-06 |
| Nicht untersuchter Pilot - unverarbeiteter RR-Wert (8) | -0,00037668 |

| | |
|---|---|
| Nicht untersuchter Pilot - mittlere Differenz RR aus 16 Schlägen (128) | 0,01038512 |
| Nicht untersuchter Pilot - mittlere Bezugsdifferenz RR (64) | 0,11703052 |
| Nicht untersuchter Pilot - Bezugsgewicht Sigma $RR_1$ (64) | -0,26649027 |
| Nicht untersuchter Pilot - Bezugsgewicht Sigma $RR_2$ (64) | -0,15181157 |
| Nicht untersuchter Pilot - mittlere Differenz aus 32 Schlägen (128) | -0,01318688 |
| Nicht untersuchter Pilot - Regressionsresiduum RR auf 32 Schläge | -0,00326222 |

**11.** Verfahren nach einem der Ansprüche 1 bis 3, dadurch gekennzeichnet, daß die Koeffizienten Aj und Bk in der nachfolgenden Tabelle jeweils gemäß den Variablen Xij und den Flugparametern durchnumeriert sind, und daß der Koeffizient C den Wert 0,18425416 hat:

| Flugparameter | Additiver Koeffizient Bk |
|---|---|
| Bewertung durch den kommandierenden Pilot CM1 | -0,01128010 |
| Bewertung durch den nicht kommandierenden Pilot | -0,03695012 |
| Bewertung durch den kommandierenden Pilot CM2 | -0,02018463 |
| Bewertung durch den nicht kommandierenden Pilot CM2 | 0,00000000 |
| Beide ECAM-Systeme sind defekt (kein ECAM-System arbeitet) | 0,03846630 |

| | |
|---|---|
| Ein ECAM-System ist defekt (ein ECAM-System arbeitet) | -0,00036457 |
| Beide ECAM-Systeme arbeiten | 0,00000000 |
| Erneutes Gasgeben oder schneller Sinkflug, wenn beide FMS (Fluglenksysteme) arbeiten | 0,00000000 |
| Anfängliches Rollen, wenn beide FMS defekt sind | -0,01271110 |
| Anfängliches Rollen, wenn ein FMS defekt ist und ein FMS arbeitet | -0,22427695 |
| Anfängliches Rollen, wenn beide FMS arbeiten | 0,00000000 |
| Rollen vor dem Start, wenn beide FMS defekt sind | 0,01688276 |
| Rollen vor dem Start, wenn ein FMS defekt ist und ein FMS arbeitet | 0,07965894 |
| Rollen vor dem Start, wenn beide FMS arbeiten | 0,00000000 |
| Starten, wenn beide FMS defekt sind | -0,01649307 |
| Starten, wenn ein FMS defekt ist und ein FMS arbeitet | -0,02033955 |
| Starten, wenn beide FMS arbeiten | 0,00000000 |
| Steigflug, wenn beide FMS defekt sind | -0,03001335 |
| Steigflug, wenn ein FMS defekt ist und ein FMS arbeitet | 0,01695141 |
| Steigflug, wenn beide FMS arbeiten | 0,00000000 |
| Fliegen, wenn beide FMS defekt sind | 0,05614202 |
| Fliegen, wenn ein FMS defekt ist und ein FMS arbeitet | -0,10278220 |
| Fliegen, wenn beide FMS arbeiten | 0,00000000 |
| Sinkflug, wenn beide FMS defekt sind | 0,03471076 |
| Sinkflug, wenn ein FMS defekt ist und ein FMS arbeitet | 0,01862299 |
| Sinkflug wenn beide FMS arbeiten | 0,00000000 |

| | |
|---|---|
| Defekt oder Notfall einschließlich Arbeitsunfähigkeit des Piloten CM1 | 0,04277797 |
| Defekt- oder Notfallprüfliste | 0,06829986 |
| Prüfliste für den Normalflug | 0,03892804 |
| Normalflug ohne die Prüfliste | 0,00000000 |
| Erneutes Gasgeben oder Notlandung | 0,05458590 |
| Vorausgehendes Rollen | -0,09502411 |
| Rollen vor dem Start | -0,07419961 |
| Start | 0,02750070 |
| Steigflug | 0,02952791 |
| Fliegen | 0,01699097 |
| Sinkflug | 0,00673707 |
| Anflug | 0,03832675 |
| Landung | 0,03482687 |
| Rollen nach der Landung | 0,00000000 |
| Anflug, wenn beide FMS defekt sind | -0,1405300 |
| Anflug, wenn ein FMS defekt ist und ein FMS arbeitet | -0,04206698 |
| Anflug, wenn beide FMS arbeiten | 0,00000000 |
| Landen, wenn beide FMS defekt sind | -0,07434618 |
| Landen, wenn beide FMS arbeiten | 0,00000000 |
| Rollen nach der Landung wenn beide FMS defekt sind | -0,11597344 |
| Rollen nach der Landung wenn ein FMS defekt ist und ein FMS arbeitet | -0,07514224 |
| Rollen nach der Landung wenn beide FMS arbeiten | 0,00000000 |
| Erneutes Gasgeben oder Notlandung bei eingeschaltetem Autopilot | 0,00000000 |

| | |
|---|---|
| Anfängliches Rollen bei nicht eingeschaltetem Autopilot | 0,18152502 |
| Anfängliches Rollen bei eingeschaltetem Autopilot | 0,00000000 |
| Rollen mit nicht eingeschaltetem Autopilot | -0,10494458 |
| Rollen mit eingeschaltetem Autopilot | 0,00000000 |
| Starten mit nicht eingeschaltetem Autopilot | -0,3796761 |
| Starten mit eingeschaltetem Autopilot | 0,00000000 |
| Steigflug mit nicht eingeschaltetem Autopilot | -0,02778540 |
| Steigflug mit eingeschaltetem Autopilot | 0,00000000 |
| Fliegen mit nicht eingeschaltetem Autopilot | 0,13777431 |
| Fliegen mit eingeschaltetem Autopilot | 0,00000000 |
| Sinkflug mit nicht eingeschaltetem Autopilot | 0,07989134 |
| Sinkflug mit eingeschaltetem Autopilot | 0,00000000 |
| Anflug mit nicht eingeschaltetem Autopilot | 0,04462338 |
| Anflug mit eingeschaltetem Autopilot | 0,00000000 |
| Landen mit nicht eingeschaltetem Autopilot | -0,01322323 |
| Landen mit eingeschaltetem Autopilot | 0,00000000 |

**12.** Vorrichtung zur Durchführung des Verfahrens nach einem der Ansprüche 1 bis 11, gekennzeichnet durch

- eine Einrichtung zum Erzeugen eines den Pilot zum Bewerten seiner Arbeitsbelastung gemäß einem vorbestimmten Maßstab auffordernden Signals während des Flugs zu vor dem Flug vorbestimmten Zeitpunkten,
- eine Einrichtung zum Aufzeichnen der durch den Pilot erstellten Bewertung der Arbeitsbelastung in einem Speicher,
- eine Einrichtung zum Messen signifikanter Daten einer vorbestimmten Gesamtheit von Flugparametern während der Ausgabe des vorstehend genannten Signals,
- eine Einrichtung zum Aufzeichnen der vorstehend genannten Daten in einem Speicher,
- eine Zeitbasis zum Synchronisieren jeder Bewertung der Arbeitsbelastung mit den aufgezeichneten Daten entsprechend den Flugparametern,
- eine Einrichtung zum Erstellen einer Korrelation zwischen der Bewertung der Arbeitsbelastung und den Flugparameter-Daten.

**13.** Vorrichtung nach Anspruch 12, dadurch gekennzeichnet, daß die Einrichtung zum Aufzeichnen der Bewertung der Arbeitsbelastung ein Gehäuse (1) umfaßt, das eine Einrichtung zum Anzeigen einer Bewertungaufforderung umfaßt.

**14.** Vorrichtung nach Anspruch 13, dadurch gekennzeichnet, daß sie außerdem eine Einrichtung (19, 19a, 19b) zum Messen und Aufzeichnen des Elektrokardiogramms (20) von den Mitgliedern der Crew synchron mit der Bezugszeitbasis umfaßt.

**15.** Vorrichtung nach einem der Ansprüche 12 bis 14, dadurch gekennzeichnet, daß sie außerdem eine Einrichtung (11, 12) zur Bilderfassung des Pilotensitzes hat, eine Einrichtung zum Anzeigen (10) und Aufzeichnen (14) der erfaßten Bilder und eine Einrichtung (13) zum Festhalten auf der Anzeigeeinrichtung (10) der von der Einrichtung (2) ausgegebenen Daten zum selektiven Abfragen der Mitglieder der Crew und von den Mitteln (1) zum Aufzeichnen der Bewertungen der Arbeitsbelastung dieser Crew-Mitglieder umfaßt.

**16.** Verfahren nach einem der Ansprüche 1 bis 11, dadurch gekennzeichnet, daß die Kurve Yi = f(Xij) zum Simulieren des Einflusses einer neuen Eigenschaft des Flugzeugs auf die Arbeitsbelastung seiner Piloten verwendet wird.

**17.** Verfahren nach einem der Ansprüche 1 bis 11, dadurch gekennzeichnet, daß die vorbestimmte Arbeitsbelastung eines vorgegebenen Piloten in einer gegebenen Fluglage zum Bewerten der zeitlichen Entwicklung seines Verhaltens auf ein gegebenes Flugzeug mehrfach wiederholt berechnet wird.

## Claims

**1.** A process for developing a statistical model to forecast the workload of an aircraft pilot, particularly that of a commercial airline pilot, as a function of objective flight parameters, characterized in that it comprises the following steps :

a) a set of predetermined objective flight parameters corresponding to different . preselected aircraft flight data, the aircraft flight conditions and the flight stages are defined ;
b) a signal is generated for requesting the pilot, during a real or simulated aircraft flight, to rate his workload according to a predefined scale ;
c) this rating of the workload supplied by the pilot in response to the signal is logged in a memory ;
d) the value of significant data of said flight parameters when the above-mentioned signal is generated, is measured ;
e) the above-mentioned measured values are logged in a memory at the same time as step c) ;
f) the steps b) to e) are repeated at least once for each predetermined flight stage ;
g) finally, an automatic correlation is established between the logged workload rating, the above-mentioned logged values and the flight parameters in order to develop a statistical model of the pilot workload according to the flight parameters.

**2.** A process as claimed in Claim 1, wherein the predetermined cc calculated worklaad is related to the flight parameters by a relationship of the type:

$$Yi = A1\,Xi1 + A2\,Xi2 + ... + Aj\,Xij + ... + An\,Xin + B1 + B2 + ... + Bk + ... + Bm + C \quad (M)$$

wherein :

- Yi is a variable representing the predetermined workload;
- Xij are variables representing the significant data of a first set of flight parameters;
- constants Aj, Bk and C are coefficients of addition or multiplication characteristic of the aforesaid model, wherein the value of coefficients Bk denotes a second set of flight parameters, and wherein coefficients Aj, Bk ad C are calculated by applying, based on the aforesaid relationship, statistical methods known as multiple linear regression analysis and analysis of variance based on the values provided by the pilot in his workload rating and the aforesaid data and the flight parameters measured or recorded during the aforesaid flight.

**3.** A process as claimed in Claim 2, wherein variables Xij denote flight data relative to the aircraft per se and wherein the flight parameters on which the value of coefficients of addition Bk depend are the aircraft flight and flying conditions and the flight stage at the instant corresponding to the measurement of the aforesaid data.

4. A process as claimed in Claim 2, wherein the flight data relative to the aircraft and the flight parameters which determine the coefficients Bk employed in the development of the aforesaid model are successively listed in the tables below:

| AIRCRAFT DATA | SIGNIFICANT UNIT | RANGE |
|---|---|---|
| Rudder angle | Degrees | +/- 180 |
| Angle of roll | Degrees | +/- 180 |
| Roll speed (fuselage) | Degrees/sec | +/- 128 |
| Aerodynamic speed | Knots | 15 to 450 |
| Angle of incidence | Degrees | +/- 60 |
| Speed N2 of engine 1 | rpm | 0 to 4400 |

| DATA No. | DATA (AUTOMATIC FLIGHT CONTROLS) |
|---|---|
| 23 | Altitude |
| 24 | Vertical speed (Vz) |
| 25 | Flare-out |
| 26 | Take-off computer (go around) |
| 27 | Take-off computer (take-off) |
| 28 | Level change |
| 29 | Radio guidance system (glide slope) |
| 30 | Longitudinal modes - following |
| 31 | Longitudinal modes - capture |
| 32 | Navigation |
| 33 | Course maintenance |
| 34 | Course selection |
| 35 | Radio guided azimuth (localizer) |
| 36 | Taxiing |
| 37 | Take-off |
| 38 | Taxiing (go around) |
| 39 | Lateral modes - capture |
| 40 | VOR |
| 41 | Lateral modes - following |
| 42 | Alignment |
| 43 | Transparent Piloting Engine Conditioning |
| 44 | Engine Conditioning Control |

FLIGHT PARAMETERS

Malfunction or emergency including pilot CM1 disabled
Malfunction or emergency check list
Check list during routine flight
Routine flight without check list
Go Around or Emergency Descent
Pre-flight
Taxiing prior to Takeoff
Takeoff
Ascent
Cruising
Approach
Landing
Taxiing post landing
Evaluation by pilot CM1 flying
Evaluation by pilot CM1 not flying
Evaluation by pilot CM2 flying
Estimate by pilot CM2 not flying
Both ECAM (electronic central aircraft management systems) disabled (no ECAM system engaged)
One ECAM system disabled (one ECAM system engaged)
Both ECAM systems engaged
Go around or rapid descent with both FMS (flight management systems) engaged
Pre-flight with both FMS disabled
Pre-flight with one FMS disabled and one FMS engaged
Pre-flight with both FMS engaged
Taxiing prior to takeoff with both FMS disabled
Taxiing prior to takeoff with one FMS disabled and one FMS engaged
Taxiing prior to takeoff with both FMS engaged
Takeoff with both FMS disabled
Takeoff with one FMS disabled and one FMS engaged
Takeoff with both FMS engaged

FLIGHT PARAMETERS

Ascent with both FMS disabled
Ascent with one FMS disabled and one FMS engaged
Ascent with both FMS engaged
Cruising with both FMS disabled
Cruising with one FMS disabled and one FMS engaged
Cruising with both FMS engaged
Descent with both FMS disabled
Descent with one FMS disabled and one FMS engaged
Descent with both FMS engaged
Approach with both FMS disabled
Approach with one FMS disabled and one FMS engaged
Approach with both FMS engaged
Landing with both FMS disabled
Landing with both FMS engaged
Taxiing post landing with both FMS disabled
Taxiing post landing with one FMS disabled and one FMS engaged
Taxiing post landing with both FMS engaged
Go around or emergency descent with automatic thrust lever engaged
Pre-flight with automatic thrust lever disengaged
Pre-flight with automatic thrust lever engaged
Taxiing with automatic thrust lever disengaged
Taxiing with automatic thrust lever engaged
Takeoff with automatic thrust lever disengaged
Takeoff with automatic thrust lever engaged
Ascent with automatic thrust lever disengaged
Ascent with automatic thrust lever engaged

Cruising with automatic thrust lever disengaged
Cruising with automatic thrust lever engaged
Descent with automatic thrust lever disengaged
Descent with automatic thrust lever engaged
Approach with automatic thrust lever disengaged
Approach with automatic thrust lever engaged
Landing with automatic thrust lever disengaged
Landing with automatic thrust lever engaged

**5.** A process as claimed in either Claim 3 or Claim 4, wherein variables Xij also denote the aircraft pilot heartbeats and heart rate fluctuations which are measured during the said test flight during the rating supplied by the said pilot.

**6.** A process as claimed in any of the foregoing claims, wherein, for developing the model, there are taken into account the workload ratings supplied by the pilot flying the aircraft and those of his copilot as well as the position of the pilot flying the aircraft in the cockpit.

**7.** A process as claimed in any of the foregoing claims, wherein the workload ratings scale comprises six rating indexes ranging from 2 to 7 which represent increasing workloads.

**8.** A process as claimed in Claim 7, wherein the predetermined workload is expressed according to the aforesaid scale as a function of variable Yi by the relationship:

$$PRi = 3 \times 10^{Yi} + 1$$

**9.** A process as claimed in any of Claims 1 to 8, wherein variables Xij comprise the variables listed in the following table:

| Variable $X_{ij}$ |
|---|
| Decimal logarithm of the angle of roll (128) |
| Rate of inversions of aerodynamic speed (64) |
| Rate of inversions of the angle of incidence (64) |
| Rate of inversion of the speed N1 of engine 1 |
| Speed N1 of engine 1 (128) |
| Decimal logarithm of the rudder angle (32) |
| Rate of transitions through zero of the angle of roll squared (128) |
| Decimal logarithm of the number of automatic flight controls engaged |
| Rate of transitions through zero of the roll speed (128) |
| Rate of transitions through zero of the roll speed squared (128) |

**10.** A process as claimed in any of Claims 5 to 9, wherein the variables Xij comprise the variables listed in the following table:

| Variable $X_{ij}$ |
|---|
| Decimal logarithm of the angle of roll (128) |
| Rate of inversions of aerodynamic speed (64) |
| Rate of inversions of the angle of incidence (64) |
| Rate of inversion of the speed N1 of engine 1 |
| Speed N1 of engine 1 (128) |
| Decimal logarithm of the rudder angle (32) |
| Rate of transitions through zero of the angle of roll squared (128) |
| Decimal logarithm of the number of automatic flight controls engaged |
| Rate of transitions through zero of the roll speed (128) |
| Rate of transitions through zero of the roll speed squared (128) |
| Tested pilot - Deviation RR from the reference mean (128) Tested pilot - Reference weight Sigma RRR (64) |
| Tested pilot - Raw RR value (8) |
| Tested pilot - Regression residuals over 32 heartbeats |
| Non tested pilot - Raw RR value (8) |
| Non tested pilot - Deviation from the mean over 16 heartbeats (128) |
| Deviation from the reference mean (64) |
| Non tested pilot - Reference weight Sigma $RR_1$ (64) |
| Non tested pilot - Reference weight Sigma $RR_2$ (64) |
| Non tested pilot - Deviation from the mean over 32 heartbeats (128) |
| Non tested pilot - Regression residuals RR over 32 heartbeats |

| $X_{ij}$ | COEFFICIENT OF MULTIPLICATION $A_j$ |
|---|---|
| Decimal logarithm of the angle of roll (128) | 0.05771089 |
| Rate of inversions of aerodynamic speed (64) | 0.00114733 |
| Rate of inversions of the angle of incidence (64) | -0.00403249 |
| Rate of inversions of speed N1 of engine 1 | .-0.00327516 |
| Speed N1 of engine N1 (128) | -0.00107951 |
| Decimal logarithm of rudder angle (32) | 0.00967576 |
| Rate of transitions through zero of the angle of roll squared (128) | 0.00029009 |
| Decimal logarithm of number of automatic flight controls engaged | -0.13144402 |
| Rate of transitions through zero of roll speed (128) | 0.00888219 |
| Rate of transitions through zero of roll speed squared (128) | 0.00026902 |
| Tested pilot - Deviation RR from reference mean (128) | 0.00202818 |
| Tested pilot - Reference weight Sigma RRL2 (64) | 0.00365653 |
| Tested pilot - Raw value of RR (8) | 0.00031228 |
| Tested pilot - Regression residuals RR over 32 heartbeats | 5.3414072E-06 |
| Non tested pilot - Raw value of RR (8) | -0.00037668 |
| Non tested pilot - Deviation RR from the mean over 16 heartbeats (128) | 0.01038512 |
| Non tested pilot - Deviation RR from the reference mean (64) | 0.11703052 |
| Non tested pilot - Reference weight Sigma $RR_1$ (64) | -0.26649027 |
| Non tested pilot - Reference weight Sigma $RR_2$ (64) | 0.15181157 |
| Non tested pilot - Deviation from to the mean over 32 heartbeats (128) | -0.01318688 |
| Non tested pilot - Regression residuals RR over 32 heartbeats | -0.00326222 |

**11.** A process as claimed in any of claims 1 to 3, characterized in that the coefficients Aj and Bk are respectively listed according to variables Xij and the flight parameters shown in the tables below and wherein the value of coefficient C is 0.18425416.

| FLIGHT PARAMETERS | COEFFICIENT OF ADDITION Bk |
|---|---|
| Evaluation by pilot CM1 flying | -0.01128010 |
| Evaluation by pilot CM1 not flying | -0.03695012 |
| Evaluation by pilot CM2 flying | -0.02018463 |
| Evaluation by pilot CM2 not flying | 0.00000000 |
| Both ECAM systems disabled (no ECAM systems engaged) | 0.03846630 |
| One ECAM system disabled (one ECAM system engaged) | -0.00036457 |
| Both ECAM systems engaged | 0.00000000 |
| Go around or rapid descent with both FMS (flight management systems) engaged | 0.00000000 |
| Pre-flight with both FMS disabled | -0.01271110 |
| Pre-flight with one FMS disabled and one FMS engaged | -0.22427695 |
| Pre-flight with both FMS engaged | 0.00000000 |
| Taxiing prior to takeoff with both FMS disabled | 0.01688276 |
| Taxiing prior to takeoff with one FMS disabled and one FMS engaged | 0.07965894 |
| Taxiing prior to takeoff with both FMS engaged | 0.00000000 |
| Takeoff with both FMS disabled | -0.01649307 |
| Takeoff with one FMS disabled and one FMS engaged | -0.02033955 |
| Takeoff with both FMS engaged | 0.00000000 |
| Ascent with both FMS disabled | -0.03001335 |
| Ascent with one FMS disabled and one FMS engaged | 0.01695141 |
| Ascent with both FMS engaged | 0.00000000 |
| Cruising with both FMS disabled | 0.05614202 |
| Cruising with one FMS disabled and one FMS engaged | -0.10278220 |
| Cruising with both FMS engaged | 0.00000000 |
| Descent with both FMS disabled | 0.03471076 |
| Descent with one FMS disabled and one FMS engaged | 0.01862299 |
| Descent with both FMS engaged | 0.00000000 |
| Malfunction or Emergency, including pilot CM1 disabled | 0.04277797 |
| Malfunction or Emergency check list | 0.06829986 |
| Check list during routine flight | 0.03892804 |
| Routine flight without check list | 0.00000000 |
| Go Around or Emergency Descent | 0.05458590 |
| Pre-flight | -0.09502411 |
| Taxiing prior to takeoff | -0.07419961 |
| Takeoff | 0.02750070 |
| Ascent | 0.02952791 |
| Cruising | 0.01699097 |
| Descent | 0.00673707 |
| Approach | 0.03832675 |
| Landing | 0.03482687 |
| Taxiing post landing | 0.00000000 |

| FLIGHT PARAMETERS | COEFFICIENT OF ADDITION Bk |
|---|---|
| Approach with both FMS disabled | -0.1405300 |
| Approach with one FMS disabled and one FMS engaged | -0.04206698 |
| Approach with both FMS engaged | 0.00000000 |
| Landing with both FMS disabled | -0.07434618 |
| Landing with both FMS engaged | 0.00000000 |
| Taxiing post landing with both FMS disabled | -0.11597344 |
| Taxiing post landing with one FMS disabled and one FMS engaged | -0.07514224 |
| Taxiing post landing with both FMS engaged | 0.00000000 |
| Go around or emergency descent with automatic thrust lever engaged | 0.00000000 |
| Pre-flight with automatic thrust lever disengaged | 0.18152502 |
| Pre-flight with automatic thrust lever engaged | 0.00000000 |
| Taxiing with automatic thrust lever disengaged | -0.10494458 |
| Taxiing with automatic thrust lever engaged | 0.00000000 |
| Takeoff with automatic thrust lever disengaged | -0.3796761 |
| Takeoff with automatic thrust lever engaged | 0.00000000 |
| Ascent with automatic thrust lever disengaged | -0.02778540 |
| Ascent with automatic thrust lever engaged | 0.00000000 |
| Cruising with automatic thrust lever disengaged | 0.13777431 |
| Cruising with automatic thrust lever engaged | 0.00000000 |
| Descent with automatic thrust lever disengaged | 0.07989134 |
| Descent with automatic thrust lever engaged | 0.00000000 |
| Approach with automatic thrust lever disengaged | 0.04462338 |
| Approach with automatic thrust lever engaged | 0.00000000 |
| Landing with automatic thrust lever disengaged | -0.01322323 |
| Landing with automatic thrust lever engaged | 0.00000000 |

**12.** An apparatus for the embodiment of the process as claimed in any of Claims 1 to 11, characterized in that it comprises :

- means for generating during the flight, at moments predetermined before the flight, a signal requesting the pilot to rate his workload according to a predefined scale,
- means for logging in a memory the workload rating supplied by the pilot,
- means for measuring significant data of a predetermined set of flight parameters, when said signal is emitted,
- means for logging in a memory the above-mentioned data,
- a time base for synchronizing each workload rating with the corresponding logged data of the flight parameters,
- means for establishing a correlation between the workload rating and the flight parameters data.

**13.** An apparatus as claimed in Claim 12, characterized in that the means for logging the workload ratings comprise a panel (1) comprising means for visualizing a rating request.

**14.** An apparatus as claimed in Claim 13, characterized in that it additionally comprises means (19, 19a, 19b) for measuring and recording the electrocardiograms of crew members (20) in synchronization with the reference time clock.

**15.** An apparatus as claimed in any of claims 12 to 14, characterized in that it additionally comprises means for filming images (11, 15) of the cockpit, means for displaying (10) and recording (14) these images and means for overlaying (13) on the display means (10) the data output by the means (2) for the selective questioning of crew members, and means (1) for logging the workload ratings of the said crew members.

**16.** A process as claimed in any of claims 1 to 11, characterized in that the curve Yi = f(Xij) is used to simulate the effect of a new aircraft characteristic on the workload of its pilot.

17. A process as claimed in any of claims 1 to 11, characterized in that the predetermined workload of a given pilot in a predetermined flight situation is calculated at various dates in order to evaluate the evolution in time of his performances on a given aircraft.

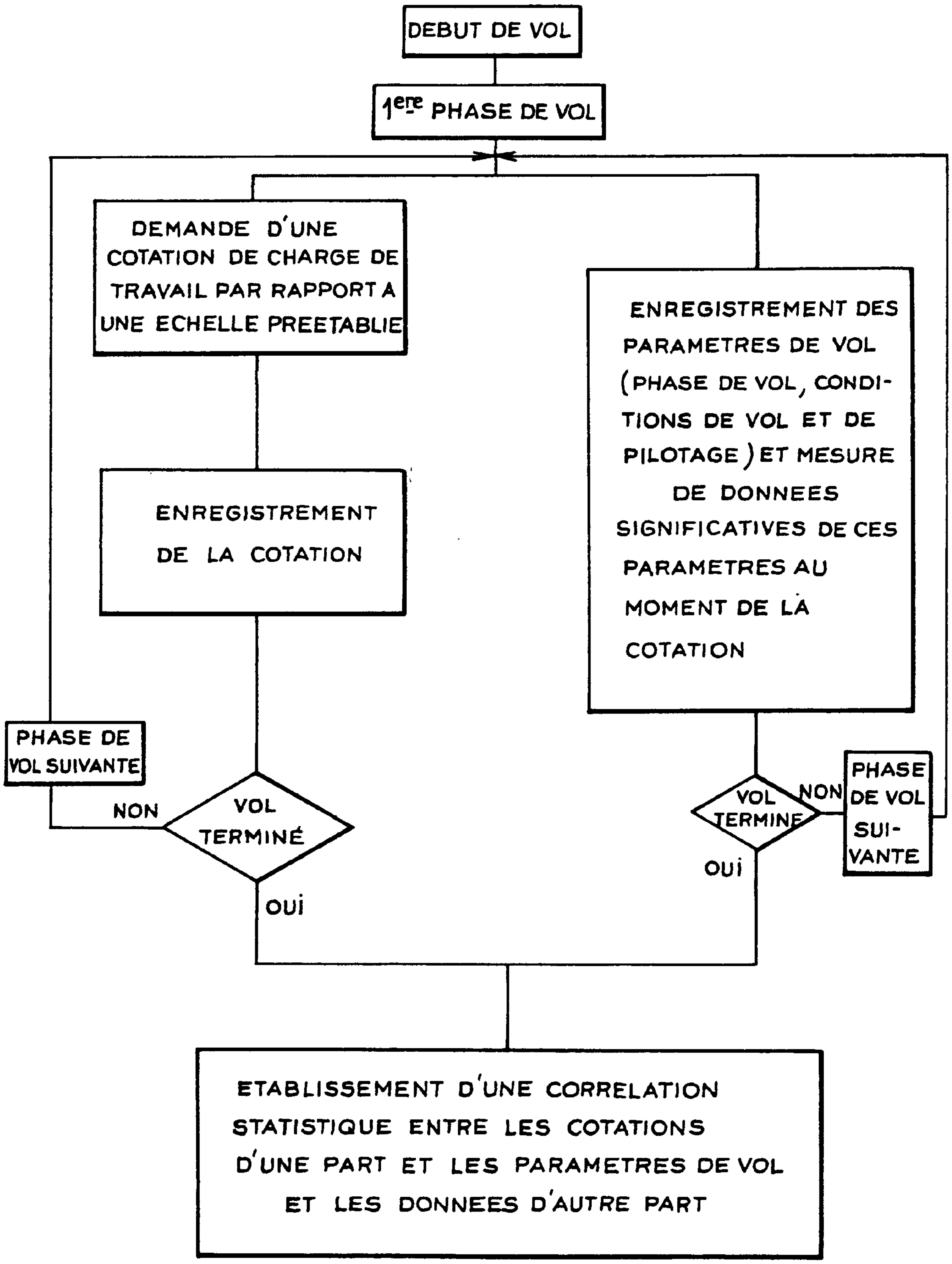
DEBUT DE VOL
1ere PHASE DE VOL
DEMANDE D'UNE COTATION DE CHARGE DE TRAVAIL PAR RAPPORT A UNE ECHELLE PREETABLIE
ENREGISTREMENT DE LA COTATION
ENREGISTREMENT DES PARAMETRES DE VOL (PHASE DE VOL, CONDITIONS DE VOL ET DE PILOTAGE) ET MESURE DE DONNEES SIGNIFICATIVES DE CES PARAMETRES AU MOMENT DE LA COTATION
PHASE DE VOL SUIVANTE
NON
VOL TERMINÉ
OUI
VOL TERMINE
NON
OUI
PHASE DE VOL SUIVANTE
ETABLISSEMENT D'UNE CORRELATION STATISTIQUE ENTRE LES COTATIONS D'UNE PART ET LES PARAMETRES DE VOL ET LES DONNEES D'AUTRE PART

FIG.1

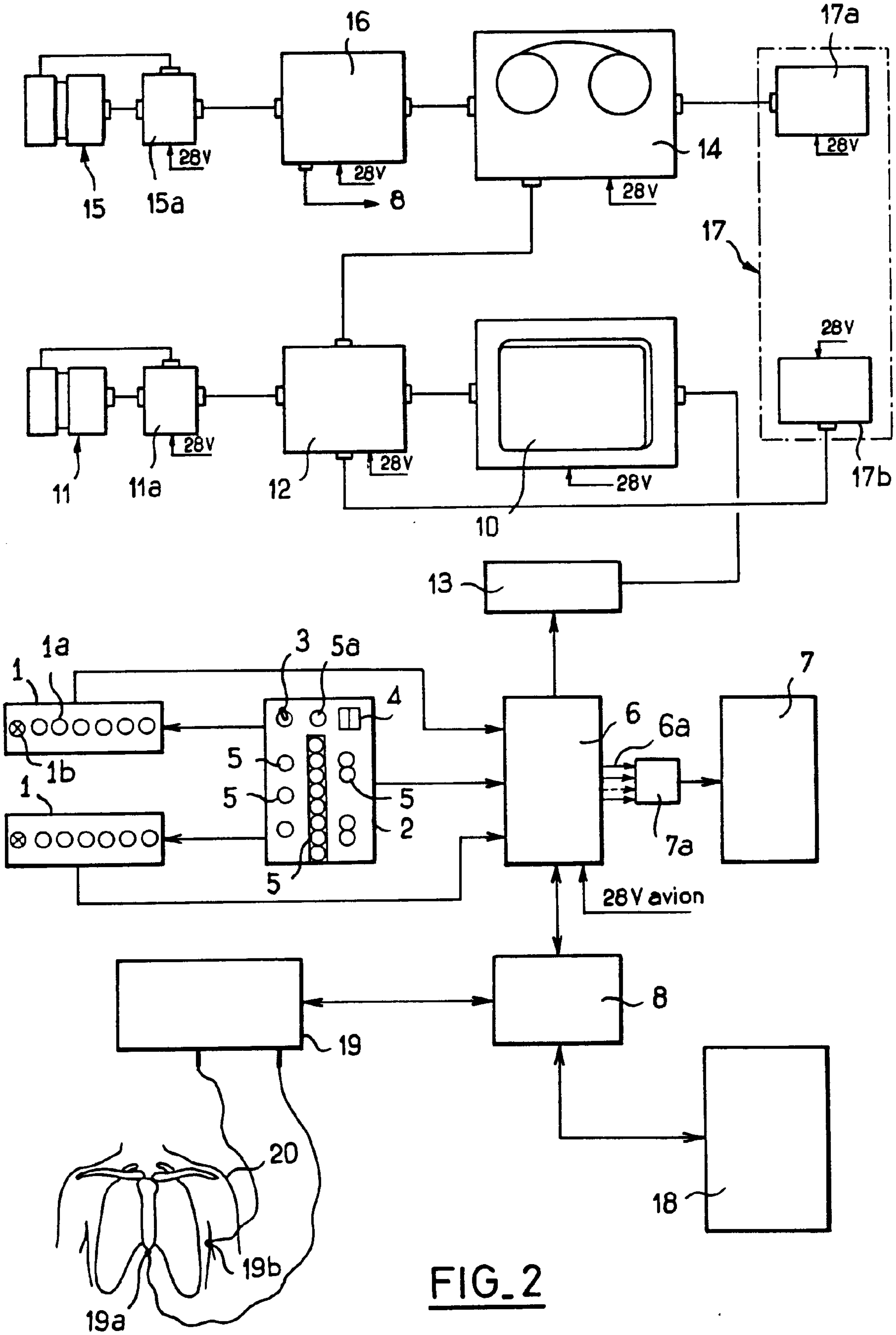
16
17a
14
28V
15
15a
8
17
28V
11
11a
12
10
17b
13
1a
1
1b
3
5a
4
5
2
6
6a
7a
7
28V avion
8
19
18
20
19b
19a

FIG_2

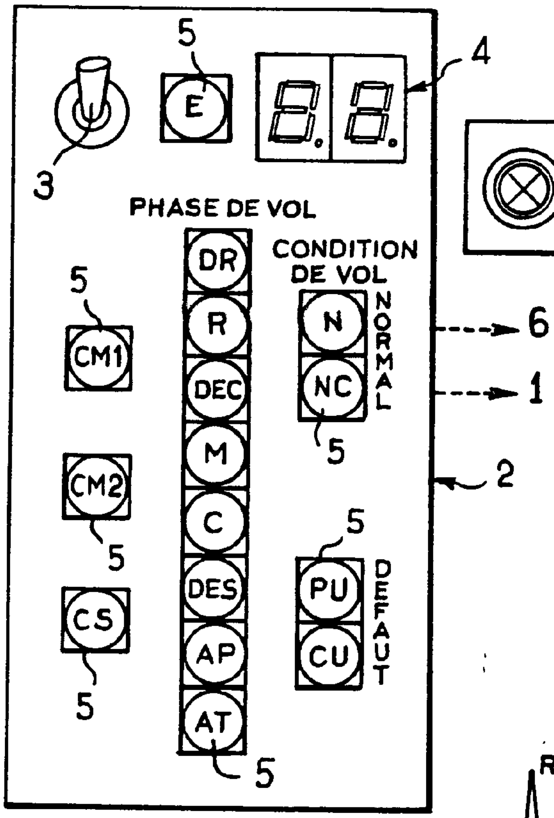


FIG_3A

FIG_4

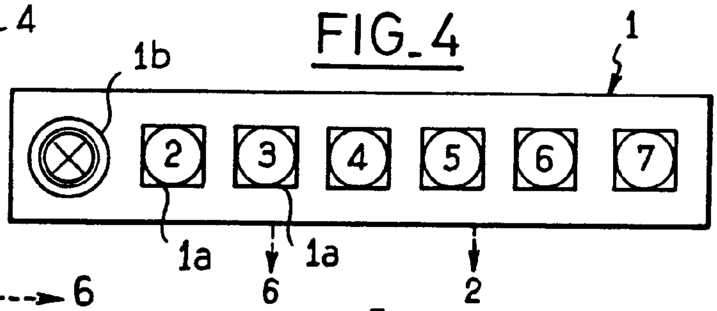


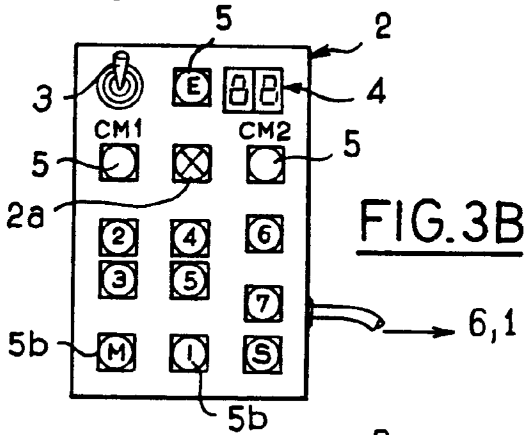


FIG.3B

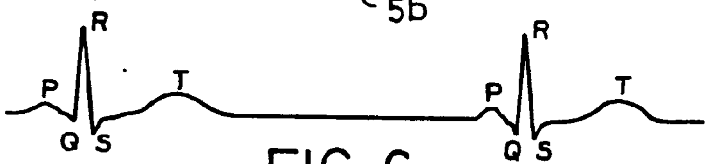


FIG_6

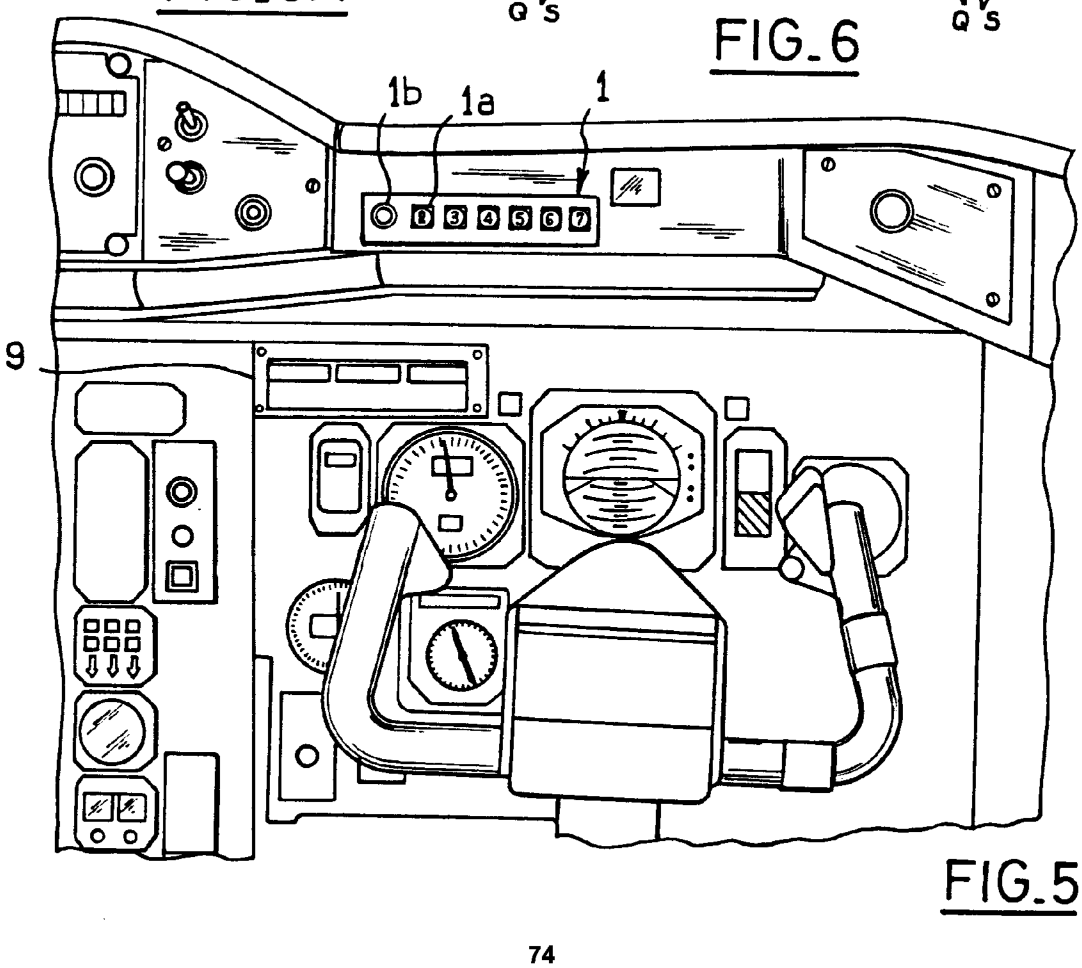


FIG.5

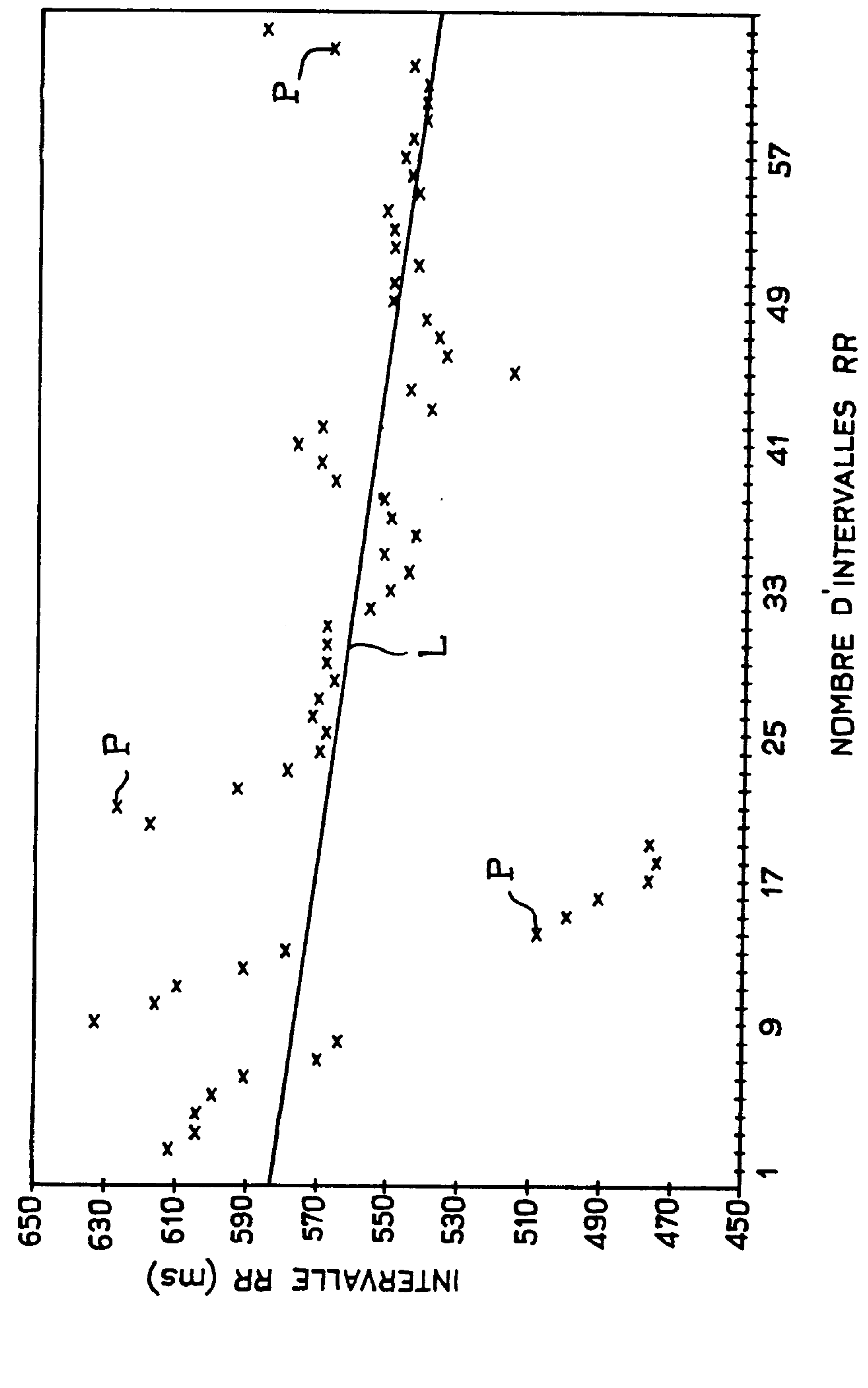
INTERVALLE RR (ms)
650
630
610
590
570
550
530
510
490
470
450
1
9
17
25
33
41
49
57
NOMBRE D'INTERVALLES RR
P
P
P
L

FIG_6A

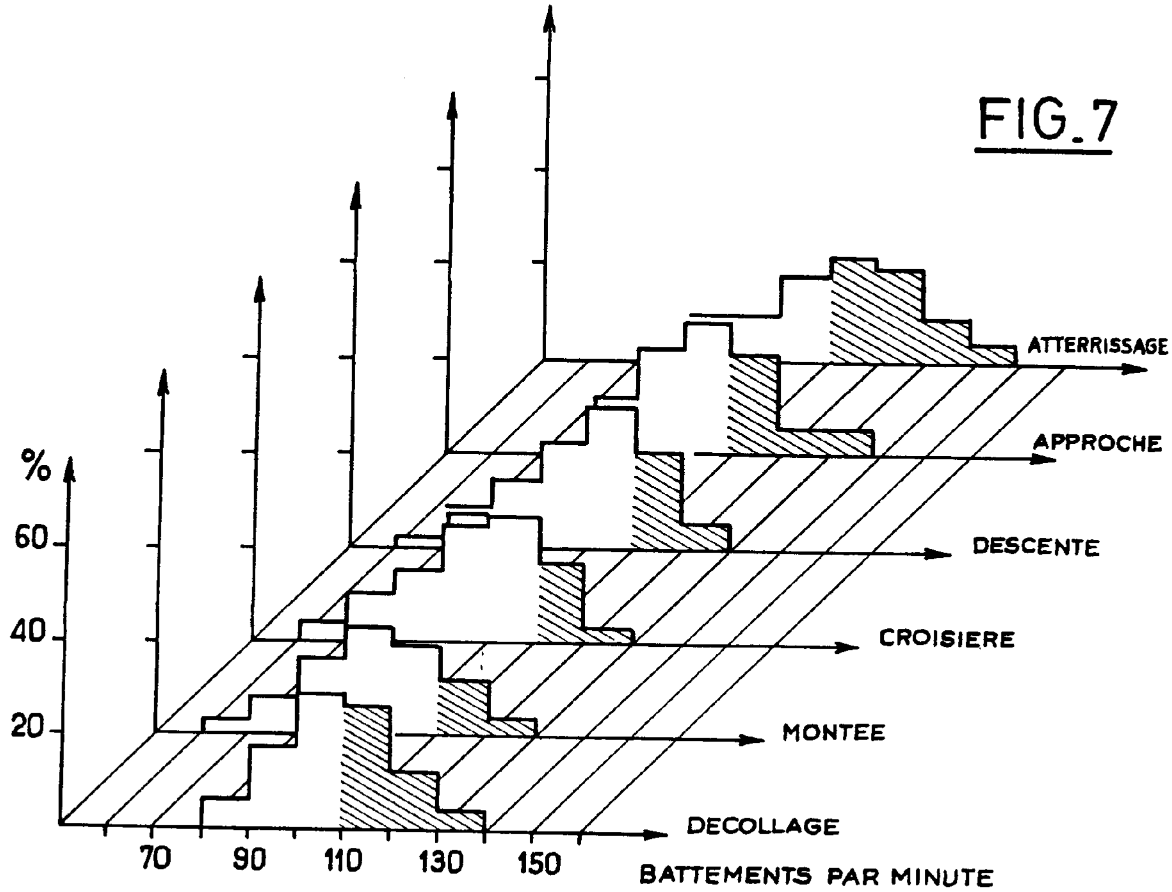
%
60
40
20
70
90
110
130
150
ATTERRISSAGE
APPROCHE
DESCENTE
CROISIERE
MONTEE
DECOLLAGE
BATTEMENTS PAR MINUTE

FIG.7

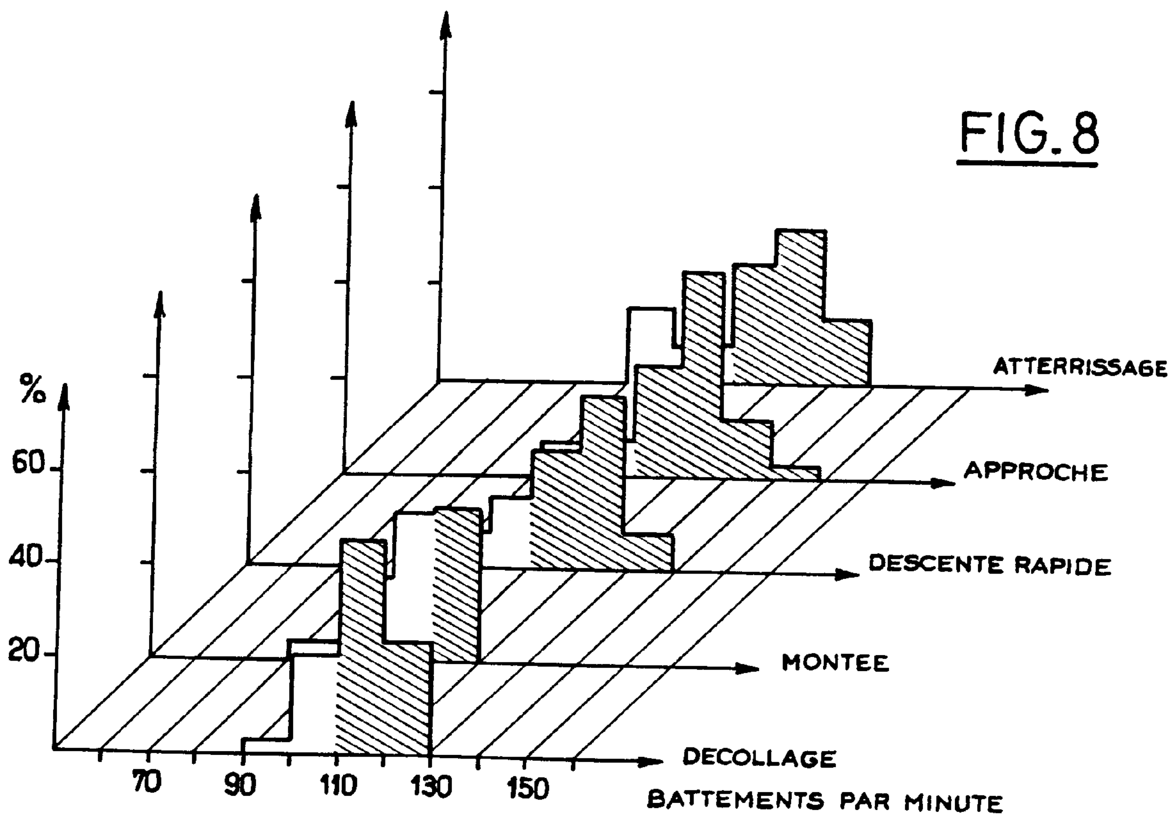
%
60
40
20
70
90
110
130
150
ATTERRISSAGE
APPROCHE
DESCENTE RAPIDE
MONTEE
DECOLLAGE
BATTEMENTS PAR MINUTE

FIG.8

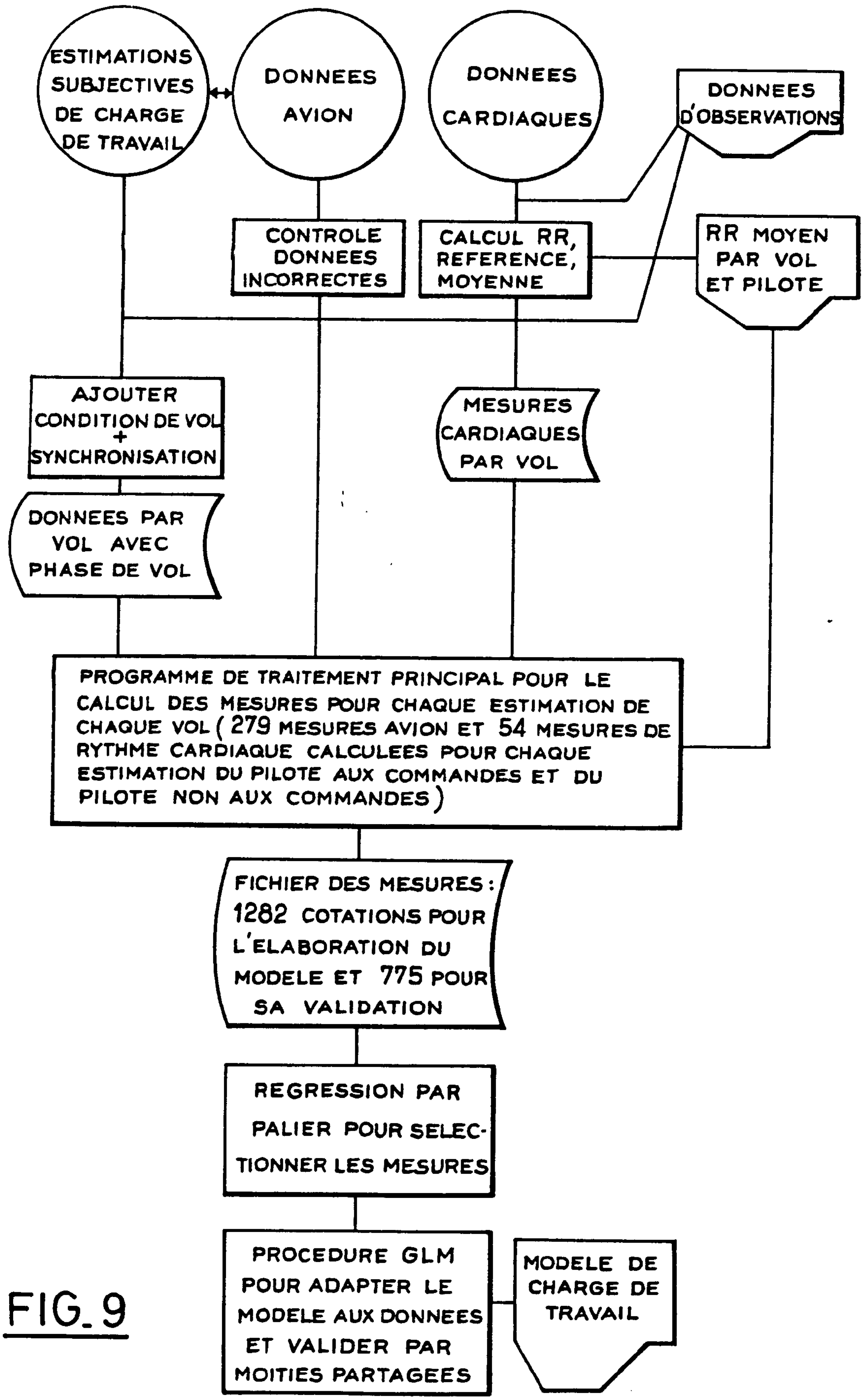
ESTIMATIONS SUBJECTIVES DE CHARGE DE TRAVAIL
DONNEES AVION
DONNEES CARDIAQUES
DONNEES D'OBSERVATIONS
CONTROLE DONNEES INCORRECTES
CALCUL RR, REFERENCE, MOYENNE
RR MOYEN PAR VOL ET PILOTE
AJOUTER CONDITION DE VOL + SYNCHRONISATION
MESURES CARDIAQUES PAR VOL
DONNEES PAR VOL AVEC PHASE DE VOL
PROGRAMME DE TRAITEMENT PRINCIPAL POUR LE CALCUL DES MESURES POUR CHAQUE ESTIMATION DE CHAQUE VOL ( 279 MESURES AVION ET 54 MESURES DE RYTHME CARDIAQUE CALCULEES POUR CHAQUE ESTIMATION DU PILOTE AUX COMMANDES ET DU PILOTE NON AUX COMMANDES )
FICHIER DES MESURES : 1282 COTATIONS POUR L'ELABORATION DU MODELE ET 775 POUR SA VALIDATION
REGRESSION PAR PALIER POUR SELECTIONNER LES MESURES
PROCEDURE GLM POUR ADAPTER LE MODELE AUX DONNEES ET VALIDER PAR MOITIES PARTAGEES
MODELE DE CHARGE DE TRAVAIL

FIG_9

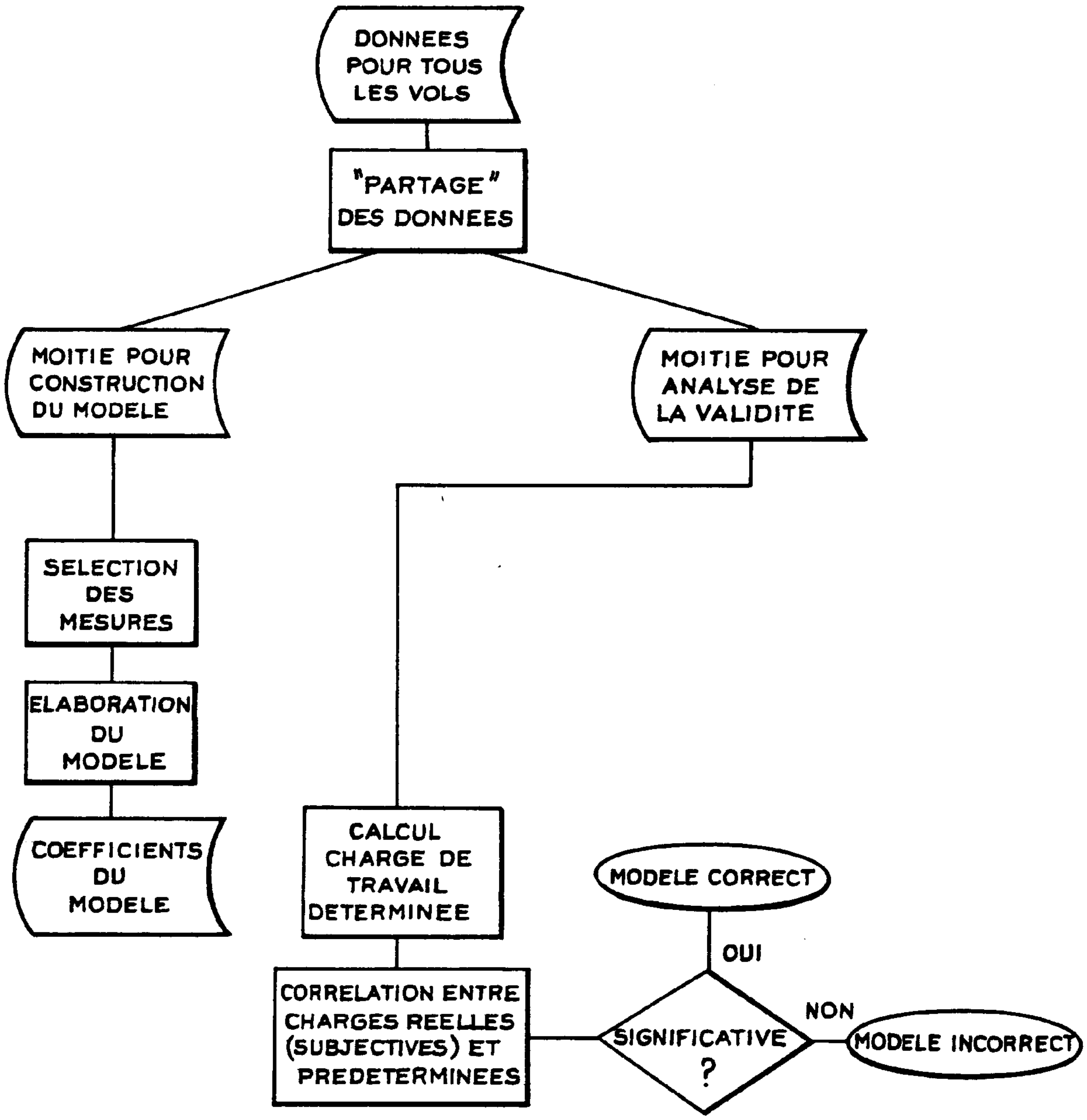
DONNEES
POUR TOUS
LES VOLS
"PARTAGE"
DES DONNEES
MOITIE POUR
CONSTRUCTION
DU MODELE
MOITIE POUR
ANALYSE DE
LA VALIDITE
SELECTION
DES
MESURES
ELABORATION
DU
MODELE
COEFFICIENTS
DU
MODELE
CALCUL
CHARGE DE
TRAVAIL
DETERMINEE
MODELE CORRECT
OUI
CORRELATION ENTRE
CHARGES REELLES
(SUBJECTIVES) ET
PREDETERMINEES
SIGNIFICATIVE
?
NON
MODELE INCORRECT

FIG_10

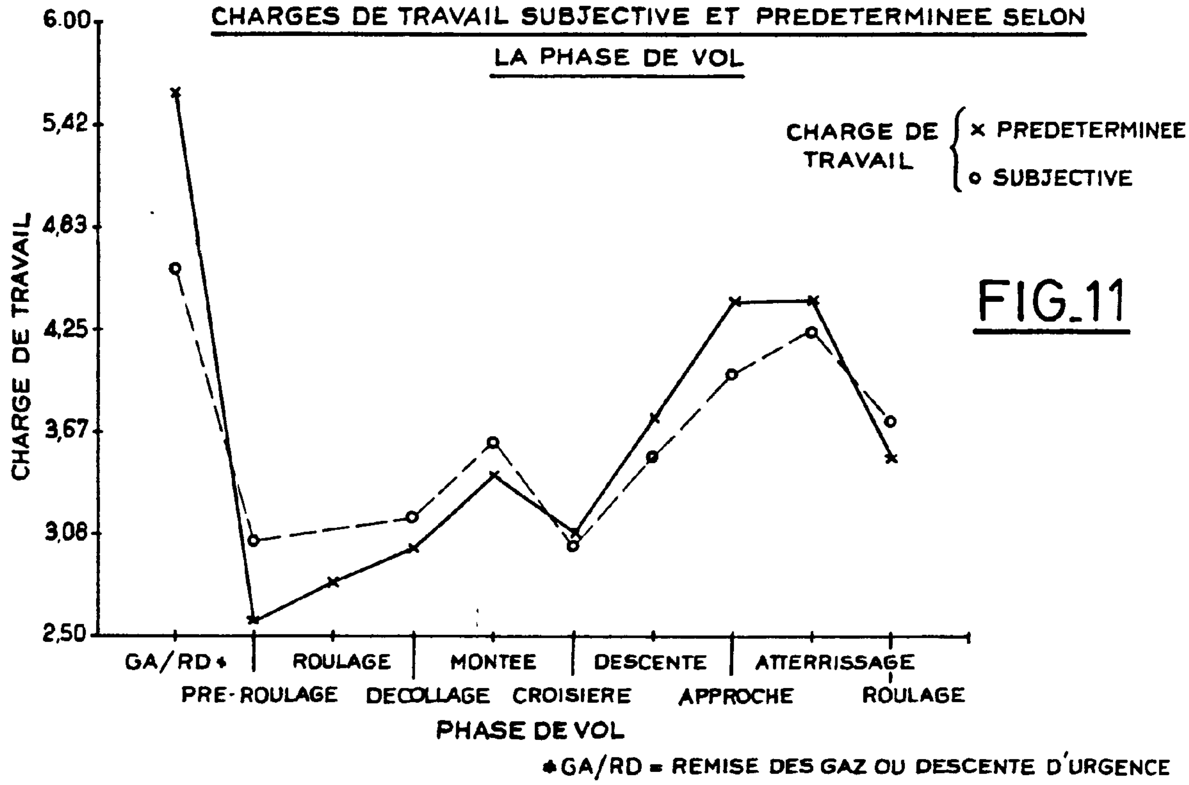
CHARGES DE TRAVAIL SUBJECTIVE ET PREDETERMINEE SELON LA PHASE DE VOL
CHARGE DE TRAVAIL
× PREDETERMINEE
o SUBJECTIVE
CHARGE DE TRAVAIL
6.00
5,42
4,83
4,25
3,67
3,08
2,50
GA/RD*
PRE-ROULAGE
ROULAGE
DECOLLAGE
MONTEE
CROISIERE
DESCENTE
APPROCHE
ATTERRISSAGE
ROULAGE
PHASE DE VOL
*GA/RD = REMISE DES GAZ OU DESCENTE D'URGENCE

FIG.11

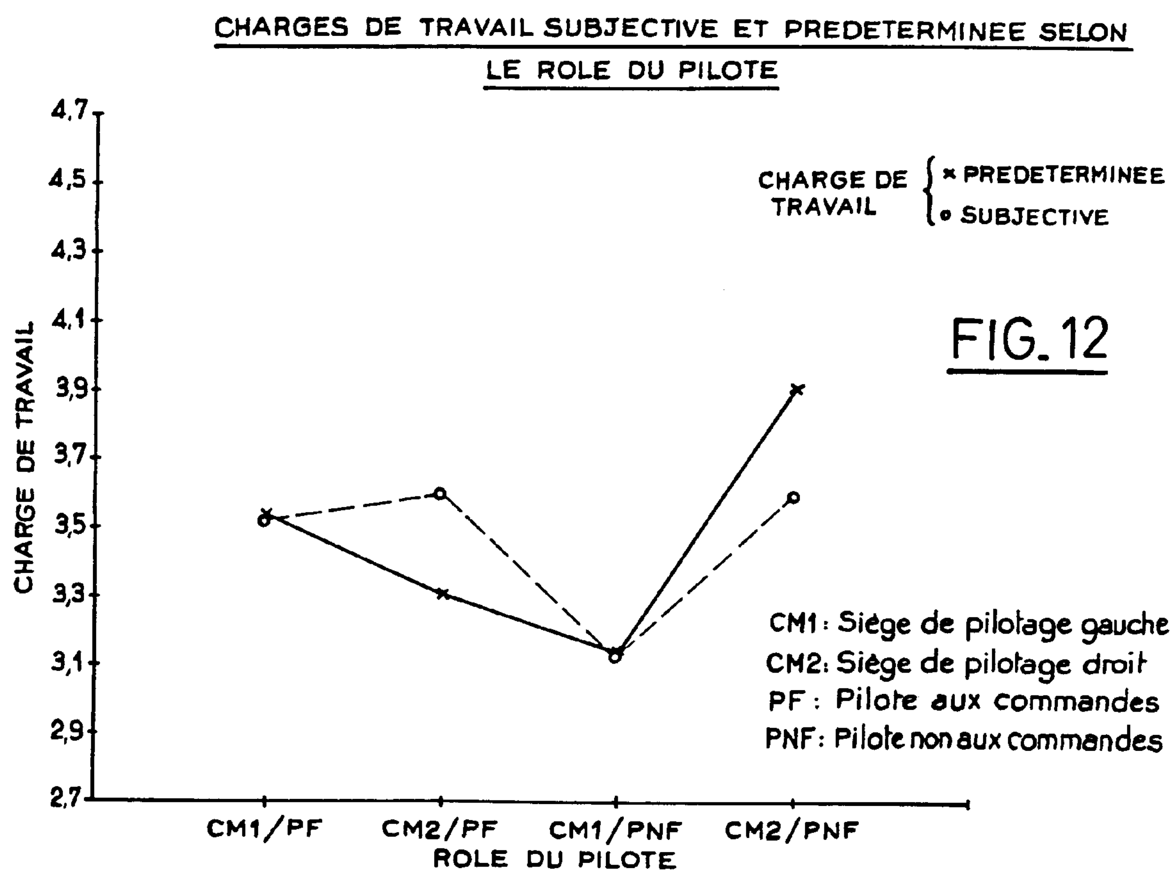
CHARGES DE TRAVAIL SUBJECTIVE ET PREDETERMINEE SELON LE ROLE DU PILOTE
CHARGE DE TRAVAIL
× PREDETERMINEE
o SUBJECTIVE
CHARGE DE TRAVAIL
4,7
4,5
4,3
4,1
3,9
3,7
3,5
3,3
3,1
2,9
2,7
CM1/PF
CM2/PF
CM1/PNF
CM2/PNF
ROLE DU PILOTE
CM1: Siège de pilotage gauche
CM2: Siège de pilotage droit
PF: Pilote aux commandes
PNF: Pilote non aux commandes

FIG.12

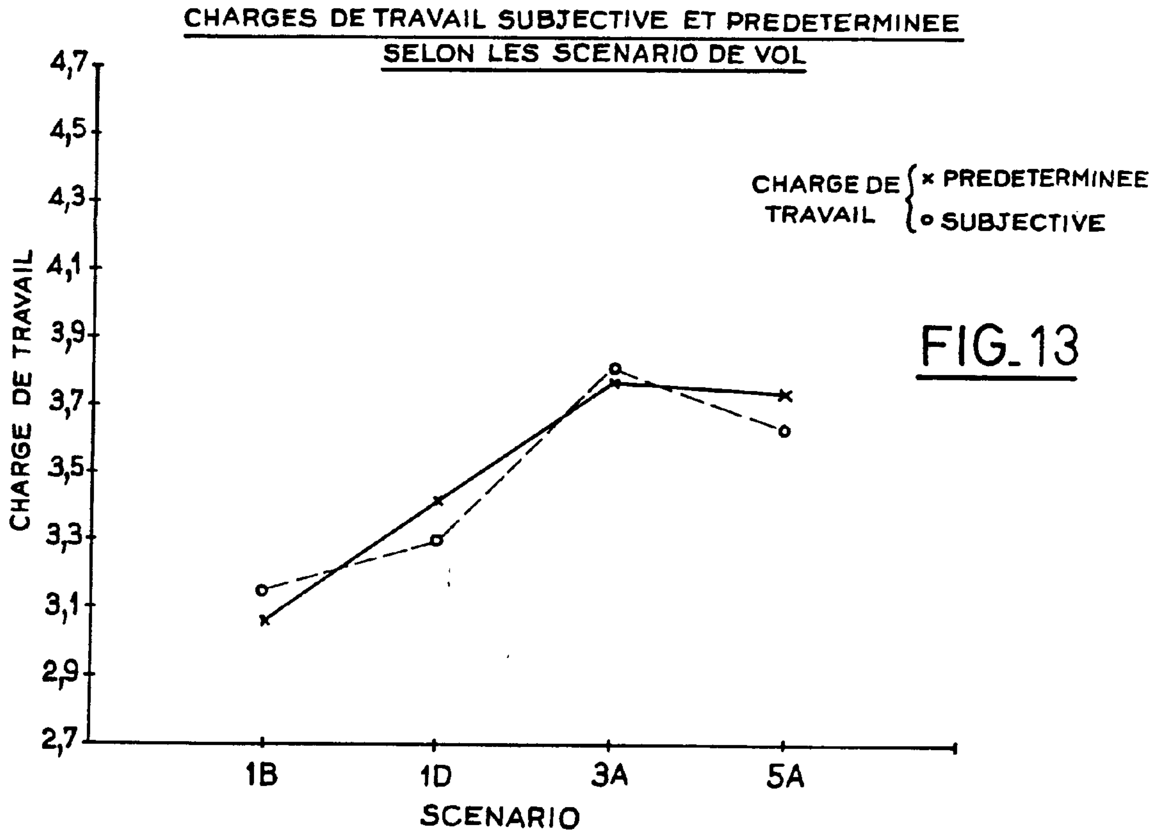
CHARGES DE TRAVAIL SUBJECTIVE ET PREDETERMINEE
SELON LES SCENARIO DE VOL
CHARGE DE TRAVAIL
4,7
4,5
4,3
4,1
3,9
3,7
3,5
3,3
3,1
2,9
2,7
CHARGE DE TRAVAIL
× PREDETERMINEE
o SUBJECTIVE
1B
1D
3A
5A
SCENARIO

FIG_13

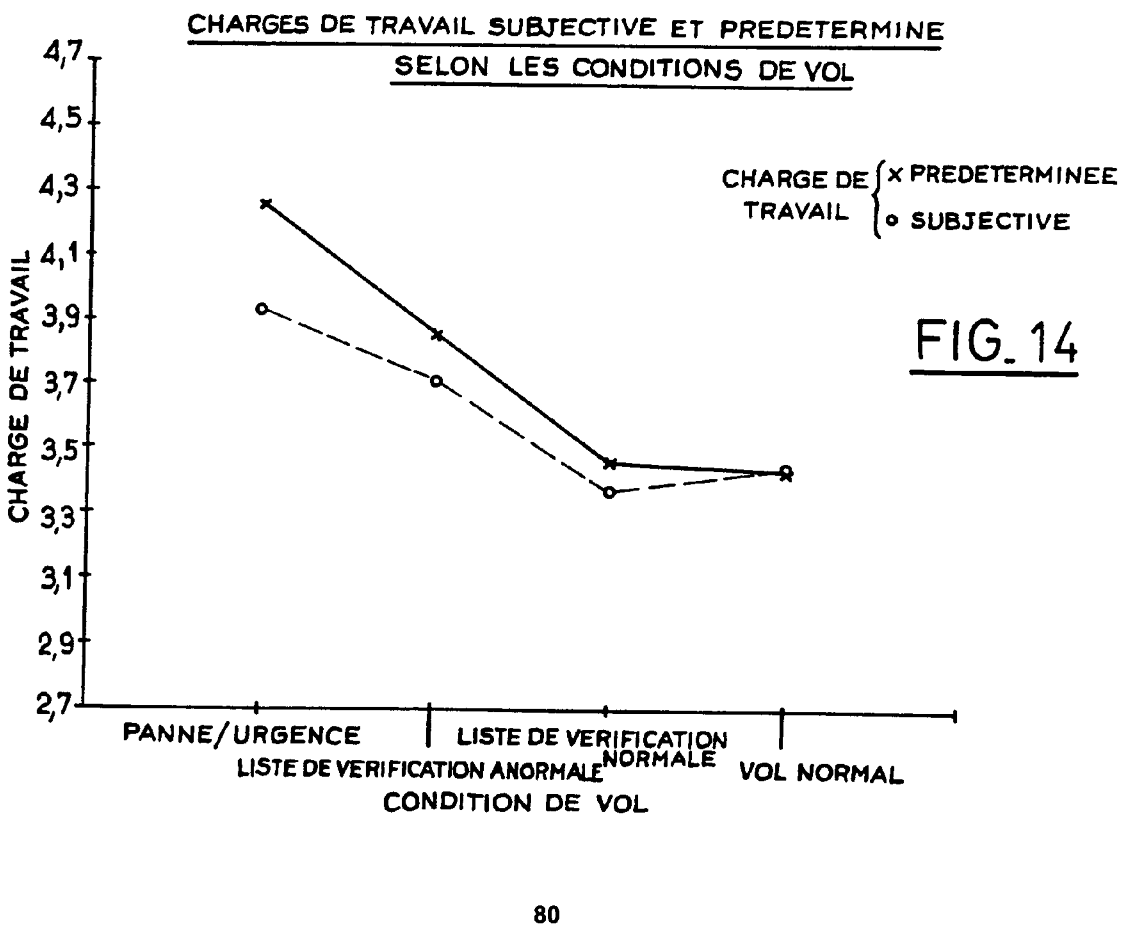
CHARGES DE TRAVAIL SUBJECTIVE ET PREDETERMINE
SELON LES CONDITIONS DE VOL
CHARGE DE TRAVAIL
4,7
4,5
4,3
4,1
3,9
3,7
3,5
3,3
3,1
2,9
2,7
CHARGE DE TRAVAIL
x PREDETERMINEE
o SUBJECTIVE
PANNE/URGENCE
LISTE DE VERIFICATION ANORMALE
LISTE DE VERIFICATION NORMALE
VOL NORMAL
CONDITION DE VOL

FIG_14

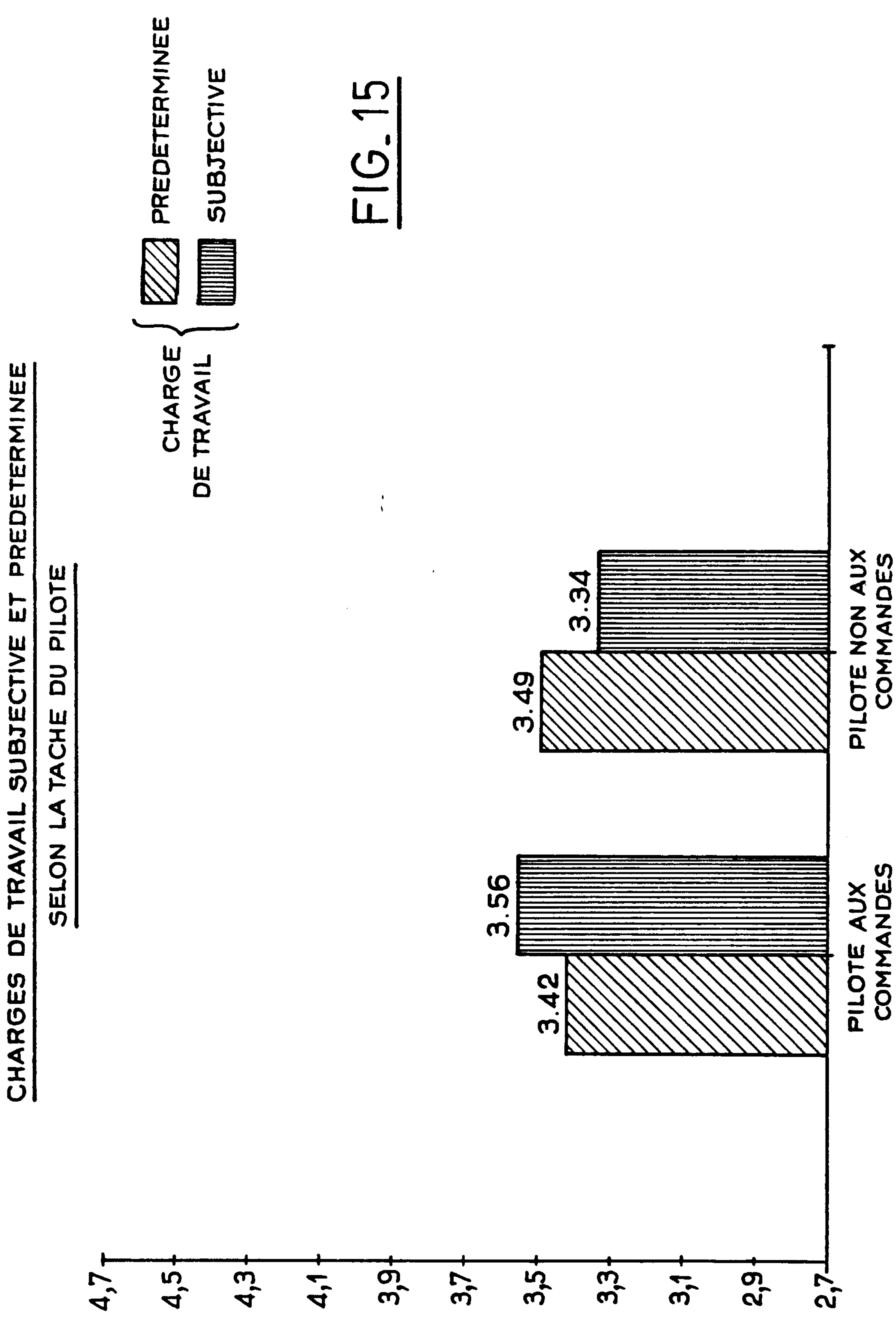
CHARGES DE TRAVAIL SUBJECTIVE ET PREDETERMINEE
SELON LA TACHE DU PILOTE
CHARGE DE TRAVAIL
PREDETERMINEE
SUBJECTIVE
3.42
3.56
3.49
3.34
PILOTE AUX COMMANDES
PILOTE NON AUX COMMANDES
4,7
4,5
4,3
4,1
3,9
3,7
3,5
3,3
3,1
2,9
2,7

FIG. 15